# EUROPEAN PATENT APPLICATION

(11) **EP 4 617 868 A1**
(43) Date of publication of application: **17.09.2025**
(21) Application number: 23910677.6
(22) Date of filing: 27.12.2023
(51) Int. Cl.: G06F 9/451

(54) **CROSS-DEVICE SCREEN SPLITTING METHOD AND RELATED APPARATUS**

(30) Priority: 28.12.2022 CN 202211695536
(71) Applicant: Huawei Technologies Co., Ltd., Shenzhen, Guangdong 518129 (CN)
(72) Inventor: NI, Yintang, Shenzhen, Guangdong 518129 (CN)
(74) Representative: Pfenning, Meinig & Partner mbB
(86) International application number: PCT/CN2023/142186
(87) International publication number: WO 2024/140757

(57) **Abstract**

This application discloses a cross-device split-screen method and a related apparatus. In the method, a first terminal displays a task management interface, where the interface includes a device identifier of the first terminal and a device identifier of at least one collaborative device, and a first area of the interface is used to display a task identifier of a preset task of a currently selected terminal; after receiving a first input operation performed on a task identifier of a first task, adds the first task as a task in a split-screen window; after receiving a second input operation performed on a task identifier of a second task, adds the second task as a task in the split-screen window, where the first task and the second task are tasks of any one of the first terminal and the at least one collaborative device; and after receiving a third input operation, instructs a third terminal to display the split-screen window, where a first split-screen area of the split-screen window displays the first task, and a second split-screen area thereof displays the second task. In this way, cross-device split screen is provided for tasks of other devices, and modes of multi-device display screen collaboration are enriched.

## Description

This application claims priority to Chinese Patent Application No. 202211695536.0, filed with the China National Intellectual Property Administration on December 28, 2022 and entitled "CROSS-DEVICE SPLIT-SCREEN METHOD AND RELATED APPARATUS", which is incorporated herein by reference in its entirety.

### TECHNICAL FIELD

This application relates to the field of electronic technologies, and in particular, to a cross-device split-screen method and a related apparatus.

### BACKGROUND

With continuous development of information technologies, there are more types of terminals, and interaction between terminals of a user is also increasing. Various terminals generally have display screens of different sizes, and the display screens of different sizes present different visual effects. Therefore, multi-screen collaboration between terminals is widely applied.

In a current multi-screen collaboration technology, display content of one terminal may be projected to a screen of another terminal. However, currently, only limited modes of multi-device display screen collaboration can be implemented, and user experience needs to be improved.

### SUMMARY

This application provides a cross-device split-screen method and a related apparatus, to complete cross-device split screen, implement one-time migration of a plurality of tasks from at least one device, enrich modes of multi-device display screen collaboration, and improve user experience.

According to a first aspect, this application provides a cross-device split-screen method, applied to a first terminal. The first terminal has at least one collaborative device. The at least one collaborative device includes a third terminal. The method includes: The first terminal displays a task management interface, where the task management interface includes a device identifier of the first terminal and a device identifier corresponding to each of the at least one collaborative device, a display state of the device identifier includes a selected state and an unselected state, the selected state indicates that a terminal corresponding to the device identifier is selected, and a first area of the task management interface is used to display a task identifier corresponding to each of at least one preset task of a currently selected terminal; the first terminal receives a first input operation performed on a task identifier of a first task in the first area, and adds the first task as a task in a split-screen window in response to the first input operation; the first terminal receives a second input operation performed on a task identifier of a second task in the first area, and adds the second task as a task in the split-screen window in response to the second input operation, where the first task and the second task are tasks of any one of the first terminal and the at least one collaborative device; and the first terminal receives a third input operation, where the third input operation is used to determine that a target device for cross-device split screen is the third terminal, and the first terminal sends a first instruction to the third terminal in response to the third input operation, where the first instruction instructs the third terminal to display the split-screen window, a first split-screen area of the split-screen window is used to display the first task, and a second split-screen area of the split-screen window is used to display the second task.

By implementing this embodiment of this application, the first terminal can add at least two tasks from the first terminal and/or any collaborative device to the split-screen window, and transfer the split-screen window to any collaborative device (for example, the third terminal) for displaying, so that cross-device split screen is implemented on the third terminal for tasks of other devices and that one-time migration of a plurality of tasks from at least one device is implemented. In this way, modes of multi-device display screen collaboration are enriched, screen usage efficiency of a user is improved, and user experience is improved.

In an implementation, the task management interface further includes a first control; the first input operation includes a slide operation of touching and holding the task identifier of the first task and then dragging the task identifier of the first task to the first control; and the second input operation includes a slide operation of touching and holding the task identifier of the second task and then dragging the task identifier of the second task to the first control. In the implementation of this embodiment of this application, the tasks can be added to the cross-device split-screen window by dragging the task identifiers of the tasks to the first control. In this way, the operation is simple, clear, and highly engaging, and user experience is improved.

In an implementation, the third input operation includes a slide operation of touching and holding the first control and then dragging the first control to a device identifier of the third terminal. In the implementation of this embodiment of this application, dragging the first control to a device identifier of the target device can trigger the target device to display the cross-device split-screen window. In this way, the operation is simple, clear, and highly engaging, and user experience is improved.

In an implementation, at least two display screens are configured for the third terminal; and the method further includes: when detecting that the first control is dragged to the device identifier of the third terminal, displaying display screen identifiers corresponding to the two display screens, where when the third input operation includes dragging the first control to a display screen identifier of a first display screen, the first instruction instructs the third terminal to display the split-screen window only by using the first display screen, and the two display screens include the first display screen. In the implementation of this embodiment of this application, when the target device has a plurality of display screens, a specific display screen can be selected to display the cross-device split-screen window. In this way, a requirement of the user for cross-device split screen by using the specific display screen can be met, and user experience is improved.

In an implementation, the at least one collaborative device further includes a second terminal, the first task is a task of the second terminal, and before the first terminal receives the second input operation performed on the task identifier of the first task in the first area, the method further includes: The first terminal receives a fourth input operation performed on a device identifier of the second terminal; and the first terminal switches a display state of the device identifier of the second terminal from an unselected state to a selected state in response to the fourth input operation, where the first area is used to display a task identifier corresponding to at least one preset task of the second terminal, and the at least one preset task of the second terminal includes the first task. In the implementation of this embodiment of this application, preset tasks of the first terminal and the collaborative device can be viewed by using the task management interface. In this way, the user can conveniently select a preset task of any device for cross-device split screen, and user experience is improved.

In an implementation, the preset task includes a part or all of the following: a recently run task, a preset application window in an installed application, and a task in Favorites, where the recently run task includes a background run task and/or a foreground run task; and the task in Favorites includes a part or all of the following: a task manually added by the user to Favorites, M tasks with longest historical running duration within preset duration, and M tasks with highest historical running frequency within the preset duration, where M is a positive integer. In the implementation of this embodiment of this application, cross-device split screen can be performed for the recently run task, the preset application window in the installed application, and the task in Favorites. In this way, diversified split screen requirements of the user can be met, and user experience is improved.

In an implementation, the preset application window includes a home page of the application, an application window with highest historical running frequency in the application within the preset duration, or an application window with longest historical running duration in the application within the preset duration. In the implementation of this embodiment of this application, cross-device split screen can be performed for the preset application window (for example, the home page) in the application by using an application identifier (for example, an application icon) of the application. The preset application window may be set by the first terminal or the user. In this way, diversified split screen requirements of the user can be met, and user experience is improved.

In an implementation, the preset task includes the recently run task and the preset application window in the installed application, and the first task is the preset application window in the application; and before the first terminal receives the first input operation performed on the task identifier of the first task in the first area, the first terminal displays, in the first area of the task management interface, a task identifier corresponding to a recently run task of a selected device, and the method further includes: The first terminal receives a fifth input operation, and displays, in the first area in response to the fifth input operation, an application identifier of at least one application installed on the selected device, where the application identifier is a task identifier of a preset application window in the application, and the at least one application includes an application to which the first task belongs. In the implementation of this embodiment of this application, the recently run task of the selected device may be first displayed, and the user may switch from the recently run task to the application identifier of the application of the selected device by performing a specific operation. In this way, the preset task is clearly classified and viewed by category, and user experience is improved.

In an implementation, when displaying, in the first area of the task management interface, the task identifier corresponding to the recently run task of the selected device, the first terminal further displays a second control on the task management interface, where the fifth input operation is performed on the second control.

In an implementation, the preset task further includes the task in Favorites; when the at least one application includes a first application, and a task in Favorites of the currently selected device includes a task of the first application, the first terminal displays a Favorites marker corresponding to an application identifier of the first application, where the Favorites marker indicates that the first application has at least one task in Favorites; and the method further includes: The first terminal receives a sixth input operation performed on the application identifier of the first application; and the first terminal displays, in the first area in response to the sixth input operation, a task identifier corresponding to the task in Favorites of the first application installed on the selected device. In the implementation of this embodiment of this application, the task in Favorites is classified by application, and the application having the task in Favorites is indicated by the Favorites marker. In this way, the task in Favorites is clearly classified and viewed by application, and user experience is improved.

In an implementation, the preset task includes the recently run task, a task identifier corresponding to the recently run task is a task card, and the task card includes an application identifier of an application to which the recently run task belongs and an interface snapshot taken when the recently run task is switched to the background.

In an implementation, the first task and the second task are tasks of the first terminal. In this way, a scenario requirement of the user for cross-device split screen on the third terminal for the two tasks of the first terminal can be met.

In an implementation, the at least one collaborative device further includes a second terminal, the first task is a task of the first terminal, and the second task is a task of the second terminal. In this way, a scenario requirement of the user for cross-device split screen on the third terminal for the task of the first terminal and the task of the second terminal can be met.

In an implementation, before displaying the task identifier corresponding to the at least one preset task of the second terminal in the first area, the method further includes: The first terminal obtains multitask data of the second terminal, where the multitask data includes task information of the at least one preset task of the second terminal.

According to a second aspect, this application provides a communication apparatus, including one or more processors and one or more memories. The one or more memories are coupled to the one or more processors. The one or more memories are configured to store computer program code. The computer program code includes computer instructions. When the one or more processors execute the computer instructions, the communication apparatus is enabled to perform the cross-device split-screen method in any possible implementation of the first aspect.

According to a third aspect, an embodiment of this application provides a computer storage medium, including computer instructions. When the computer instructions are run on an electronic device, the communication apparatus is enabled to perform the cross-device split-screen method in any possible implementation of the first aspect.

According to a fourth aspect, an embodiment of this application provides a computer program product. When the computer program product is run on a computer, the computer is enabled to perform the cross-device split-screen method in any possible implementation of the first aspect.

### BRIEF DESCRIPTION OF DRAWINGS

FIG. 1A to FIG. 1C are a diagram of a cross-device split-screen scenario according to an embodiment of this application;
FIG. 2 is a diagram of a cross-device split-screen system according to an embodiment of this application;
FIG. 3 is a diagram of a structure of a terminal according to an embodiment of this application;
FIG. 4A to FIG. 4D are interface diagrams of a task management interface according to an embodiment of this application;
FIG. 5A to FIG. 5D are diagrams of an interface for adding tasks to a cross-device split-screen window according to an embodiment of this application;
FIG. 5E to FIG. 5G are diagrams of an interface for triggering a target device to display a cross-device split-screen window according to an embodiment of this application;
FIG. 6A to FIG. 6F are a plurality of display forms of application windows in a split-screen window according to an embodiment of this application;

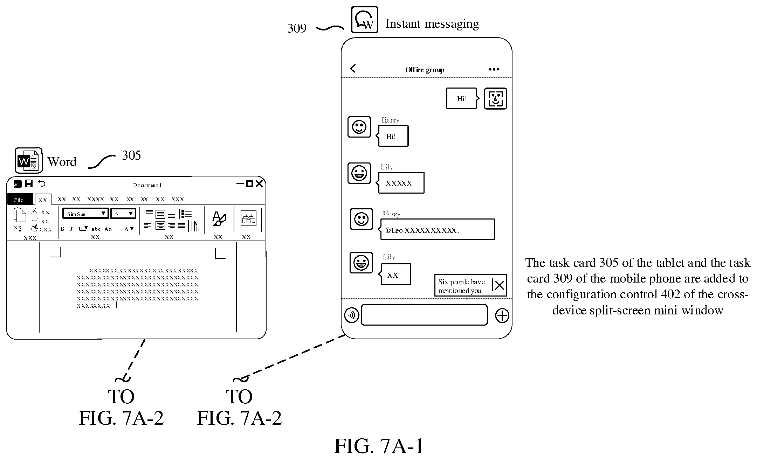

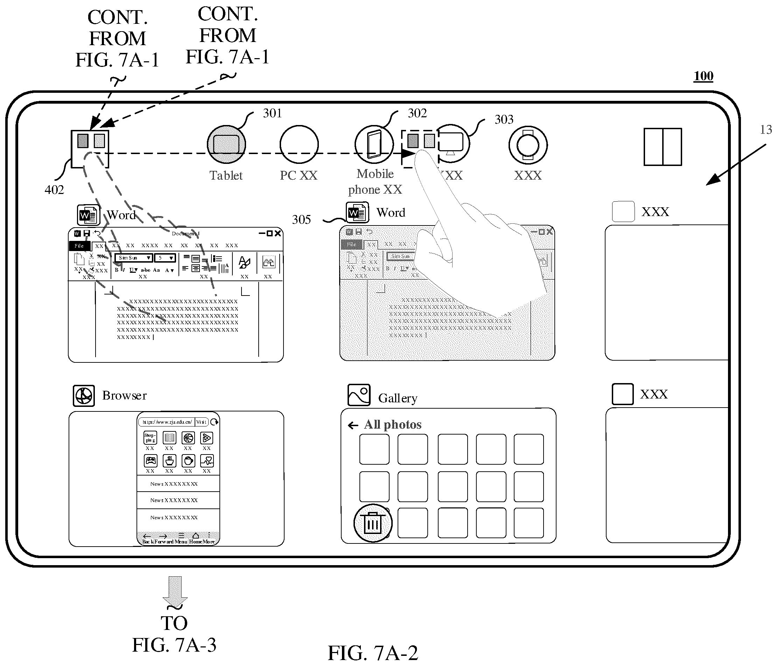

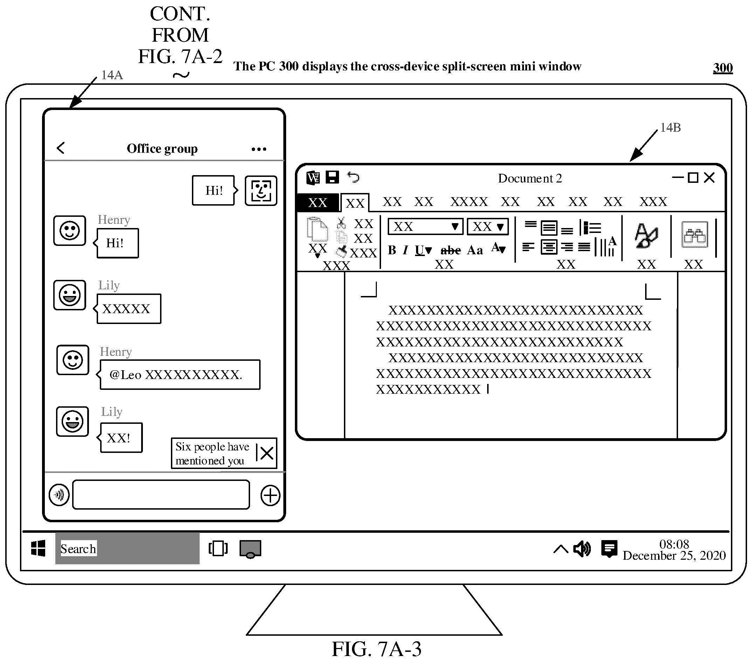

FIG. 7A-1 to FIG. 7A-3 are an interface diagram of a cross-device split-screen mini window according to an embodiment of this application;

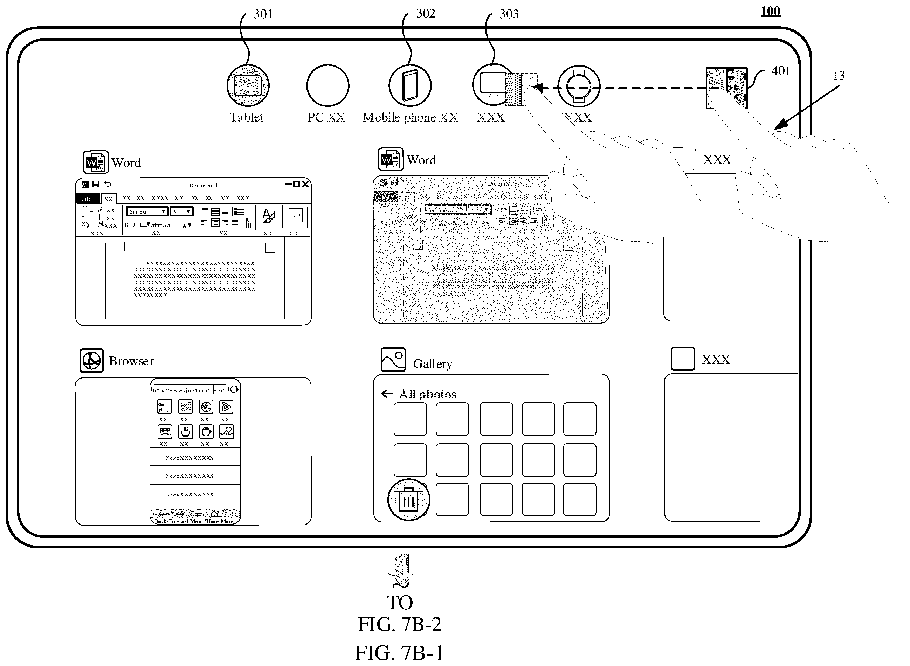

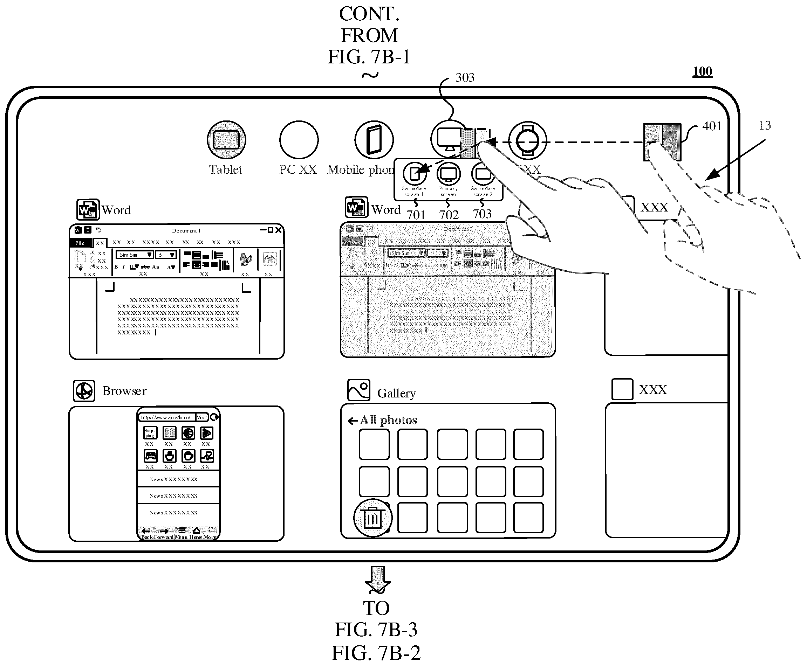

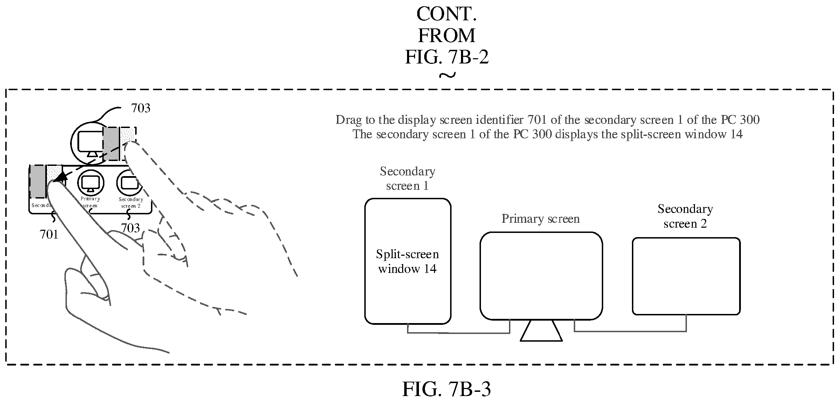

FIG. 7B-1 to FIG. 7B-3 are a diagram of an interface for configuring a plurality of display screens for a target device according to an embodiment of this application;

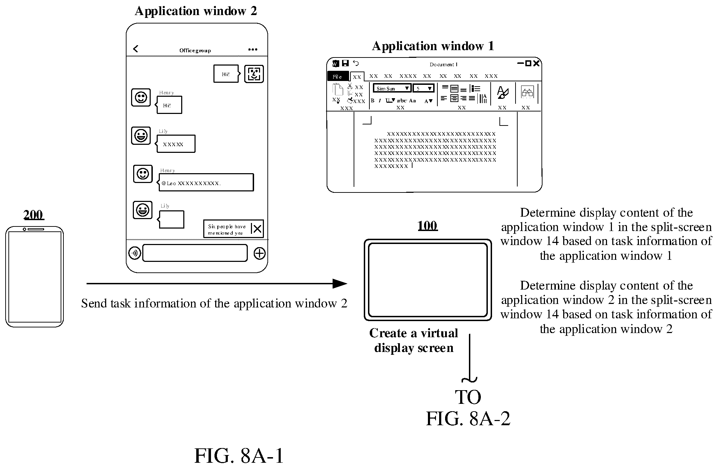

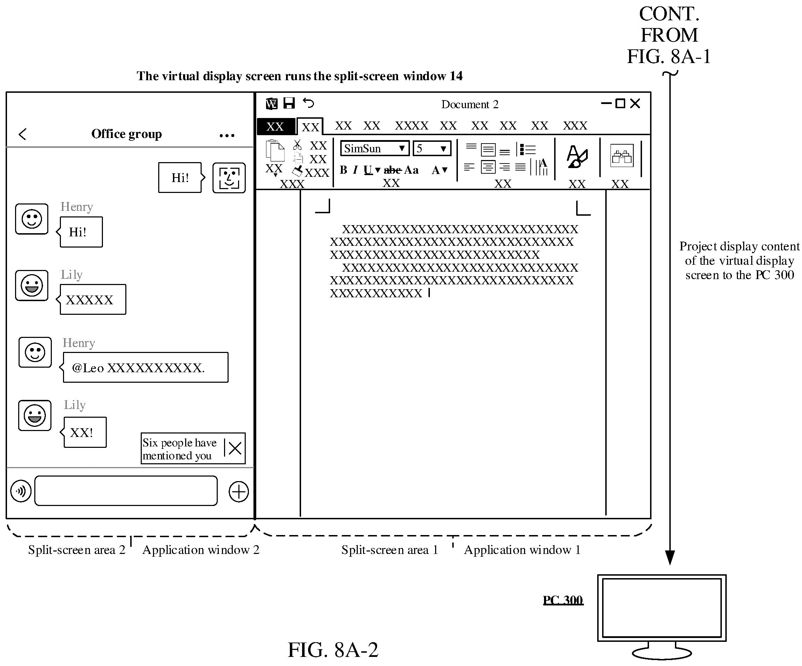

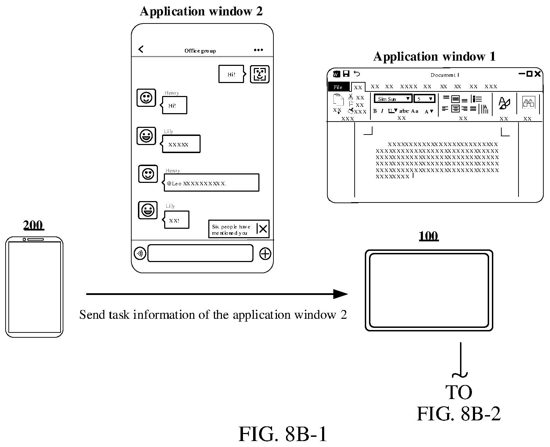

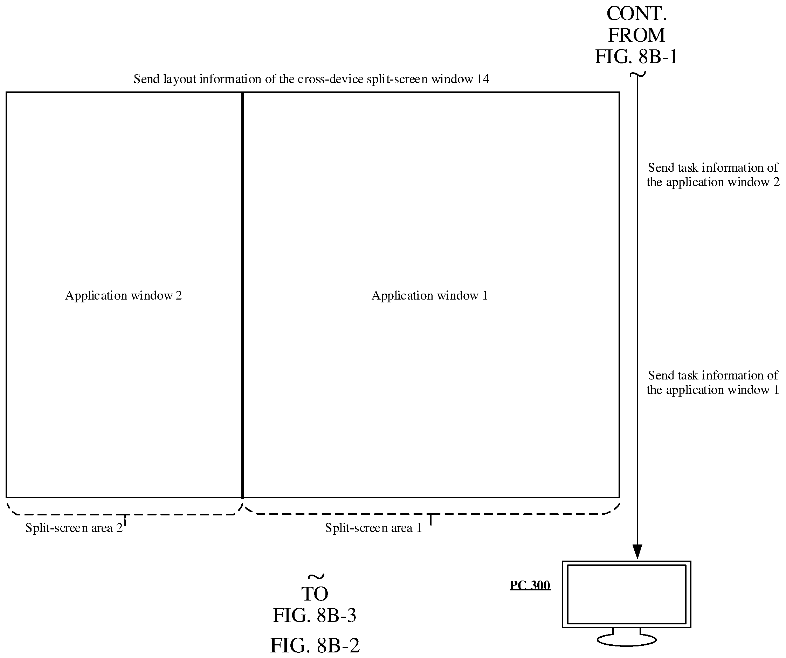

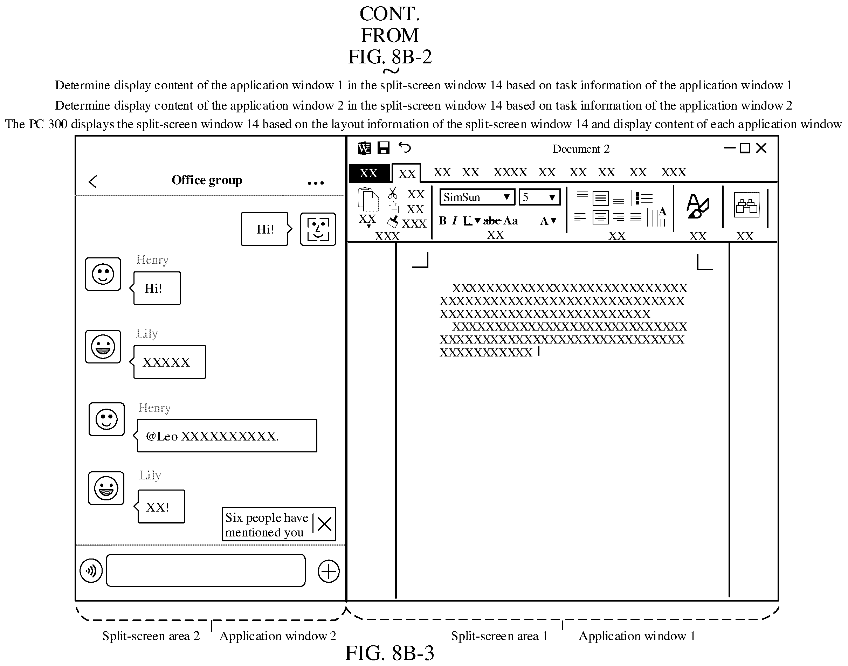

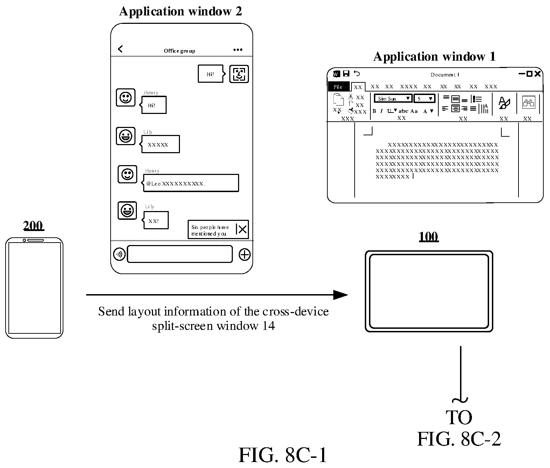

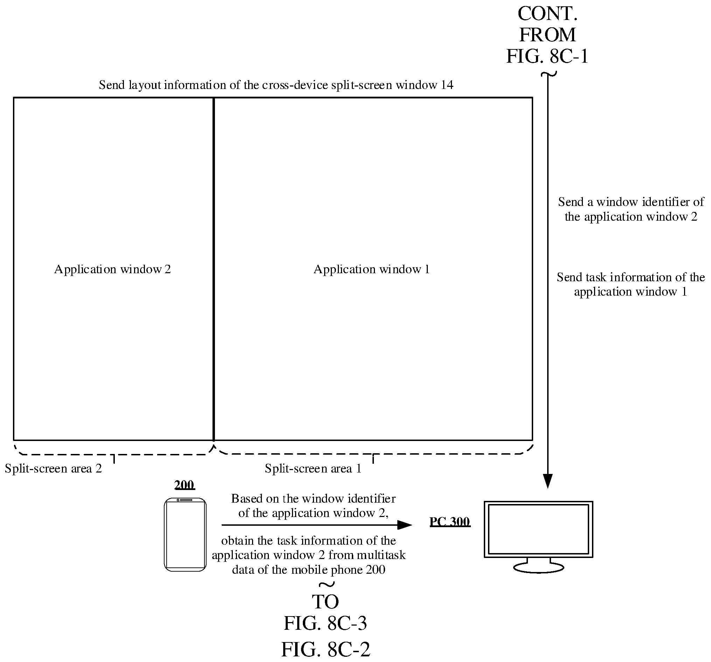

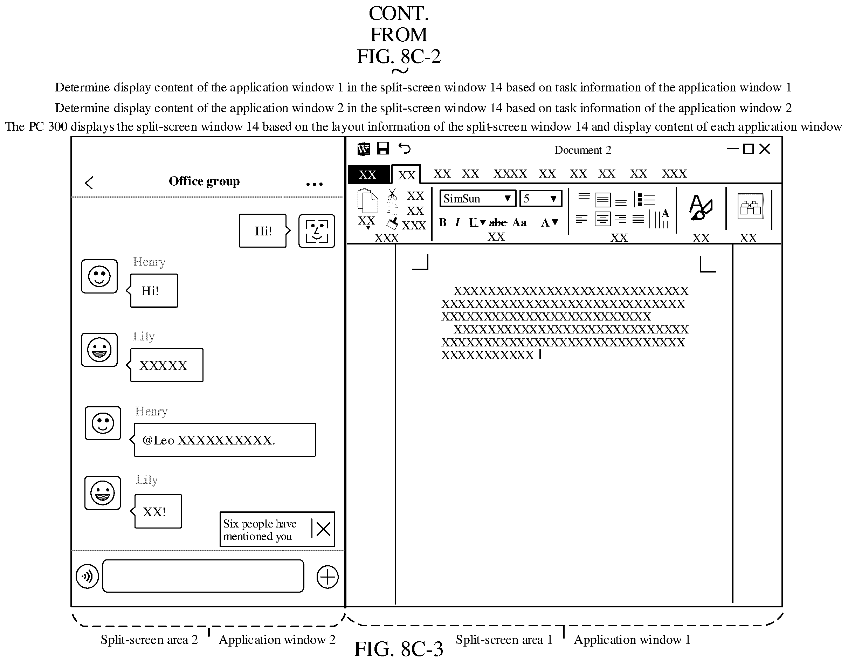

FIG. 8A-1 to FIG. 8C-3 are diagrams of specific implementations of cross-device split screen according to an embodiment of this application;

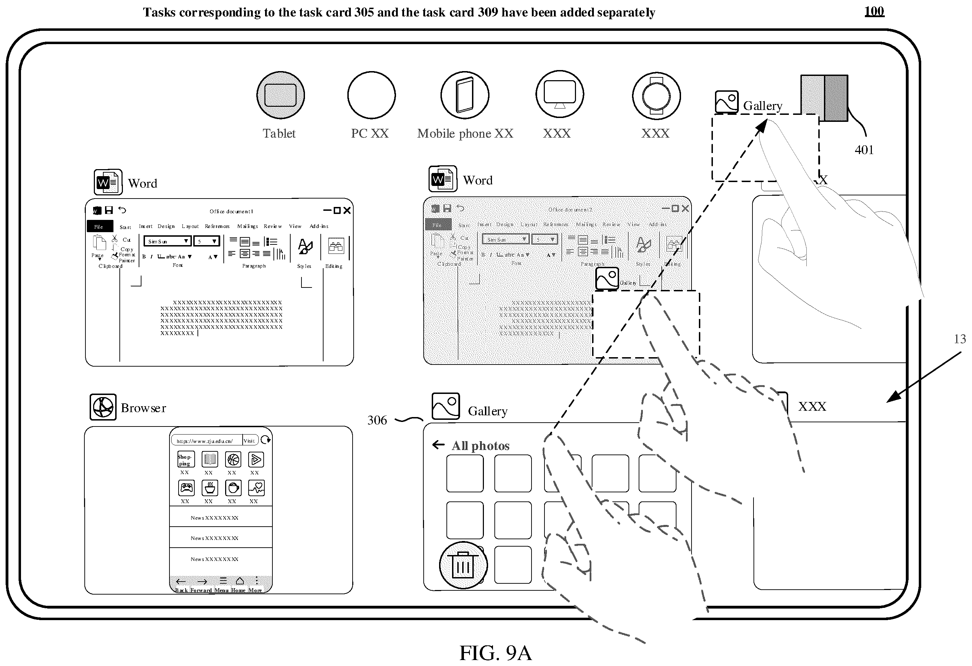

FIG. 9A to FIG. 9C are interface diagrams of cross-device split screen for three tasks according to an embodiment of this application;
FIG. 10A-1 and FIG. 10A-2 are a diagram of an interface for previewing cross-device split screen according to an embodiment of this application;

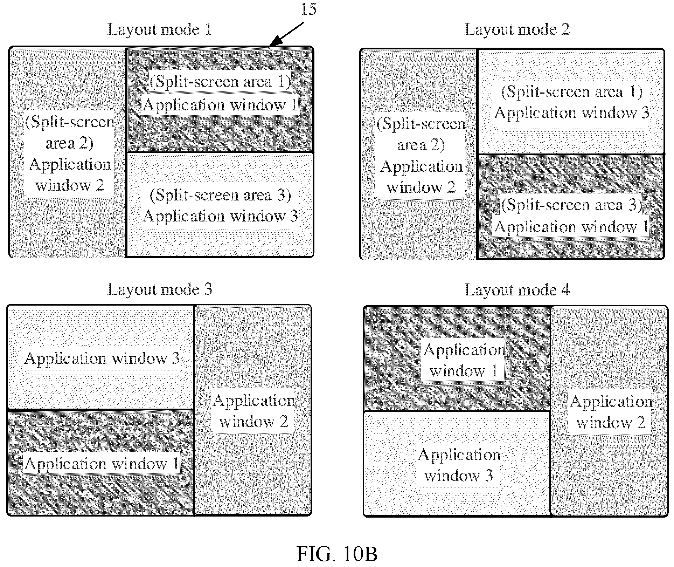

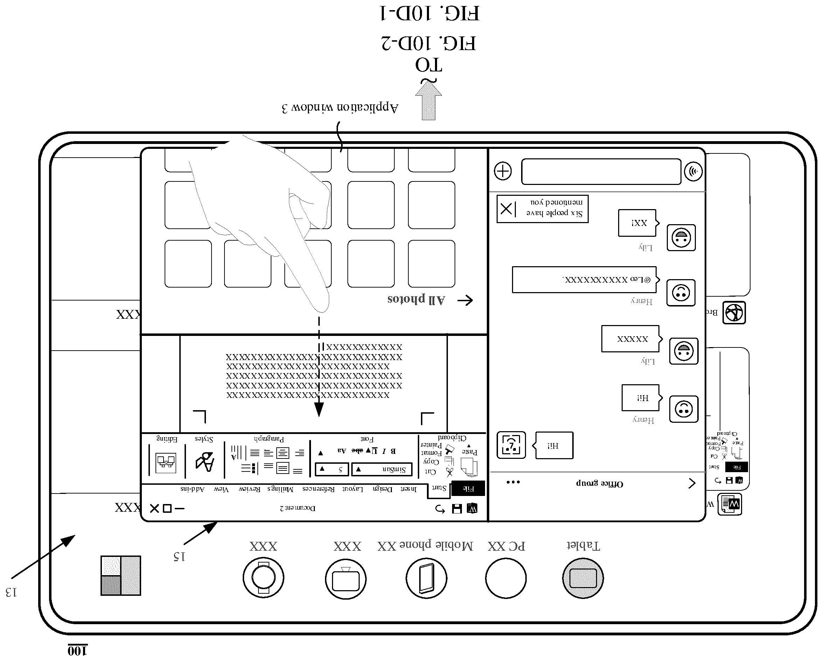

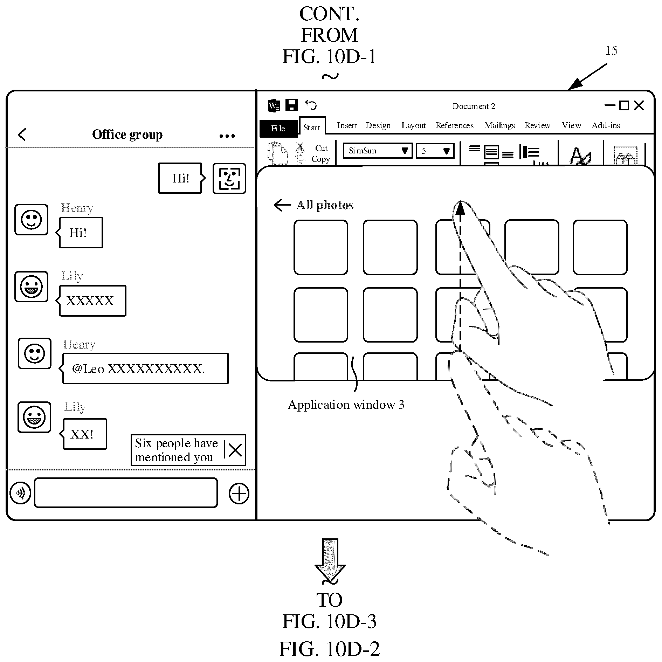

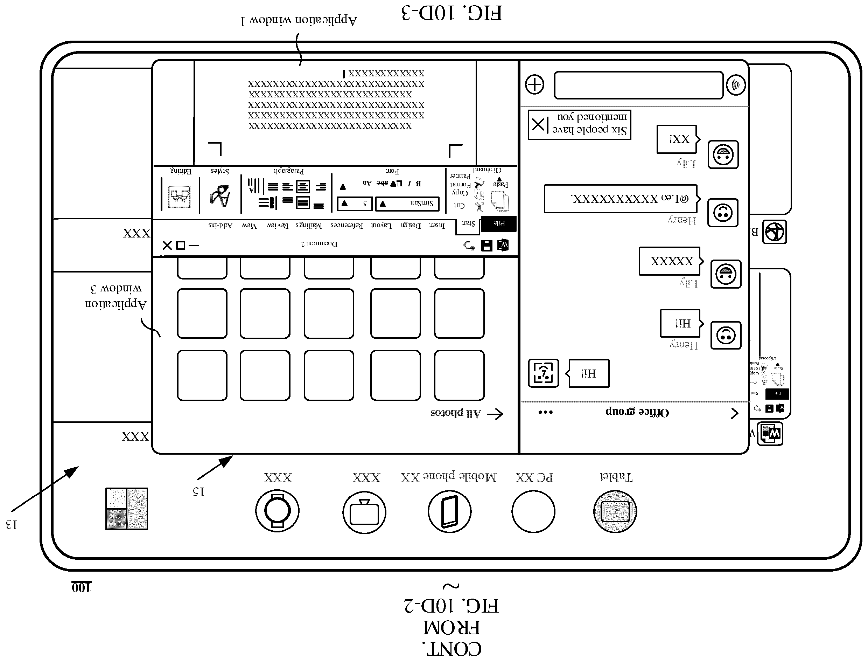

FIG. 10B to FIG. 10G are diagrams for adjusting display positions and display sizes of tasks in a split-screen window according to an embodiment of this application;
FIG. 11A-1 and FIG. 11A-2 are a diagram of an interface on which a target device controls tasks in a split-screen window according to an embodiment of this application;

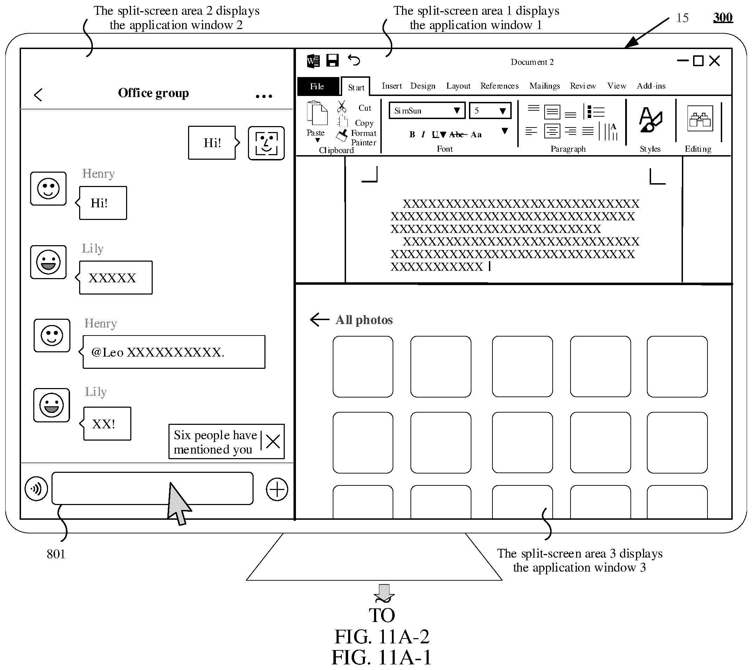

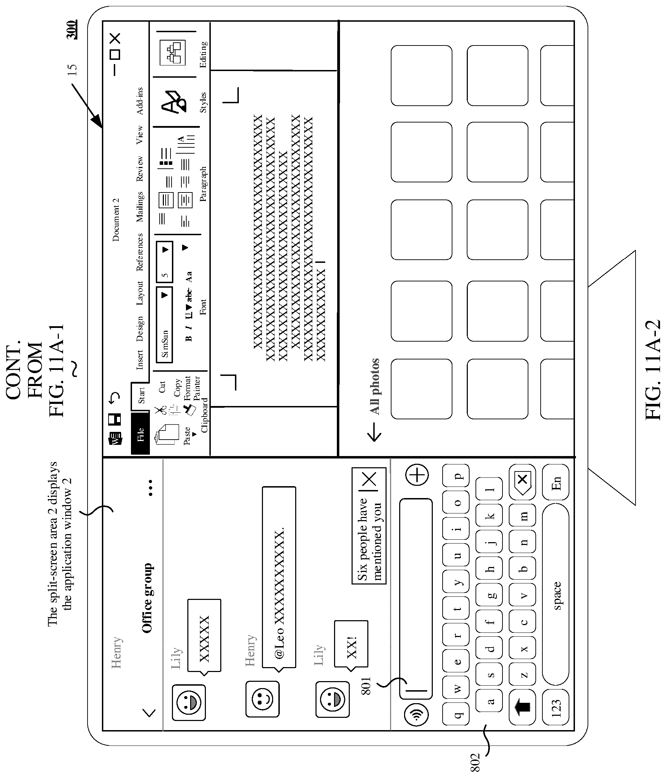

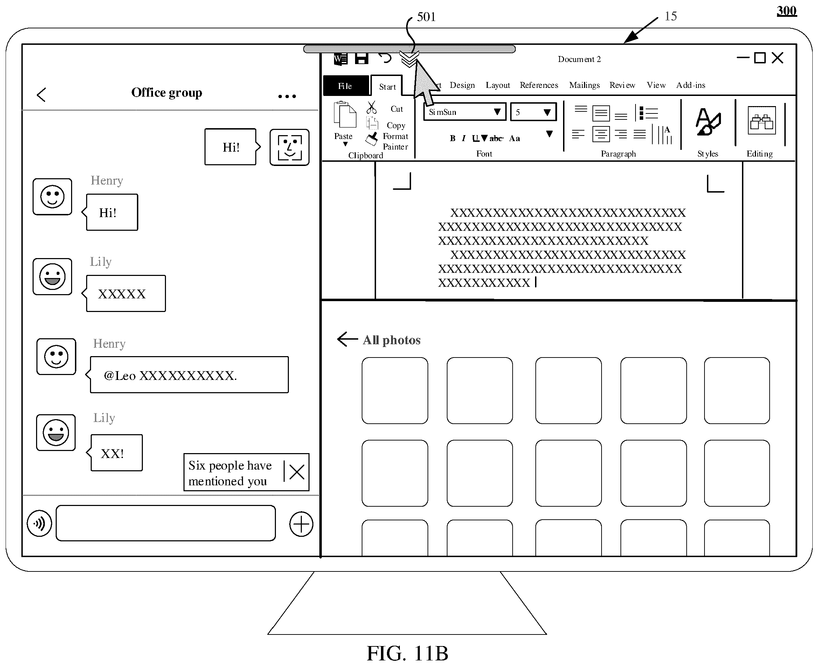

FIG. 11B to FIG. 11G are diagrams of an interface on which a target device manages tasks in a split-screen window according to an embodiment of this application;

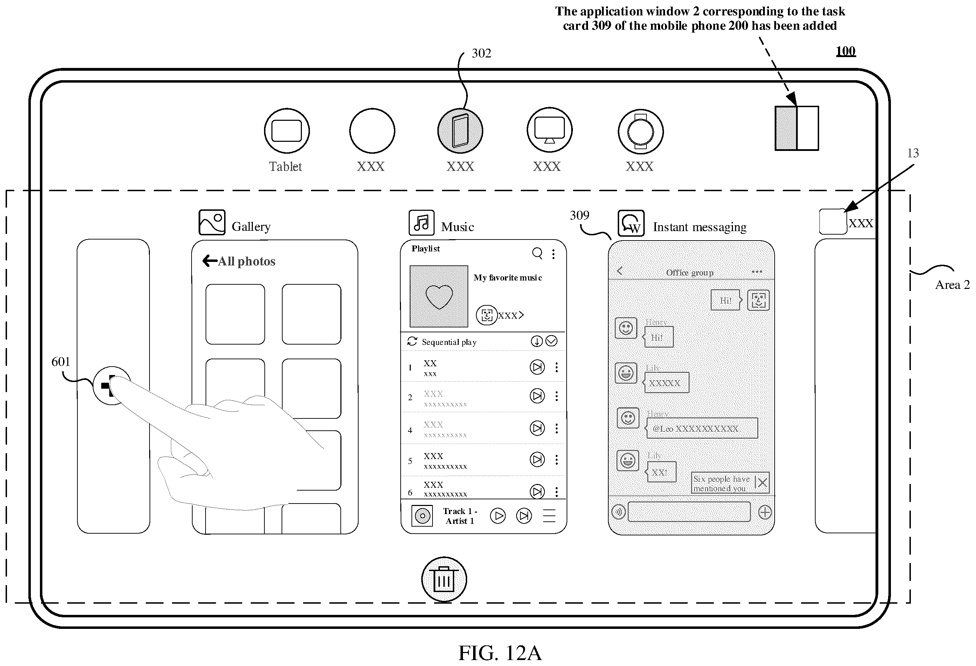

FIG. 12A to FIG. 12D are diagrams of an interface for cross-device split screen for a home page of an application according to an embodiment of this application;

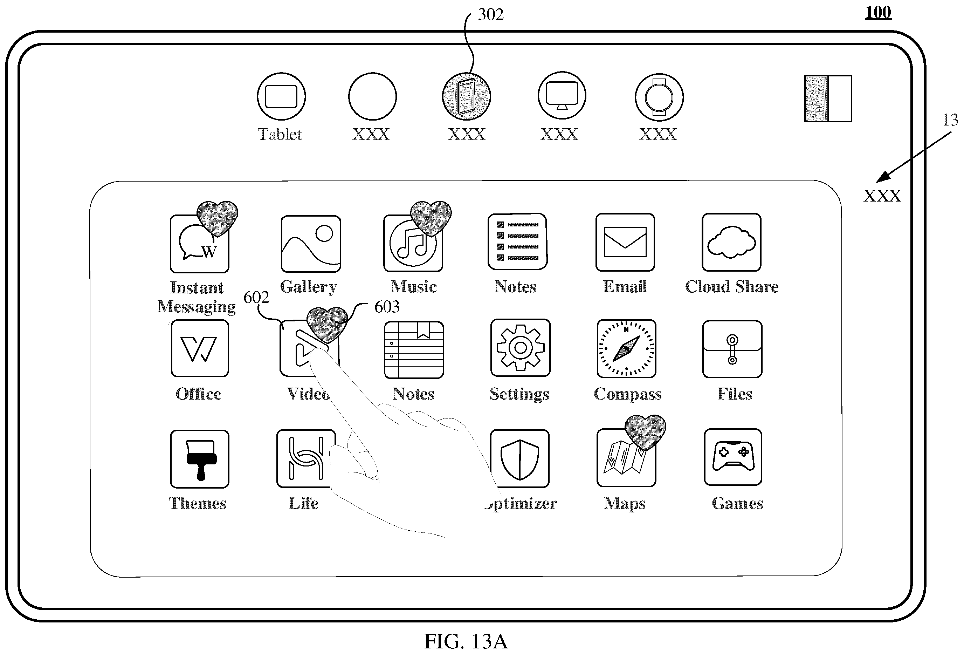

FIG. 13A to FIG. 13C are diagrams of an interface for cross-device split screen for tasks in Favorites according to an embodiment of this application; and

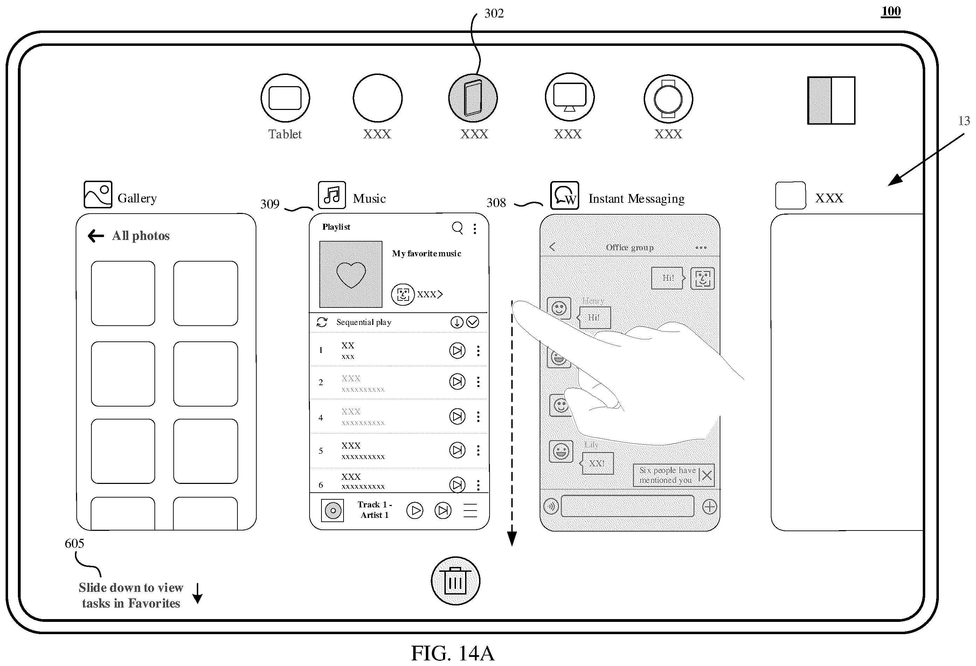

FIG. 14A to FIG. 14C are diagrams of an interface for viewing applications and tasks in Favorites according to an embodiment of this application.

### DESCRIPTION OF EMBODIMENTS

The following clearly and completely describes technical solutions in embodiments of this application with reference to accompanying drawings. In the description of embodiments of this application, unless otherwise specified, "/" indicates "or". For example, the term "A/B" may indicate A or B. The term "and/or" in this specification merely describes an association relationship between associated objects, and indicates that three relationships may exist. For example, "A and/or B" may indicate the following three cases: Only A exists, both A and B exist, and only B exists. In addition, in the description of embodiments of this application, the term "a plurality of" indicates two or more.

Hereinafter, the terms "first" and "second" are intended only for description, and shall not be understood as an indication or implication of relative importance or an implicit indication of a quantity of indicated technical features. Therefore, a feature defined by "first" or "second" may explicitly or implicitly include one or more features. In the description of embodiments of this application, unless otherwise specified, the term "a plurality of" means two or more.

A multi-screen collaboration technology may be used to project display content of a terminal 1 to a screen of a terminal 2 for displaying. Currently, there are the following scenario requirements. A scenario requirement 1 is that a user intends to view a user interface 1 of the terminal 1 and a user interface 2 of the terminal 2 on a terminal 3. A scenario requirement 2 is that the user intends to view the user interface 1 and a user interface 3 of the terminal 1 on the terminal 3.

In a solution provided in embodiments of this application, for the foregoing scenario requirement 1, the user may open the user interface 1 of the terminal 1, and trigger the terminal 1 to project the user interface 1 to a screen of the terminal 3; and then the user opens the user interface 2 of the terminal 2, and triggers the terminal 2 to project the user interface 2 to the screen of the terminal 3. In this way, the user can view the user interface 1 of the terminal 1 and the user interface 2 of the terminal 2 on the terminal 3. However, the solution has the following problems: The user interface 2 may block the user interface 1. As a result, the user cannot view the user interface 1 and the user interface 2 at the same time. The user needs to perform projection operations on the terminal 1 and the terminal 2 separately, and the user operations are complex. The terminal 3 may not support receiving the projection of the terminal 1 and the projection of the terminal 2 at the same time.

In a solution provided in embodiments of this application, for the foregoing scenario requirement 2, the user may perform operations on the terminal 1 to simultaneously display the user interface 1 and the user interface 3, and then project display content of the terminal 1 to the terminal 1 by using mirroring projection. In this way, the user can view the user interface 1 and the user interface 3 of the terminal 1 on the terminal 3. However, the solution has the following problems: During the mirroring projection, content displayed on the terminal 1 is completely the same as that displayed on the terminal 3. When viewing the user interface 1 and the user interface 3 of the terminal 1 on the terminal 3, the user cannot normally use the terminal 1 to display other content. The terminal 1 may not support simultaneous displaying two user interfaces.

In a cross-device split-screen solution provided in embodiments of this application, a cross-device split-screen window may be configured for the terminal 1. When the terminal 1 adds N tasks to the split-screen window, the split-screen window may be divided into N split-screen areas, each used to display one of the N tasks, where N is a positive integer. For example, the terminal 1 adds the user interface of the terminal 1 or the user interface 2 of the collaboratively connected terminal 2 to the split-screen window. Then the terminal 1 may transfer the split-screen window to the collaboratively connected terminal 3 for displaying. When the user interface 1 of the terminal 1 and the user interface 2 of the terminal 2 are added to the split-screen window, the foregoing scenario requirement 1 of the user can be met. When the user interface 1 and the user interface 3 of the terminal 1 are added to the split-screen window, the foregoing scenario requirement 2 of the user can be met. In this solution, the terminal 1 is a control device for cross-device split screen, the terminal 3 is a target device for cross-device split screen, a source device of the user interface 1 is the terminal 1, and a source device of the user interface 2 is the terminal 2.

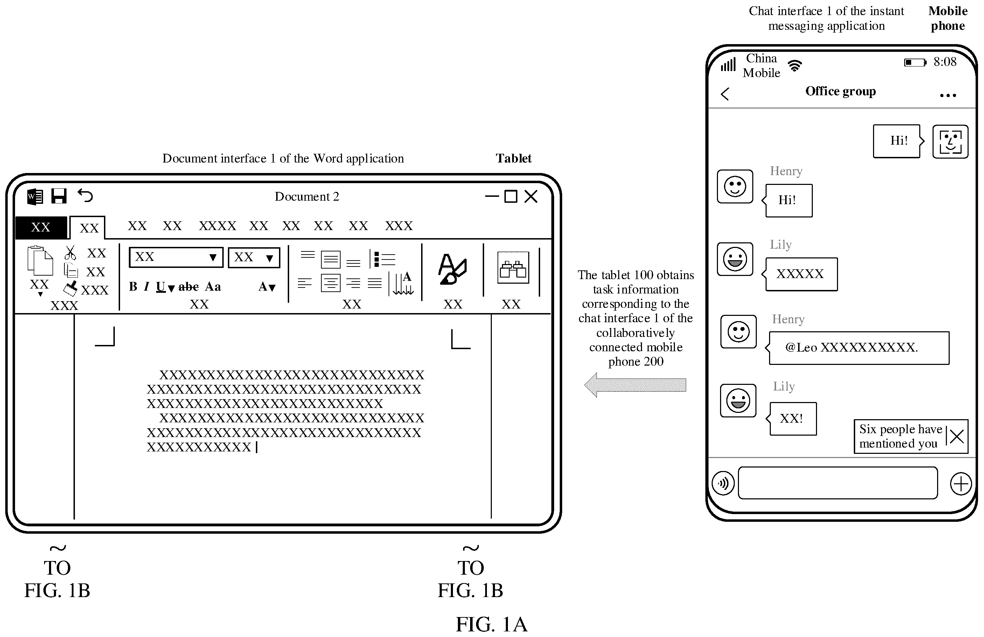

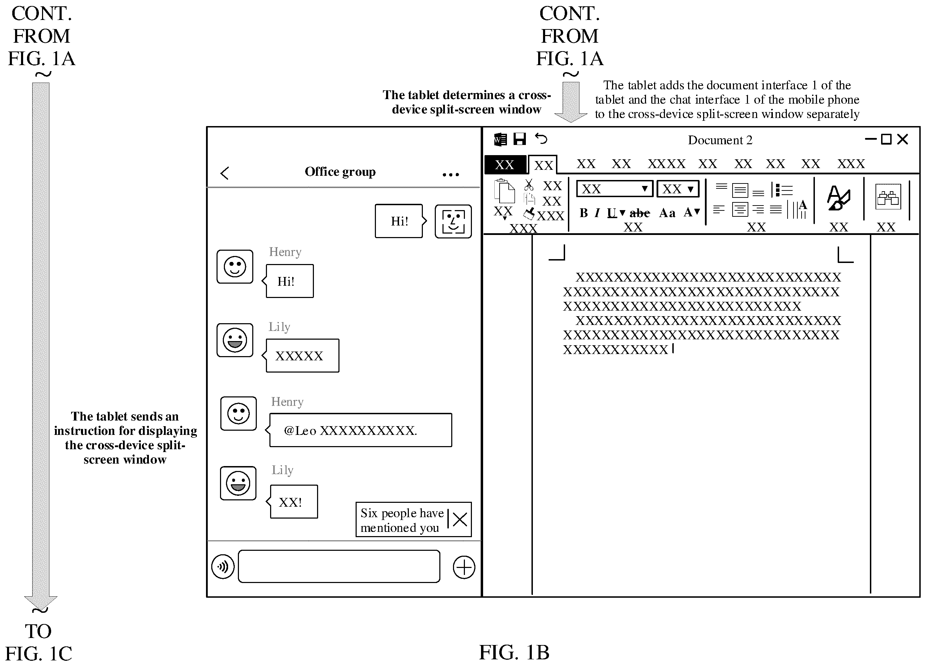

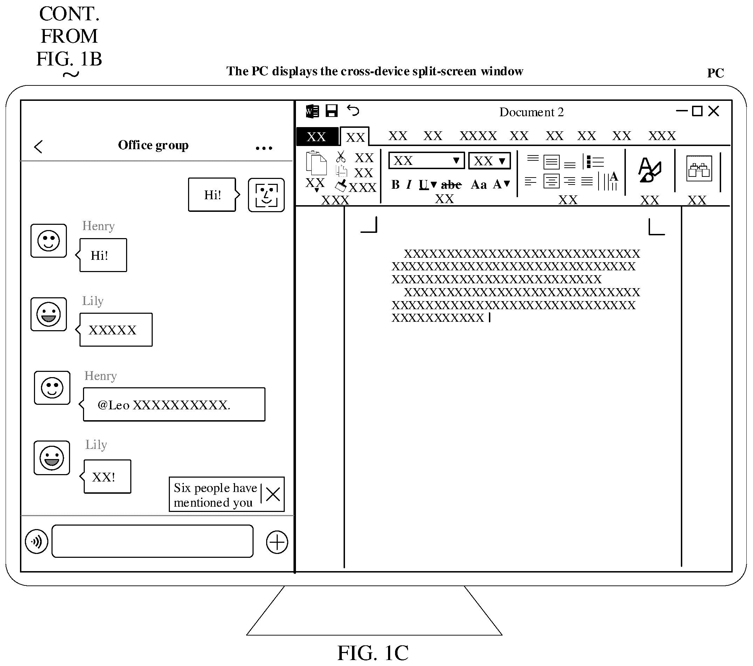

For example, referring to FIG. 1A to FIG. 1C, devices that have been collaboratively connected to a tablet include a mobile phone and a computer (personal computer, PC). A Word application of the tablet includes a document interface 1, and an instant messaging application of the mobile phone includes a chat interface 1. The tablet may obtain task information of the chat interface 1 of the mobile phone. Then the chat interface 1 of the mobile phone and the document interface 1 of the tablet are separately added to a cross-device split-screen window, and the split-screen window is transferred to the PC for displaying. In this way, cross-device split screen is implemented on the PC.

Split screen in the conventional technology is limited to split screen only for an application of a local device. In the foregoing solutions provided in embodiments of this application, by using the cross-device split-screen window, the terminal 3 can display at least one application from at least one other device in split screen, thereby implementing one-time migration and continuation of a plurality of tasks from the at least one device. In this way, modes of multi-device display screen collaboration are enriched, screen usage efficiency of the user is improved, and user experience is improved.

The following describes a cross-device split-screen system 10 related to a cross-device split-screen method provided in an embodiment of this application.

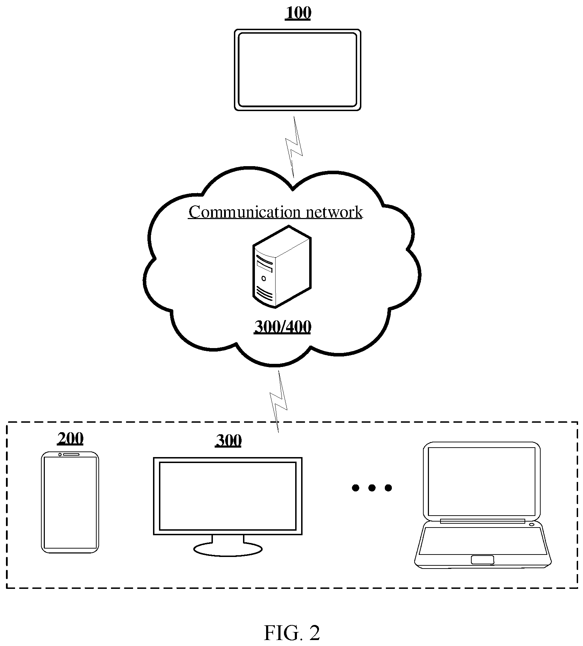

FIG. 2 is a diagram of a cross-device split-screen system 10 according to an embodiment of this application. As shown in FIG. 2, the cross-device split-screen system 10 includes a terminal 100 configured with a display apparatus, and at least one terminal (which may also be referred to as a collaborative device) currently collaboratively connected to the terminal 100 and configured with a display apparatus, for example, a terminal 200 and a terminal 300. In some embodiments, terminals in the cross-device split-screen system 10 are mutually collaborative devices.

The display apparatus may be a display screen of the terminal device, or may be an external display apparatus (for example, an external extended screen or an external projector). This is not specifically limited herein. For example, a terminal in the cross-device split-screen system 10 may be a mobile phone, a tablet, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (smart band), an in-vehicle device, a projector, a smart home device (a smart television, a smart screen, a large-screen device, or the like), and/or a smart city device. A specific type of the terminal is not particularly limited in embodiments of this application. The "terminal" in embodiments of this application may also be referred to as a "terminal device" or an "electronic device". In the cross-device split-screen system 10, types of any two terminals may be the same or may be different. Any two terminals may be equipped with a same operating system, or may be equipped with different operating systems, such as iOS, Android, Microsoft, and HarmonyOS.

In this embodiment of this application, the terminal 100 may obtain and view task identifiers (for example, task cards or application identifiers) corresponding to preset tasks of the terminal 100 and any current collaborative device (for example, the terminal 200) of the terminal 100. For example, the preset tasks include some or all of the following: a recently run task (a foreground run task and/or a background run task) of the terminal 200, a task manually added by a user to Favorites, a task automatically added by the terminal to Favorites, and a home page of an application installed on the terminal. The terminal 100 may separately add at least two tasks to a cross-device split-screen window by using the task identifiers corresponding to the preset tasks. The at least two tasks may include a task on the terminal 100, or may include a task on any collaborative device (for example, the terminal 200 or the terminal 300) of the terminal 100. Then the terminal 100 may transfer display content of the cross-device split-screen window to the terminal 300 for displaying. When N tasks are added to the cross-device split-screen window, the cross-device split-screen window displayed by the terminal 300 includes N split-screen areas, and the N split-screen areas are in a one-to-one correspondence with the N tasks. According to the foregoing cross-device split-screen solution, one-time migration and continuation of a plurality of tasks from at least one device are implemented.

In this embodiment of this application, establishing a collaborative connection to the terminal 100 means establishing a mutual trust relationship with the terminal 100. In some embodiments, the terminal 300 is used as an example. Establishment of a collaborative connection between the terminal 100 and the terminal 300 requires that some or all of the conditions (1) to (3) should be met. (1) The terminal 100 and the terminal 300 are connected to a same preset network (for example, a Wi-Fi local area network or a Bluetooth mesh network), and devices in the preset network are mutually trusted devices. (2) The terminal 100 and the terminal 300 log in to a same account (for example, a Huawei account), or log in to an account belonging to a same group (for example, belonging to a same family account), or log in to accounts with a preset binding relationship (for example, friends). (3) The terminal 100 and the terminal 300 have established a mutual trust relationship in another manner. For example, the terminal 300 has been connected to a hotspot shared by the terminal 100. A communication process and a related user interface through which the terminal 100 and the terminal 300 establish the collaborative connection are not specifically limited in embodiments of this application. In some embodiments, if the terminal 100 and the terminal 300 meet some or all conditions in (1) to (3), it means that the two devices have automatically established a collaborative connection. In some embodiments, after discovering the terminal 300 that meets the foregoing condition and establishing a communication connection to the terminal 300, the terminal 100 may send a collaborative connection request to the terminal 300. The terminal 300 may feed back a collaborative connection response to the terminal 100 based on the collaborative connection request, where the collaborative connection response is used to determine to establish a collaborative connection. The collaborative connection response may carry a collaboration parameter, and the collaboration parameter may indicate a display size of the terminal 300, whether cross-device split screen is supported, and the like. Only reception of the collaborative connection response by the terminal 100 means that the collaborative connection has been established between the two devices.

In some embodiments, the terminal 300 is used as an example. The terminal 100 may be directly connected to the terminal 300 by using a short-range wireless communication connection or a local wired connection. For example, the terminal 100 and the terminal 300 may have one or more of the following short-range communication modules: a wireless fidelity (wireless fidelity, Wi-Fi) communication module, an ultra-wideband (ultra wide band, UWB) communication module, an infrared communication module, a Bluetooth (Bluetooth) communication module, a near field communication (near field communication, NFC) communication module, and a ZigBee communication module. The terminal 100 is used as an example. The terminal 100 may detect and scan an electronic device near the terminal 100 by transmitting a signal by using a short-range communication module (for example, a Bluetooth communication module), so that the terminal 100 can discover a nearby electronic device (for example, the terminal 300) by using a short-range wireless communication protocol, establish a wireless communication connection to the nearby electronic device, and transmit data to the nearby electronic device.

In some embodiments, referring to FIG. 2, the terminal 100 and the terminal 300 may alternatively indirectly communicate with each other by using at least one electronic device in a communication network. The communication network includes a local area network (local area network, LAN) and/or a wide area network (wide area network, WAN). In an implementation, the terminal 100 and the terminal 300 may be connected to a local area network (local area network, LAN) by using at least one electronic device 300 in a wired or wireless fidelity (wireless fidelity, Wi-Fi) connection mode. For example, the electronic device 300 may include a third-party device such as a router, a gateway, or a smart device controller. In an implementation, alternatively, the terminal 100 and the terminal 300 may be indirectly connected by using at least one electronic device 400 in a wide area network (for example, the Internet). For example, the electronic device 400 may include one or more hardware servers, a cloud server embedded in a virtualized environment, or the like. It may be understood that the terminal 100 and the terminal 300 indirectly establish a wireless communication connection and perform data transmission by using the electronic device 300 and/or the electronic device 400.

For example, the cross-device split-screen system 10 includes a tablet 100, and a mobile phone 200 and a PC 300 that are collaboratively connected to the tablet 100. This is used as an example for description subsequently. This example should not constitute a limitation on embodiments of this application. In embodiments of this application, the user may perform an input operation on the tablet 100, the mobile phone 200, and the PC 300 in one or more input modes: voice, a gesture, a finger, a stylus, a mouse, and the like. This is not specifically limited in embodiments of this application.

It may be understood that a structure shown in this embodiment does not constitute a specific limitation on the cross-device split-screen system 10. In some other embodiments of this application, the cross-device split-screen system 10 may include more or fewer devices than those shown in the figure.

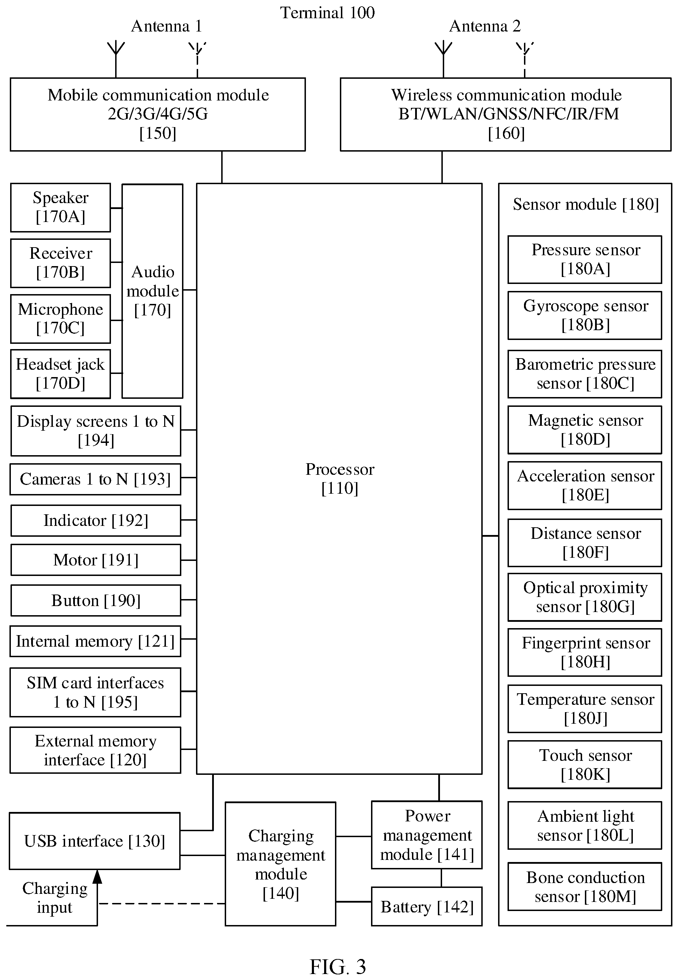

FIG. 3 is a diagram of a structure of a terminal 100.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components are combined, or some components are split, or component arrangements are different. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data used only a short time ago or used cyclically by the processor 110. If the processor 110 needs to use the instruction or data again, the processor 110 may invoke the instruction or data directly from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal 100. The processor 110 communicates with the display screen 194 through the DSI interface, to implement a display function of the terminal 100.

The GPIO interface may be configured by software. The GPIO interface may be configured as a control signal or a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface complying with a USB standard specification, and may be specifically a mini USB interface, a micro USB interface, a USB type-C interface, or the like. The USB interface 130 may be configured to connect a charger to charge the terminal 100, or may be configured to transmit data between the terminal 100 and a peripheral device, or may be configured to connect a headset for playing audio through the headset. Alternatively, the interface may be configured to connect another electronic device, for example, an AR device.

It may be understood that an interface connection relationship between the modules shown in embodiments of the present invention is merely an example for description, and does not constitute a limitation on the structure of the terminal 100. In some other embodiments of this application, the terminal 100 may alternatively use an interface connection mode different from that in the foregoing embodiment, or use a combination of a plurality of interface connection modes.

The charging management module 140 is configured to receive a charging input from a charger. The charger may be a wireless charger, or may be a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the terminal 100. While charging the battery 142, the charging management module 140 may further supply power to the electronic device by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution applied to the terminal 100 and including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal into an electromagnetic wave for radiation by using the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs demodulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 of the terminal 100 is coupled to the mobile communication module 150, and the antenna 2 is coupled to the wireless communication module 160, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements the display function by using the GPU, the display screen 194, the application processor, and the like. The GPU is a microprocessor for image processing, and is connected to the display screen 194 and the application processor. The GPU is configured to perform mathematical and geometric computation for graphics rendering. The processor 110 may include one or more GPUs, and the GPUs execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the terminal 100 may include one or N display screens 194, where N is a positive integer greater than 1.

The terminal 100 may implement the photographing function by using the ISP, the camera 193, the video codec, the GPU, the display screen 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and color temperature of a photographed scene. In some embodiments, the ISP may be disposed in the camera 193.

The camera 193 is configured to capture a still image or a video. An optical image of an object is generated through the lens and projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the electrical signal is converted into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to a digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. Based on a structure of a biological neural network, for example, a transmission mode between neurons in a human brain, the NPU quickly processes input information and can further continuously perform self-learning. Applications such as intelligent cognition of the terminal 100, for example, image recognition, facial recognition, speech recognition, and text understanding, can be implemented by using the NPU.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as a DDR5 SDRAM), or the like. The non-volatile memory may include a magnetic disk storage device or a flash memory (flash memory).

The flash memory may be classified into a NOR flash, a NAND flash, a 3D NAND flash, and the like based on an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110. The random access memory may be configured to store an executable program (for example, machine instructions) in an operating system or another recently run program, and may be further configured to store data of the user, data of an application, and the like.

The non-volatile memory may also store the executable program, the data of the user, the data of the application, and the like, and may load the foregoing to the random access memory in advance, so that the processor 110 directly performs reading and writing.

The external memory interface 120 may be configured to connect an external non-volatile memory, to extend a storage capacity of the terminal 100. The external non-volatile memory communicates with the processor 110 through the external memory interface 120, to implement a data storage function. For example, files such as music and videos are stored in the external non-volatile memory.

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal and output the analog audio signal, and is also configured to convert an analog audio input into a digital audio signal. The audio module 170 may be further configured to encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect a wired headset.

The pressure sensor 180A is configured to sense a pressure signal and can convert the pressure signal into an electrical signal. In some embodiments, the pressure sensor 180A may be disposed on the display screen 194. There are a plurality of types of pressure sensors 180A, for example, a resistive pressure sensor, an inductive pressure sensor, and a capacitive pressure sensor.

The gyroscope sensor 180B may be configured to determine a motion posture of the terminal 100. In some embodiments, an angular velocity of the terminal 100 around three axes (x, y, and z axes) may be determined by using the gyroscope sensor 180B.

The barometric pressure sensor 180C is configured to measure barometric pressure.

The magnetic sensor 180D includes a Hall sensor.

The acceleration sensor 180E may detect values of accelerations of the terminal 100 in various directions (generally three axes).

The distance sensor 180F is configured to measure a distance. The terminal 100 may measure the distance by using infrared or laser.

The optical proximity sensor 180G may include, for example, a light emitting diode (LED) and an optical detector, for example, a photodiode. The light-emitting diode may be an infrared light-emitting diode.

The ambient light sensor 180L is configured to sense ambient light brightness. The terminal 100 may adaptively adjust brightness of the display screen 194 based on the sensed ambient light brightness.

The fingerprint sensor 180H is configured to collect a fingerprint.

The temperature sensor 180J is configured to detect a temperature. In some embodiments, the terminal 100 executes a temperature processing policy by using the temperature detected by the temperature sensor 180J.

The touch sensor 180K is also known as a "touch device". The touch sensor 180K may be disposed on the display screen 194, and a touchscreen, also referred to as a "touch screen", is formed by the touch sensor 180K and the display screen 194. The touch sensor 180K is configured to detect a touch operation performed on or near the touch sensor 180K. The touch sensor may transfer the detected touch operation to the application processor to determine a type of a touch event. A visual output related to the touch operation may be provided on the display screen 194. In some other embodiments, the touch sensor 180K may alternatively be disposed on a surface of the terminal 100, at a position different from a location of the display screen 194.

The bone conduction sensor 180M can obtain a vibration signal.

The button 190 includes a power button, a volume button, and the like. The terminal 100 may receive a key input and generate a key signal input related to a user setting and function control of the terminal 100.

The motor 191 may generate a vibration prompt.

The indicator 192 may be an indicator light, and may be configured to indicate a charging status, a power change, a message, a missed call, and the like.

The SIM card interface 195 is configured to connect a SIM card.

The term "user interface (user interface, UI)" in the following embodiments of this application is an interface for interaction and information exchange between an application or an operating system and a user. The user interface is source code written in a specific computer language, for example, Java or an extensible markup language (extensible markup language, XML). The interface source code is parsed and rendered on a terminal device, and is finally presented as content that can be recognized by the user. A frequently-used representation form of the user interface is a graphical user interface (graphical user interface, GUI), and is a user interface that is displayed in a graphical manner and that is related to a computer operation. The user interface may be a visual interface element, for example, a text, an icon, a button, a menu, a tab, a text box, a dialog box, a status bar, a navigation bar, or a widget (widget) displayed on a display screen of the terminal device. In implementations of this application, the "user interface" may also be referred to as a "page" or an "interface" for short.

The following describes an example graphical user interface implemented on a tablet 100 according to an embodiment of this application.

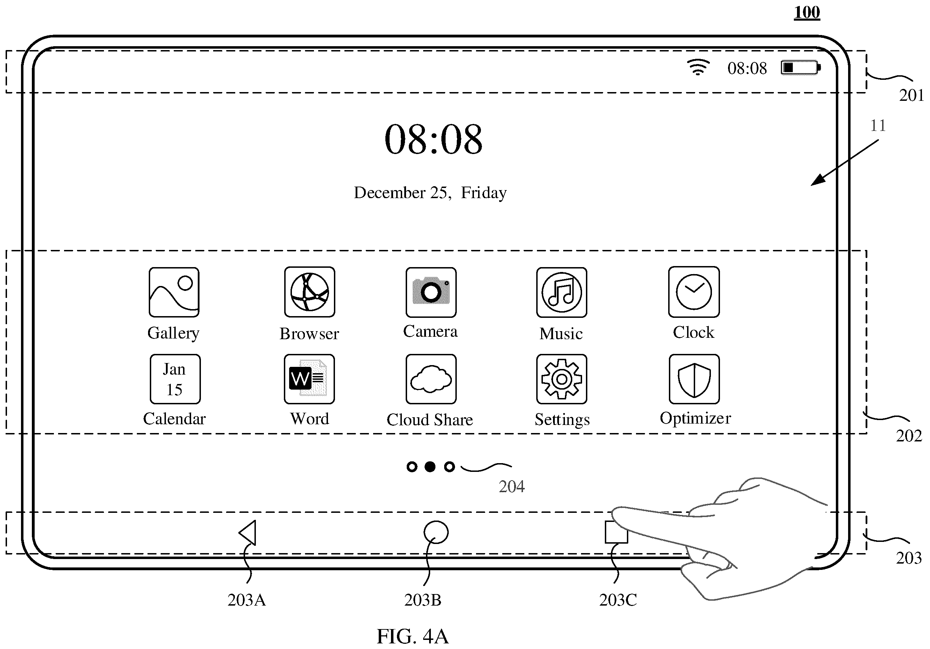

FIG. 4A shows an example of a home screen 11 used to display applications installed on a tablet 100. The home screen 11 may include a status bar 201, a calendar indicator, a display area 202 for application icons, and a navigation bar 203.

The display area 202 for application icons may display an icon of a gallery, an icon of Word, an icon of a browser, an icon of a camera, an icon of Cloud Share, an icon of Notes, and the like. The home screen 11 may further include a page indicator 204. Application icons may be distributed on a plurality of pages. The page indicator 204 may indicate a page on which applications currently viewed by a user are located. The user may slide left or right in the area of application icons to view application icons on other pages.

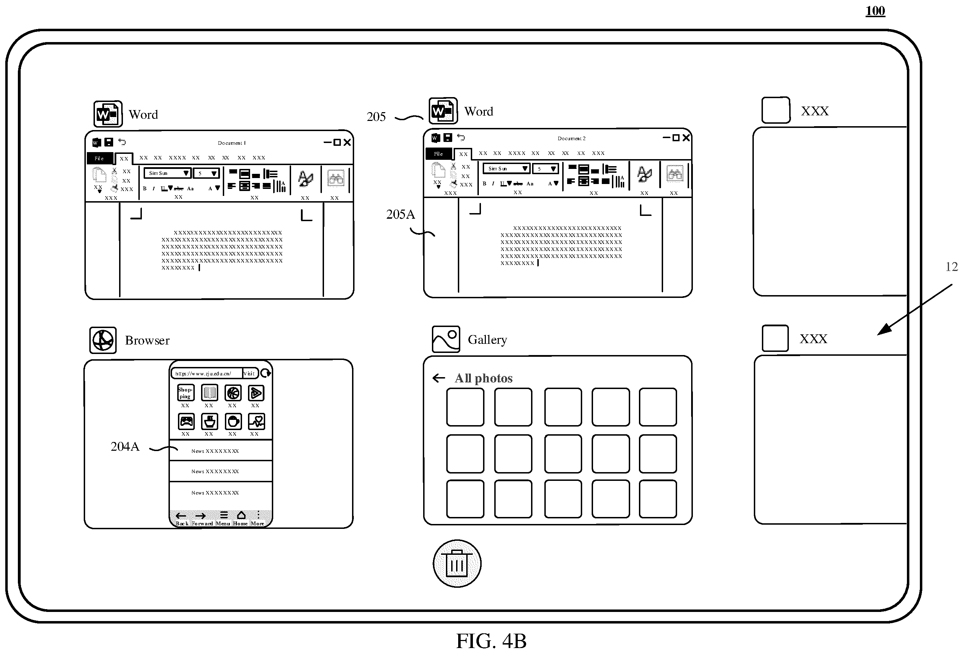

The navigation bar 203 may include system navigation buttons such as a back button 203A, a home button 203B, and a multitask button 203C. When detecting that the user taps the back button 203A, the tablet 100 may display a page previous to a current page. When detecting that the user taps the home button 203B, the tablet 100 may display the home screen 11. As shown in FIG. 4B, when detecting that the user taps the multitask button 203C, the tablet 100 may display a task management interface 12. Names of the navigation buttons may alternatively be other names. This is not limited in this application.

In this embodiment of this application, the home screen 11 may alternatively not include virtual buttons in the navigation bar 203, and each navigation button in the navigation bar 203 may be implemented as a physical button or a navigation gesture. In some embodiments, the tablet 100 implements a function of each navigation button in the navigation bar 203 by specifying a navigation gesture. For example, a bottom edge of a display screen 194 of the tablet is divided into a left bottom edge, a middle bottom edge, and a right bottom edge. A navigation gesture corresponding to the back button 203A includes a gesture of sliding upward from the left bottom edge of the display screen 194. A navigation gesture corresponding to the home button 203B includes a gesture of sliding upward from the middle bottom edge of the display screen 194. A navigation gesture corresponding to the multitask button 203C includes a gesture of sliding upward from the right bottom edge of the display screen 194.

The following describes the task management interface in this embodiment of this application by using an example.

In this embodiment of this application, a conventional task management interface 12 is an interface that is in a system user interface and that is used to display a recently run task (that is, a background run task) of the device.

The tablet 100 is used as an example. When the user starts a new application on the tablet 100, the tablet 100 may switch a foreground run application to background for running, sequentially add application windows (namely, tasks) recently run by the application to a multitask queue 1, and store a snapshot of a user interface last displayed in the application window, where the snapshot is used as an interface snapshot of the application window in a task card on the task management interface. Optionally, the snapshot of the user interface may be a screenshot of the user interface. As shown in FIG. 4A and FIG. 4B, the user may invoke the conventional task management interface 12 by using the multitask button 203C. The task management interface 12 may display a task card corresponding to each task in the multitask queue 1 of the tablet. Effect of previewing, closing, fast switching, or the like may be achieved in each application window (that is, a task) in the multitask queue 1 of the tablet 100 by using each task card. Optionally, closing a task may include ending a related process of the task, and releasing running memory occupied by the task. For example, a task card 205 of the Word application on the task management interface 12 is used as an example. The user may preview, by using an interface snapshot 205A in the task card 205, a recently run application window 1 of the Word application. When detecting that the user taps the task card 205, the tablet 100 may switch the application window 1 to the foreground for running, that is, display the application window 1. When detecting that the user drags the task card 205 upward, the tablet 100 may close the background run application window 1.

It should be noted that the application window may be an activity window in an Android system, an application window in an iOS system, or an application window in another operating system. This is not specifically limited herein. One application includes a plurality of application windows, and one application window may correspond to one user interface (namely, one page). For example, an activity in the Android system is an interface for interaction between the user and an application. Each activity component is associated with one window object and is used to describe a specific application window (the window may be referred to as an activity window). It can be learned that the activity is a highly abstract user interface component, and represents a user interface and corresponding service logic centered on the user interface in Android. A control on the user interface may be used to listen to and process an event triggered by the user. It may be understood that, in an Android application, one or more activities may be represented as one user interface, and one Android application may have a plurality of activities. Displaying an application window in subsequent embodiments refers to displaying a user interface corresponding to the application window.

The "task" in embodiments of this application may be an "application", or may be an "application window" or a "user interface" in an application. In subsequent embodiments, the application window is mainly used as an example for description. The "task card" may also be referred to as a "task identifier", a "task window", a "task page", or the like. This is not specifically limited in embodiments of this application.

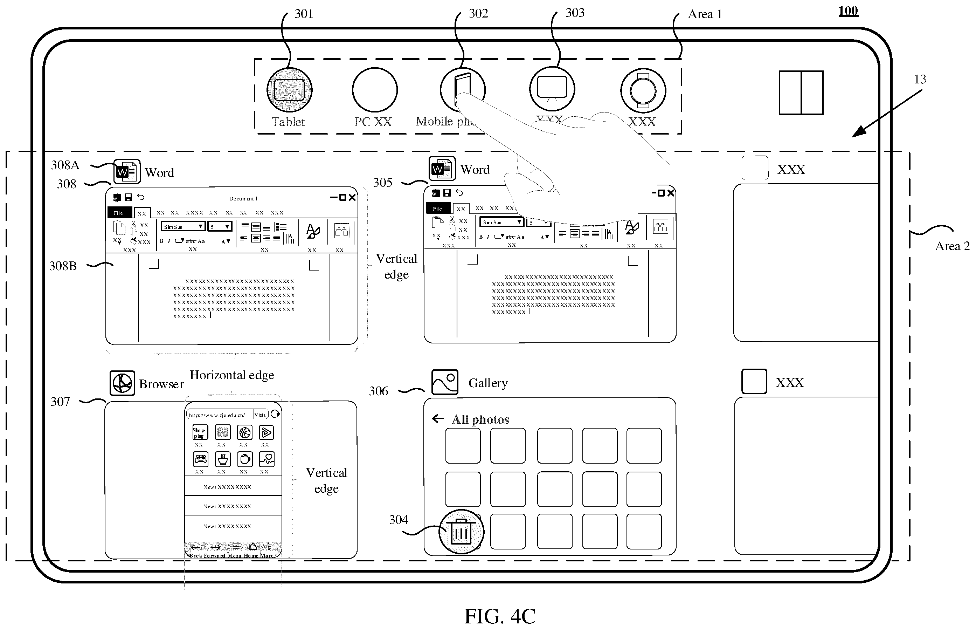

This embodiment of this application further provides a multi-device task management interface. Different from the conventional task management interface, the multi-device task management interface may be not only used to view and manage a recently run task of the tablet, but also to view a recently run task of a collaborative device (that is, a foreground run task and/or a background run task), and perform cross-device split screen for the recently run task of the tablet and/or the collaborative device. In an implementation, as shown in FIG. 4A and FIG. 4C, the multi-device task management interface 13 may be directly invoked by using the multitask button 203C. In another implementation, only the conventional task management interface 12 can be invoked by using the multitask button 203C, and then the conventional task management interface 12 may be switched to the multi-device task management interface 13 by using a specific operation. In another implementation, the multi-device task management interface 13 may be presented by using another system interface (for example, a minus-two screen). A manner of invoking the multi-device task management interface 13 is not specifically limited in embodiments of this application.

As shown in FIG. 4C, a device identifier 301 of the tablet 100 and device identifiers of collaborative devices of the tablet 100 are displayed in an area 1 of the multi-device task management interface 13, for example, a device identifier 302 of a mobile phone 200 and a device identifier 303 of a PC 300. The device identifier may include a device icon and a device name. The device identifier 301 of the tablet 100 is in a selected state, and the device identifier of each collaborative device is in an unselected state. An area 2 of the task management interface 13 is used to display a task card corresponding to a recently run task of a currently selected device, and a clear control 304 in the area 2 is used to close some or all of recently run tasks of the currently selected device at a time. As shown in FIG. 4C, a task card corresponding to a background run task of the tablet 100 and the clear control 304 are displayed in the area 2 of the task management interface 13. A task card corresponding to a task includes an application identifier and/or an interface snapshot of an application corresponding to the task, and the clear control 304 is used to close background run tasks of the tablet 100 at a time.

For example, before the tablet 100 invokes the task management interface 13, the user successively views a document 1 of the Word application, the gallery application, the browser application, and a document 2 of the Word application. As shown in FIG. 4C, task cards of the tablet 100 include a task card 305 corresponding to the document 1 of the Word application, a task card 306 corresponding to the gallery application, a task card 307 corresponding to the browser application, and a task card 308 corresponding to the document 2 of the Word application. The task card 308 is used as an example. The task card 308 includes an application identifier 308A of the Word application and an interface snapshot 308B of the document 1.

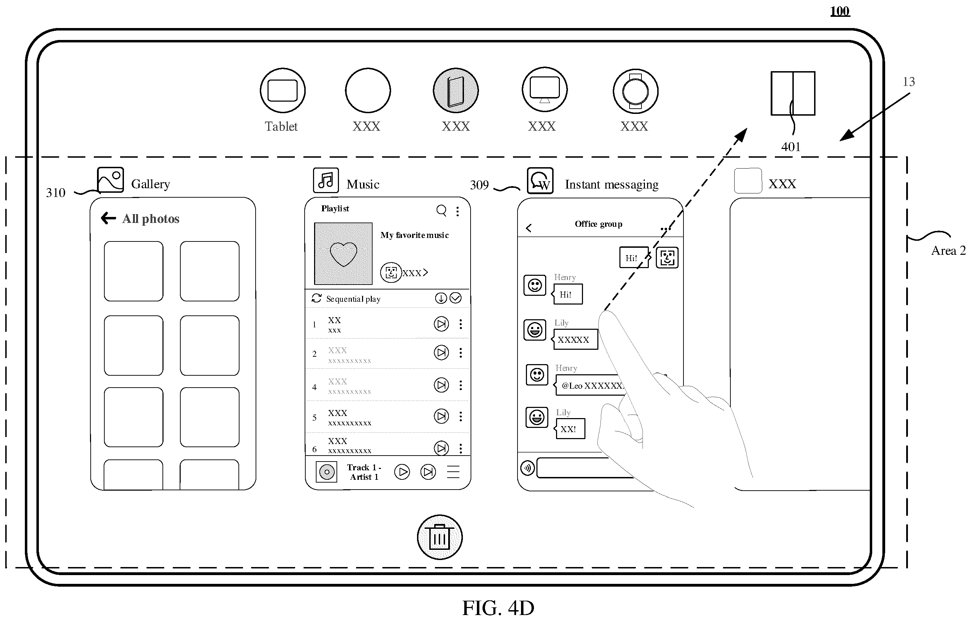

As shown in FIG. 4C and FIG. 4D, after detecting that the user taps a device identifier of another collaborative device (for example, the device identifier 302 of the mobile phone 200), the tablet 100 displays, in the area 2, a task card corresponding to each task in a multitask queue 2 of the mobile phone 200, where the multitask queue 2 is used to cache task information of a recently run task of the mobile phone 200, for example, a task card 309 corresponding to an instant messaging application running in the background of the mobile phone, a task card corresponding to a music application, and a task card 310 corresponding to a gallery application running in the foreground of the mobile phone 200. By using the task cards of the mobile phone 200 displayed in the area 2, the tablet 100 may preview, close, and quickly switch application windows in the multitask queue 2 of the mobile phone 200. For example, the task card 309 of the instant messaging application on the task management interface 13 is used as an example. The user may preview, by using an interface snapshot in the task card 309, a recently run application window 2 of the instant messaging application of the mobile phone 200. When detecting that the user taps the task card 309, the tablet 100 may switch the application window 2 of the mobile phone 200 to the foreground of the tablet 100 for running, and display a user interface 2 corresponding to the application window 2. When detecting that the user drags the task card 309 upward, the tablet 100 may instruct the mobile phone 200 to close the background run application window 2.

In this embodiment of this application, the tablet 100 may obtain multitask data of each collaborative device (for example, the mobile phone 200). The multitask data includes task information of each task in the multitask queue 2 of the collaborative device. Therefore, based on the multitask queue 2 of the collaborative device, a task card corresponding to a recently run task of the collaborative device can be displayed on the multitask management interface 13. In embodiments of this application, a manner and an occasion of obtaining the multitask data of the collaborative device by the tablet 100 are not specifically limited.

In some embodiments, when determining that a collaborative device is online, the tablet 100 periodically sends a task obtaining request to the collaborative device, to request to obtain latest multitask data of the collaborative device. In an implementation, that the tablet 100 determines that a collaborative device is online specifically includes: The tablet 100 determines that the tablet 100 can directly or indirectly communicate with the collaborative device. In some embodiments, when detecting an operation of invoking the multitask management interface 13 by the user or when detecting that the user taps the device identifier of the collaborative device on the multitask management interface 13, the tablet 100 sends a task obtaining request to the collaborative device, to request to obtain latest multitask data of the collaborative device. In some embodiments, the collaborative device of the tablet 100 periodically sends latest multitask data to the tablet 100, or synchronizes latest multitask data to the tablet 100 when the multitask data is updated. In some embodiments, the collaborative device of the tablet 100 periodically synchronizes latest multitask data to a multitask data management module of a third-party device (for example, an application server) when multitask data is updated. When the tablet 100 perceives that the multitask data of the collaborative device in the multitask data management module is updated, or when the tablet 100 detects an operation of invoking the multitask management interface 13 by the user, or when the tablet 100 detects that the user taps the device identifier of the collaborative device on the multitask management interface 13, the tablet 100 requests the third-party device to obtain the latest multitask data of the collaborative device.

The following uses the application window 2 of the instant messaging application in the multitask data of the mobile phone 200 as an example to describe task migration and continuation between devices.

In some embodiments, the task information of the application window 2 may include some or all of the following: status information of the application window 2, startup information required for starting the application window 2, user data of the application window 2, and context (Context) information of the application window 2, to ensure that task transfer and seamless continuation can be performed between the mobile phone 200 and the tablet 100 for the application window 2. An instant messaging application corresponding to the application window 2 is installed on the tablet 100. The instant messaging application may be started based on the task information of the application window 2, the application window 2 in the application is opened, and a user interface of the application window 2 last run on the mobile phone 200 is displayed. In an implementation of this application, after the multitask data (for example, the task information of the application window 2) of the mobile phone 200 is updated, the tablet 100 may synchronize the updated multitask data of the mobile phone 200, to ensure that the application window 2 can be seamlessly continued between the mobile phone 200 and the tablet 100.

The status information is used to record a latest running status of the application window 2, and the startup information may include some or all of the following: a package name, a class name, and a cleanup mode of the application, and a window identifier of the application window 2. The user data of the application window 2 may include a display position of a long page corresponding to the application window 2 when the application window 2 is recently run, an address (for example, a uniform resource identifier (Uniform Resource Identifier, URI)) of an online resource or a local resource in the application window 2, and viewing progress (for example, video progress or audio progress) of a specific resource.

In some embodiments, the status information of the application may further include an interface capability (feature ability, FA) file. Even if the instant messaging application to which the application window 2 belongs is not installed on the tablet 100, the instant messaging application may be directly run based on the FA file. The FA file can be independently packaged and released, and has one or more of the following capabilities: being installation-free, running independently without relying on an application, cross-device UI migration, and cross-device binary migration, making task migration between devices more convenient.

Referring to the task cards shown in FIG. 4C and FIG. 4D, this application may involve the following two types of applications. For a first-type application, a recently run task of a terminal can include only one recently run task of the application, and the multitask management interface 13 can display only one task card corresponding to the recently run task of the application, for example, the task card 309 corresponding to the instant messaging application. For a second-type application, the terminal may simultaneously run a plurality of tasks of the application, and the multitask management interface 13 can also simultaneously display task cards corresponding to a plurality of recently run tasks of the application, for example, the task card 305 corresponding to the document 1 of the Word application and the task card 308 corresponding to the document 2 of the Word application. A same application may present different attributes on different types of terminals. For example, the browser application may be a first-type application on the tablet, and may be a second-type application on the PC. In this embodiment of this application, the second-type application may not be involved. This is not specifically limited herein.

Referring to FIG. 4C and FIG. 4D, the terminal in this embodiment of this application may support landscape orientation and/or portrait orientation. Landscape orientation means that an aspect ratio of a user interface displayed by the terminal (that is, a ratio of a horizontal edge to a vertical edge of the user interface) is greater than 1, and portrait orientation means that the aspect ratio of the user interface displayed by the terminal is less than 1. If the terminal switches a task to the background in landscape orientation, an aspect ratio of an interface snapshot in a task card of the task is greater than 1. For example, refer to the task card 305 of the Word application shown in FIG. 4C. If the terminal switches a task to the background in portrait orientation, an aspect ratio of an interface snapshot in a task card of the task is less than 1. For example, refer to the task card 307 corresponding to the browser application shown in FIG. 4C.

Referring to FIG. 4C and FIG. 4D, when task cards of all tasks in a multitask queue of the currently selected device cannot be displayed in the area 2 due to a limited screen size, the user may view task cards of more tasks by performing a slide-left/right operation in the area 2. An arrangement order and a layout mode of task cards of each device in the area 2 are not limited in embodiments of this application. Arrangement orders and layout modes of task cards of two devices may be different or the same. For example, as shown in FIG. 4B, the task cards of the tablet 100 are displayed in a two-row and multi-column layout mode, and task cards corresponding to the tasks are sequentially arranged from top to bottom and from right to left in the area 2 based on a last foreground running time sequence of the tasks, where a recently run foreground task is located in a first row and a first column. As shown in FIG. 4C, the task cards of the mobile phone 200 are displayed in a one-row and multi-column layout mode, and task cards corresponding to the tasks are sequentially arranged in the area 2 from right to left based on a last foreground running time sequence of the tasks, where a recently run foreground task is located in the first column. In this embodiment of this application, the task cards corresponding to the tasks may also be sorted based on factors such as historical running duration and historical running frequency of the tasks in a preset time period. This is not specifically limited herein.

In some embodiments, the task management interface 13 of the tablet 100 further includes a configuration control 401 for a cross-device split-screen window. After detecting that the user drags any task card displayed on the task management interface 13 to the configuration control, the tablet 100 may add, to the split-screen window, a task corresponding to the task card. After adding one or more tasks to the split-screen window, and detecting that the user drags the configuration control to a device identifier of any collaborative device (for example, the PC 300), the tablet 100 may send a display instruction to the PC 300, to trigger the PC 300 to display the cross-device split-screen window, so as to display one or more tasks of another device in split screen on the PC.

In some embodiments, when only one task (for example, a task of the mobile phone 200) is added, the cross-device split-screen window may display the task in full screen. In this way, effect of cross-device projection of the mobile phone 200 to the PC 300 may also be achieved by using the tablet 100.

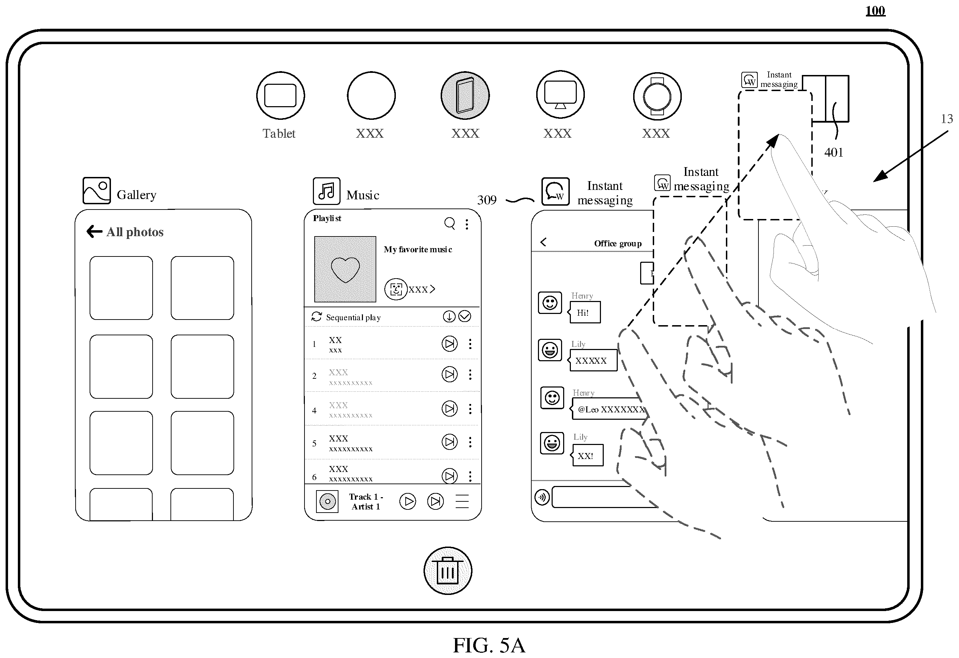

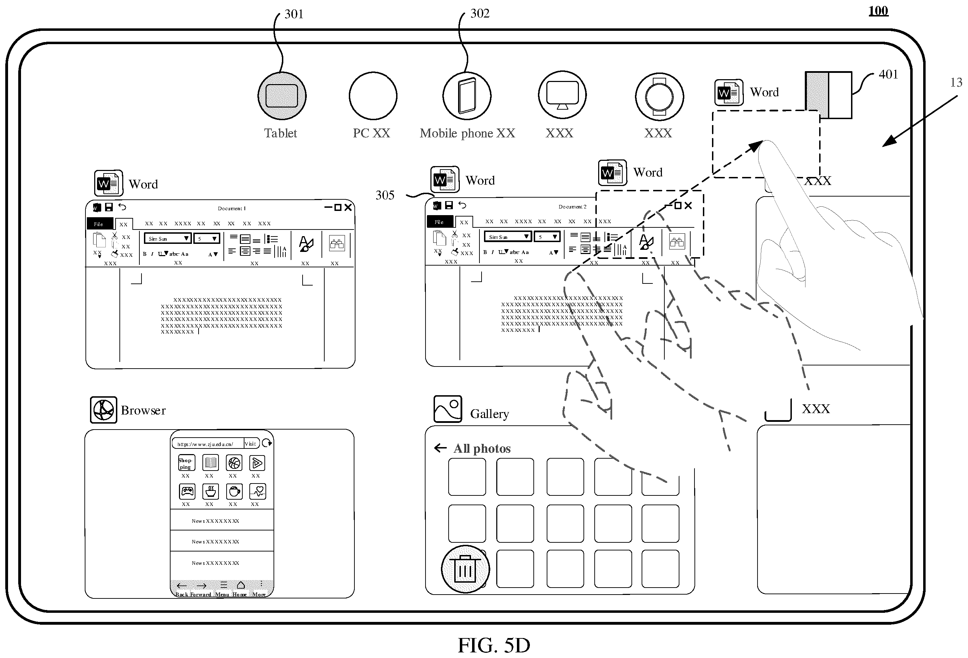

For example, FIG. 5A to FIG. 5G show an example in which the tablet 100 adds two tasks to the cross-device split-screen window and triggers the PC 300 to display the cross-device split-screen window.

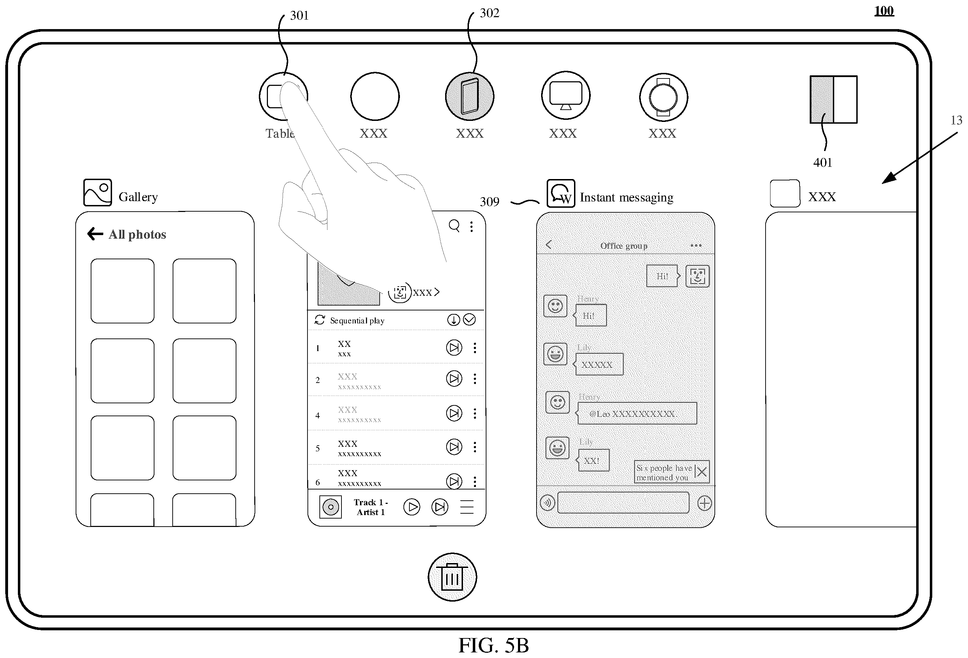

As shown in FIG. 4D, FIG. 5A, and FIG. 5B, the task management interface 13 includes the configuration control 401 for the cross-device split-screen window, and the task card 309 of the instant messaging application of the mobile phone 200. When detecting a slide operation of touching and holding the task card 309 and then dragging the task card 309 by the user, the tablet 100 displays a card identifier corresponding to the task card 309 moving along with a finger of the user. When detecting that the user drags the card identifier to the configuration control 401, or when detecting that the user drags the card identifier to the configuration control 401 and releases the card identifier (that is, stops touching the task card 309), the tablet 100 adds, to the cross-device split-screen window, a task (that is, the application window 2) corresponding to the task card 309, and enables the configuration control 401 to present a display state 1, where the display state 1 indicates that one task has been added to the split-screen window. The card identifier corresponding to the task card 308 may be the task card 309 itself, or may be a thumbnail of the task card 309. This is not specifically limited herein.

In some embodiments, after the task corresponding to the task card 309 is added to the cross-device split-screen window, the task card 309 switches from a not-added state to an added state. For example, a background color and/or transparency of the added state change/changes compared with the not-added state.

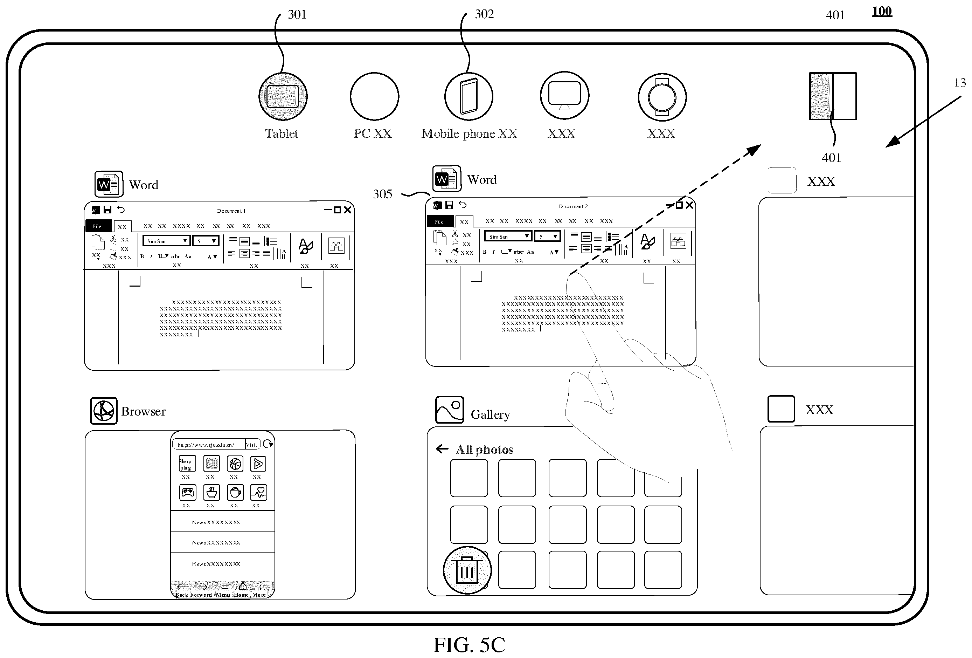

As shown in FIG. 5B and FIG. 5C, after detecting that the user taps the device identifier 301 of the tablet 100, the tablet 100 displays a task card of the tablet 100 on the task management interface 13, for example, the task card 305 of the Word application. As shown in FIG. 5C to FIG. 5E, similarly to the task card 309, after the user touches and holds the task card 305 and drags the task card 305 to the configuration control 401, the tablet 100 adds, to the cross-device split-screen window, a task (the application window 1) corresponding to the task card 305, and enables the configuration control 401 to present a display state 2, where the display state 2 indicates that two tasks have been added to the split-screen window. In some embodiments, after two tasks are added, the split-screen window is divided into two split-screen areas, which are respectively used to display the two tasks. The display state 2 further indicates positions of the two split-screen areas in the split-screen window. For example, referring to FIG. 5C, the display state 2 of the configuration control 401 indicates that the split-screen window is vertically divided into a left split-screen area and a right split-screen area.

In this embodiment of this application, the tasks added by the tablet 100 to the cross-device split-screen window may be all tasks of the tablet 100, or may be all tasks of at least one collaborative device (for example, the mobile phone 200 and/or the PC 300) of the tablet 100. This is not specifically limited herein.

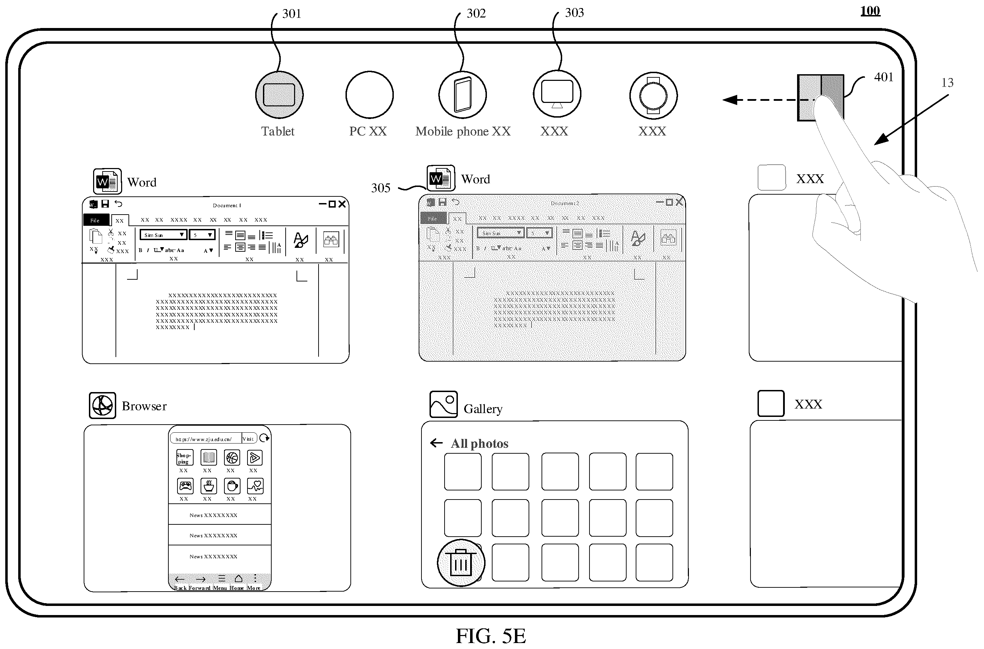

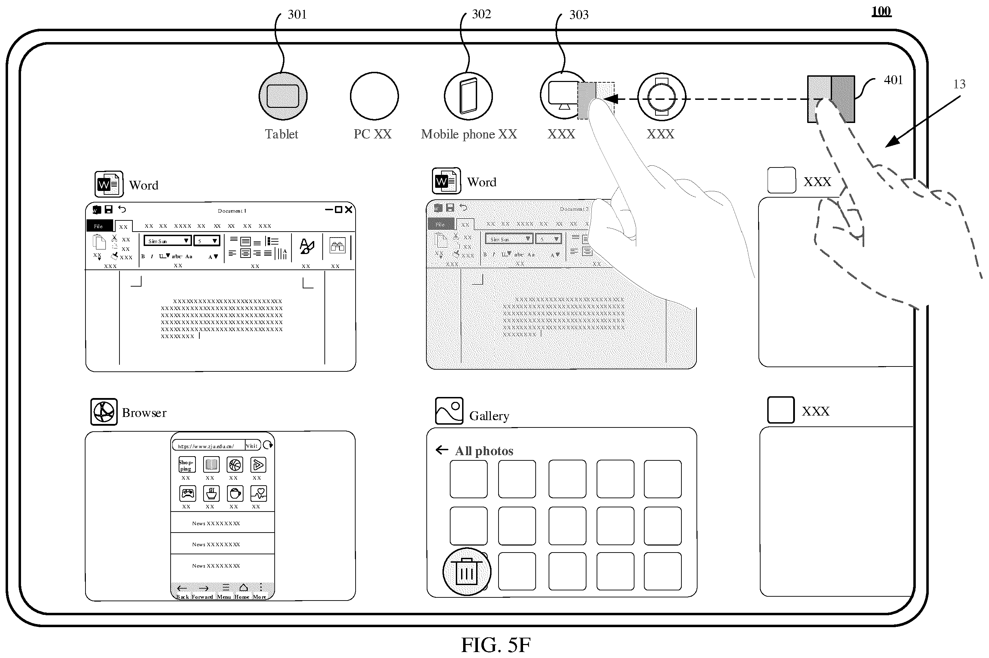

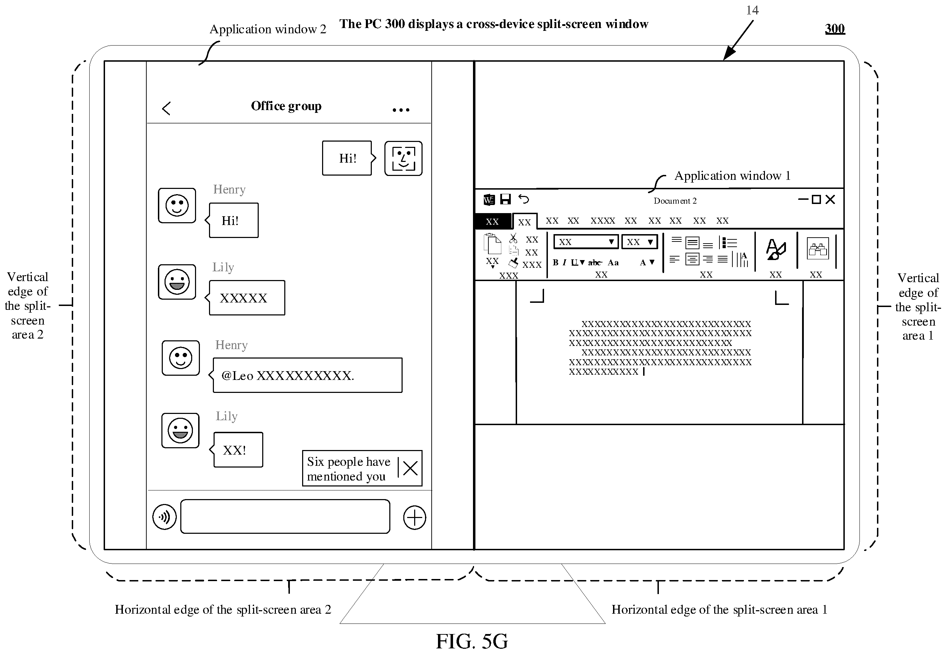

As shown in FIG. 5E and FIG. 5F, when detecting a slide operation of touching and holding the configuration control 401 and then dragging the configuration control 401 by the user, the tablet 100 displays the configuration control 401 moving along with a finger of the user. As shown in FIG. 5F and FIG. 5G, when detecting that the user drags the configuration control 401 to the device identifier 303 of the PC 300 and releases the configuration control, the tablet 100 sends a display instruction to the PC 300, to trigger the PC 300 to display and run a cross-device split-screen window 14. The application window 1 of the tablet 100 is displayed in a split-screen area 1 of the split-screen window 14, and the application window 2 of the mobile phone 200 is displayed in a split-screen area 2.

In some embodiments, a split-screen window size of the cross-device split-screen window 14 is determined based on a target device (that is, the PC 300), and split-screen window sizes corresponding to different target devices may be different. The split-screen window size indicates an aspect ratio of the split-screen window. For example, a split-screen window size corresponding to the PC 300 is a size of a display screen of the PC 300. For example, a split-screen window size corresponding to the mobile phone 200 may be a size of a display screen of the mobile phone 200 when the mobile phone 200 is in landscape orientation. In an implementation, the tablet 100 may store a split-screen window size corresponding to each collaborative device. When detecting that the user drags the configuration control 401 to the device identifier of the PC 300, the tablet 100 obtains the split-screen window size corresponding to the PC 300, and determines division of each split-screen area in the split-screen window 14 based on the split-screen window size. In some embodiments, the split-screen window size is preset by a control device (that is, the tablet 100) or the user, and split-screen window sizes corresponding to different target devices are the same.

In this embodiment of this application, the tablet 100 may adaptively plan, based on a part or all of an original display size and an original aspect ratio of an added application window in a source device and a display size and an aspect ratio of the split-screen window, a split-screen area corresponding to each application window in the split-screen window and a display area of each application window in the split-screen area. Optionally, when two horizontally displayed application windows are added to the cross-device split-screen window, the split-screen window may be horizontally divided into an upper split-screen area and a lower split-screen area. Optionally, an aspect ratio of the cross-device split-screen window is less than 1, and when two application windows are added, the split-screen window may be horizontally divided into an upper split-screen area and a lower split-screen area.

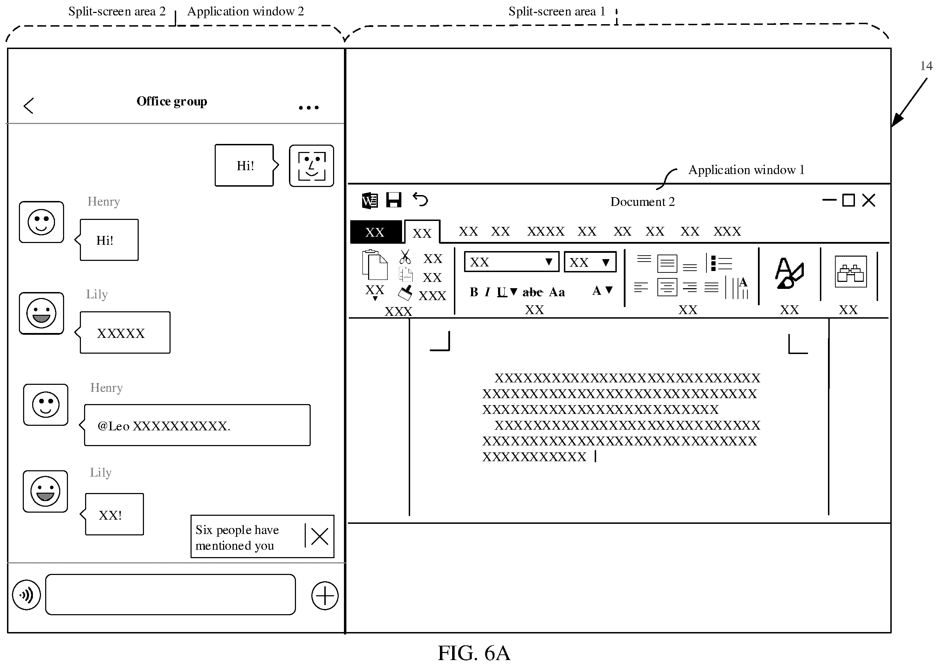

For example, FIG. 6A to FIG. 6F further show two split-screen areas in the cross-device split-screen window 14 and more display forms of corresponding application windows.

As shown in FIG. 5G and FIG. 6A to FIG. 6F, the aspect ratio of the cross-device split-screen window 14 is less than 1, and the split-screen window 14 may include two split-screen areas obtained through vertical division, that is, a right split-screen area 1 and a left split-screen area 2. The split-screen area 1 is used to display the application window 1 of the Word application of the tablet 100, and the split-screen area 2 is used to display the application window 2 of the instant messaging application of the mobile phone 200.

This application involves the following two types of application windows. A size (size) of a first-type application window is unadjustable, that is, an aspect ratio is unadjustable. A size of a second-type application window is adjustable, that is, an aspect ratio is adjustable. Specifically, a horizontal edge and/or a vertical edge of the second-type application window may be adjusted. When the vertical edge of the second-type application window is adjustable, and a user interface corresponding to the second-type application window is usually a vertical long page, due to a limitation of a vertical edge length of the application window, a display screen of the terminal cannot display all display content of the user interface at a time, and the user needs to slide the user interface up and down to view more display content. By increasing (or decreasing) the vertical edge length of the application window, currently viewable display content of the application window may be increased (or reduced). When the horizontal edge of the second-type application window is adjustable, and a user interface corresponding to the second-type application window is usually a horizontal long page, due to a limitation of a horizontal edge length of the application window, the display screen of the terminal cannot display all display content of the user interface at a time, and the user needs to slide the user interface left and right to view more display content. By increasing (or decreasing) the horizontal edge length of the second-type application window, currently viewable display content of the application window may be increased (or reduced). Both horizontal and vertical edges of some second-type application windows are adjustable, and user interfaces corresponding to the second-type applications are both horizontal and vertical long pages.

In this embodiment of this application, when determining a display position of an application window in the split-screen window, the tablet may scale up or down the size of the application window as a whole. If a horizontal edge or a vertical edge of the application window is adjustable, the tablet may scale up or down a display size of the application window in the split-screen window as a whole, and adjust a horizontal edge length or a vertical edge length of the application window, to reduce a blank area of the split-screen window and improve utilization of the split-screen window.

Referring to a display form shown in FIG. 5G, an aspect ratio of the application window 1 and an aspect ratio of the application window 2 are unadjustable, and sizes of the split-screen area 1 and the split-screen area 2 are the same. The application window 1 and the application window 2 are maximized and displayed in corresponding split-screen areas based on the original aspect ratios. That an application window is maximized and displayed in a split-screen area means that the application window is scaled up or down as a whole, until the application window and the split-screen area meet the following condition: Horizontal edge lengths of the application window and the split-screen area are equal, or vertical edge lengths of the application window and the split-screen area are equal. The original aspect ratio may be an aspect ratio of the application window when the application window runs in the source device. As shown in FIG. 5G, because the original aspect ratio of the application window 1 of the Word application is greater than an aspect ratio of the split-screen area 1, after the application window 1 is maximized and displayed in the split-screen area 1, a horizontal edge length of the application window 1 is equal to a horizontal edge length of the split-screen area 1. Because the original aspect ratio of the application window 2 of the instant messaging application is less than an aspect ratio of the split-screen area 2, after the application window 2 is maximized and displayed in the split-screen area 2, a vertical edge length of the application window 2 is equal to a vertical edge length of the split-screen area 2. It may be understood that when the original aspect ratio of the application window is the same as the aspect ratio of the split-screen area, the application window may fill the entire split-screen area. As shown in FIG. 5G, in this display form, there is an unused blank area in either of the two split-screen areas.

Referring to a display form shown in FIG. 6A, neither the aspect ratio of the application window 1 nor the aspect ratio of the application window 2 is adjustable. Compared with the display form shown in FIG. 5G, sizes of the split-screen area 1 and the split-screen area 2 are determined based on the original aspect ratios of the application window 1 and the application window 2 and the aspect ratio of the split-screen window. The sizes of the two split-screen areas may be different. The application window 1 and the application window 2 are maximized and displayed in the corresponding split-screen areas based on the original aspect ratios, and a horizontal edge of each application window is equal to a horizontal edge of the split-screen area in which the application window is located. In this way, the blank area in the split-screen window can be reduced, and utilization of the split-screen window can be improved. As shown in FIG. 6A, compared with FIG. 5G, horizontal edge lengths of the application window 2 and the split-screen area 2 are also equal, and there is no blank area in the split-screen area 2. The horizontal edge length of the split-screen area 1 is increased, and a display size of the application window 1 is larger.

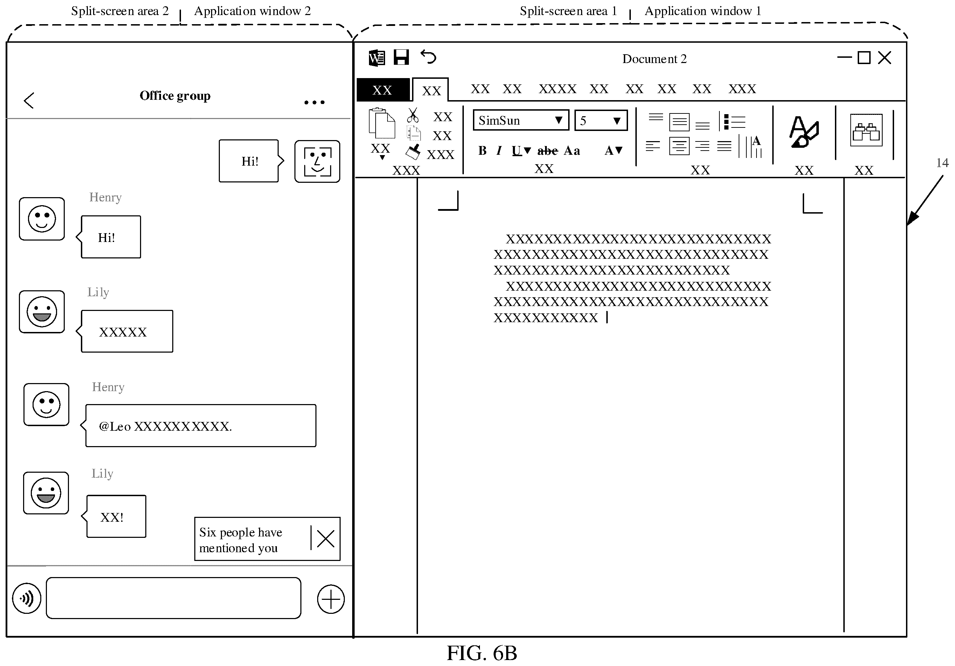

Referring to a display form shown in FIG. 6B, a vertical edge of the application window 1 is adjustable, and the aspect ratio of the application window 2 is unadjustable. Compared with the display form shown in FIG. 6A, when a vertical edge length of the application window 1 is less than a vertical edge length of the split-screen area 1 (that is, when there is a blank area in the split-screen area 1), the vertical edge length of the application window 1 is increased until the vertical edge length of the application window 1 is equal to the vertical edge length of the split-screen area 1. In this way, there may no blank area in the split-screen area in which the application window 1 with an adjustable aspect ratio is located, and utilization of the split-screen window can be further improved.

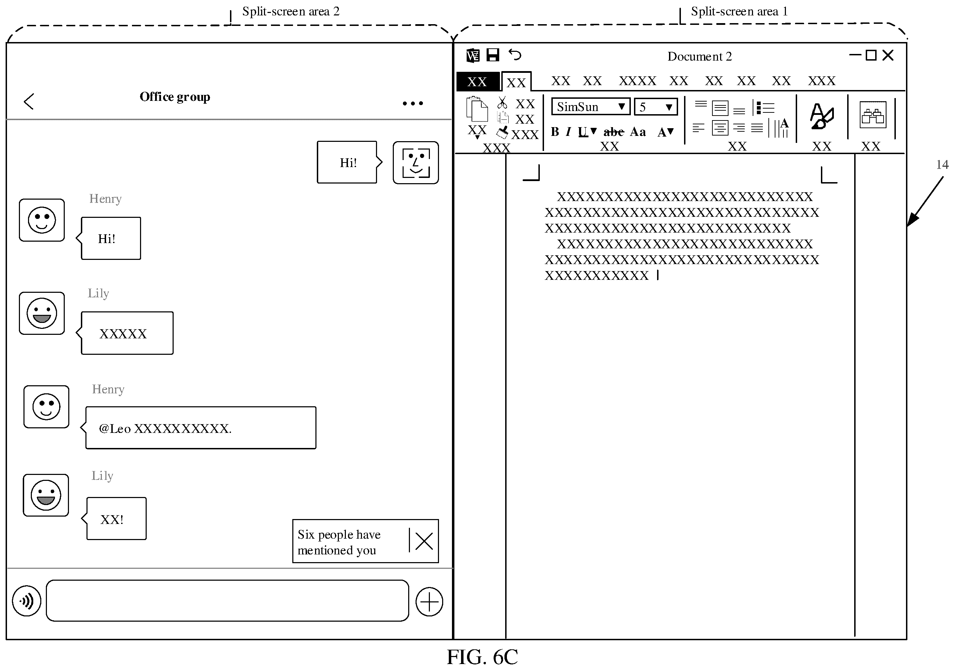

Referring to a display form shown in FIG. 6C, the vertical edge of the application window 1 is adjustable, a horizontal edge of the application window 2 is adjustable, and the size of the split-screen area 1 is the same as the size of the split-screen area 2. Compared with the display form shown in FIG. 5G, when the vertical edge length of the application window 1 maximized and displayed is less than the vertical edge length of the split-screen area 1 (that is, when there is a blank area in the split-screen area 1), the vertical edge length of the application window 1 is increased until the vertical edge length of the application window 1 is equal to the vertical edge length of the split-screen area 1. When a horizontal edge length of the application window 2 maximized and displayed is less than a horizontal edge length of the split-screen area 2 (that is, when there is a blank area in the split-screen area 2), the horizontal edge length of the application window 2 is increased until the horizontal edge length of the application window 2 is equal to the horizontal edge length of the split-screen area 2. In this way, there may be no blank area in the split-screen areas in which the application windows with adjustable sizes are located, and utilization of the split-screen window can be further improved.

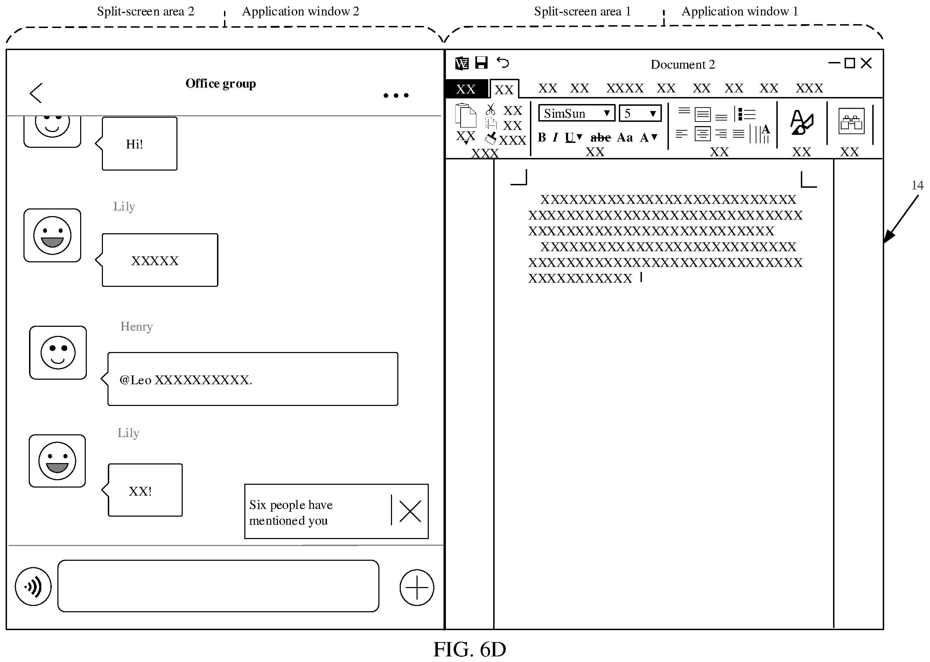

Referring to a display form shown in FIG. 6D, the vertical edges of the application window 1 and the application window 2 are both adjustable, and the size of the split-screen area 1 is the same as the size of the split-screen area 2. Compared with the display form shown in FIG. 5G, when the vertical edge length of the application window 1 maximized and displayed is less than the vertical edge length of the split-screen area 1 (that is, when there is a blank area in the split-screen area 1), the vertical edge length of the application window 1 is increased until the vertical edge length of the application window 1 is equal to the vertical edge length of the split-screen area 1. When the horizontal edge length of the application window 2 maximized and displayed is less than the horizontal edge length of the split-screen area 2 (that is, when there is a blank area in the split-screen area 2), the application window 2 is continuously enlarged until the horizontal edge length of the application window 2 is equal to the horizontal edge length of the split-screen area 2. In addition, the vertical edge length of the application window 2 is reduced, so that the vertical edge length of the application window 2 is equal to the vertical edge length of the split-screen area 2. In this way, there may be no blank area in the split-screen areas in which the application windows with adjustable sizes are located, and utilization of the split-screen window can be further improved.

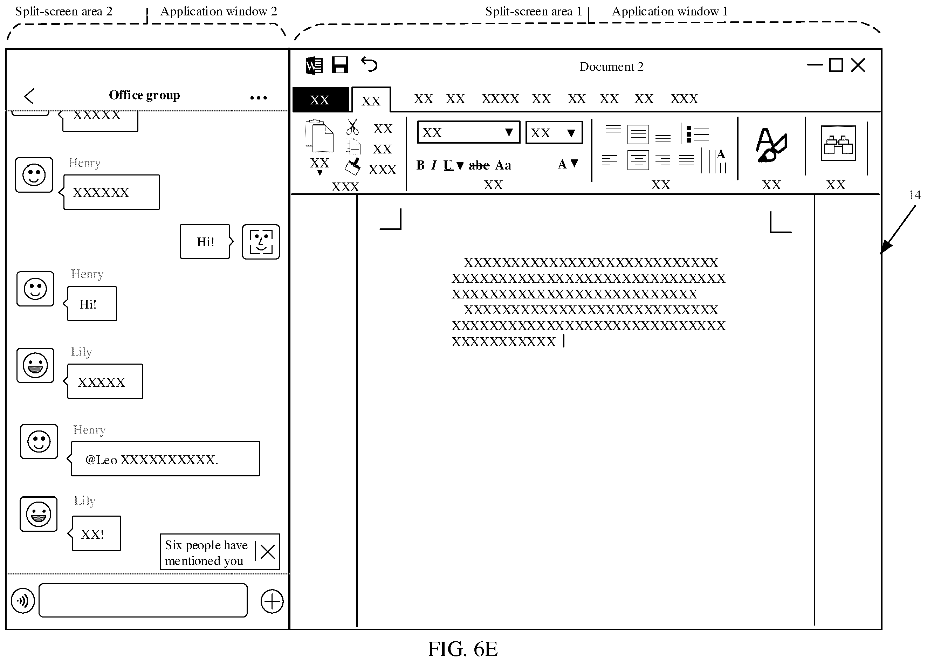

Referring to a display form shown in FIG. 6E, the vertical edges of the application window 1 and the application window 2 are both adjustable, and the sizes of the split-screen area 1 and the split-screen area 2 may be different. Compared with the display form shown in FIG. 5G, the sizes of the split-screen area 1 and the split-screen area 2 are determined based on a difference between an original resolution of the application window 2 in the source device and an original resolution of the application window 1 in the source device. For example, when the original resolution of the application window 1 is N times the original resolution of the application window 2, it is determined that the horizontal edge length of the split-screen area 1 is N times the horizontal edge length of the split-screen area 2. After each application window is maximized and displayed in a corresponding split-screen area, the vertical edge lengths of the application window 1 and the application window 2 are adjusted until the vertical edge lengths of the application windows are equal to the vertical edge lengths of the split-screen areas. This makes the resolution of each application window in the split-screen window closer to the original resolution while ensuring that there is no blank area in the split-screen window, thereby achieving better visual effect and user experience.

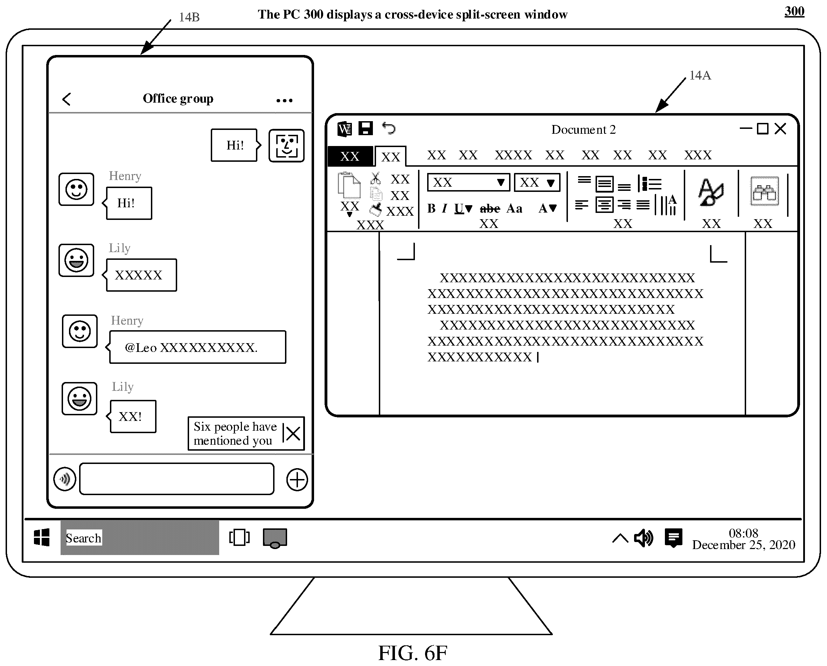

Referring to a display form shown in FIG. 6F, when a size of at least one of N application windows added to the split-screen window is unadjustable, or a size of none of N application windows added to the split-screen window is adjustable, the application windows are separately displayed on the PC 300 by using N mini windows, and the user may independently control each mini window. For example, the application window 1 is displayed by using a mini window 14A, and the application window 2 is displayed by using a mini window 14B.

In some embodiments, as shown in FIG. 7A-1 to FIG. 7A-3, an independent configuration control 402 for a cross-device split-screen mini window may also be set on the task management interface 13. Similarly to the configuration control 401 for the cross-device split-screen window, the user drags a task card to the configuration control 402 to add a task corresponding to the split-screen mini window. After adding N tasks (for example, the application window 1 corresponding to the task card 305 and the application window 2 corresponding to the task card 309), when detecting that the user drags the configuration control 402 to the device identifier of the PC 300, the tablet 100 sends a display instruction to the PC 300, so as to trigger the PC 300 to separately display the N tasks by using N floating mini windows.

The display forms shown in FIG. 5G and FIG. 6A to FIG. 6F are described by using an example in which the aspect ratio of the split-screen window is less than 1 and the split-screen window is vertically divided into two split-screen areas. In some display forms, both a horizontal edge and a vertical edge of an application window may be adjusted, so that better visual effect is achieved for the application window in the split-screen window. In some embodiments, the aspect ratio of the split-screen window may alternatively be greater than 1, and after two tasks are added, the split-screen window may alternatively be horizontally divided into two split-screen areas. Similarly, the two split-screen areas obtained by horizontally dividing the split-screen window and the corresponding application windows may also have a plurality of display forms, and details are not described herein again.

In some embodiments, when a target device (for example, the PC 300) for cross-device split screen is configured with a plurality of display apparatuses, for example, a primary screen of the target device, an external secondary screen 1, and an external secondary screen 2, the tablet 100 may trigger a specified display apparatus of the PC 300 to display the cross-device split-screen window 14.

For example, as shown in FIG. 7B-1 to FIG. 7B-3, when it is detected that the user drags the configuration control 401 to the device identifier 303 of the PC 300, display screen identifiers corresponding to the plurality of display apparatuses of the PC 300 are displayed, for example, a display screen identifier 701 of the primary screen, a display screen identifier 702 of the secondary screen 1, and a display screen identifier 703 of the secondary screen 2. Dragging the configuration control 401 to any display screen identifier (for example, the display screen identifier 701) and then releasing the configuration control may trigger the tablet 100 to send a display instruction to the PC 300, to instruct the PC 300 to display the split-screen window 14 by using a display apparatus (that is, the secondary screen 1) corresponding to the display screen identifier 701.

In some embodiments, because display screen sizes of different display apparatuses of the PC 300 are different, split-screen window sizes corresponding to the plurality of display apparatuses are also different. When determining that the user selects the secondary screen 1, the tablet 100 may plan a layout of the split-screen window 14 based on a split-screen window size corresponding to the secondary screen 1, that is, determine a position of each split-screen area, and a display position and a display size of each application window in the split-screen area.

In some embodiments, the cross-device split-screen window 14 to which two tasks are added is used as an example. That the tablet 100 triggers, by using a display instruction, the PC 300 to display the cross-device split-screen window 14 may include the following three implementations.

Implementation 1: The tablet 100 runs the split-screen window 14 on a virtual display screen and projects the screen to the PC 300. The PC 300 displays and runs the split-screen window 14 based on projected content of the virtual display screen.

Referring to FIG. 8A-1 and FIG. 8A-2, when detecting that the user adds a task to the cross-device split-screen window 14, the tablet 100 creates a virtual display screen, where the virtual display screen is used to run the split-screen window 14. The tablet 100 adds the application window 1 of the tablet 100 and the application window 2 of the mobile phone 200 to the split-screen window 14, and may determine layout information of the split-screen window 14 based on the added application windows. The layout information indicates a size of the split-screen window 14, the position of each split-screen area in the split-screen window 14, and a display area of an application window in each split-screen area. The tablet 100 determines display content of the application window 1 in the split-screen window 14 based on task information of the application window 1 in the multitask data of the tablet 100, and determines display content of the application window 2 in the split-screen window 14 based on task information of the application window 2 in the multitask data of the mobile phone 200. After it is determined that the target device for cross-device split screen is the PC 300, the display content of the virtual display screen is projected to the PC 300 by using a display instruction 1, where the display instruction may include image data of the split-screen window 14 on the virtual display screen.

Implementation 2: The tablet 100 sends, to the PC 300, layout information of the split-screen window 14 and task information corresponding to a task in each split-screen area of the split-screen window 14. The PC 300 may display and run the split-screen window 14 based on the information.

Referring to FIG. 8B-1 to FIG. 8B-3, the display instruction sent by the tablet 100 to the PC 300 may include the layout information of the split-screen window 14, task information of the application window 1 of the tablet 100, and task information of the application window 2 of the mobile phone 200. The PC 300 may determine display content of the application window 1 based on the task information of the application window 1, and then may run the application window 1 in the split-screen area 1 of the split-screen window 14. The PC 300 may determine display content of the application window 2 based on the task information of the application window 2, and then may run the application window 2 in the split-screen area 2 of the split-screen window 14. In this way, the PC 300 can determine display content of the split-screen window 14, and display and run the split-screen window 14.

Implementation 3: The tablet 100 sends layout information of the split-screen window 14, task information of the application window 1 of the tablet 100, and the window identifier of the application window 2 of the mobile phone 200 to the PC 300. The PC 300 may display and run the split-screen window 14 based on the information.

Referring to FIG. 8C-1 to FIG. 8C-3, implementation 3 differs from implementation 2 in that the tablet 100 sends the window identifier of the application window 2 of the mobile phone 200 to the PC 300. The PC 300 and the mobile phone 200 are also mutually collaborative devices. The PC 300 may obtain the multitask data of the mobile phone 200. The PC 300 may obtain the task information of the application window 2 from the multitask data of the mobile phone 200 based on the window identifier of the application window 2. Specifically, for another implementation of implementation 3, refer to the related description of implementation 2. Details are not described herein again.

Embodiments of this application are not limited to the foregoing three implementations. Cross-device split screen from the control device (that is, the tablet 100) to the target device (that is, the PC 300) can also be implemented through other implementations.

For example, FIG. 9A to FIG. 9C show an example in which three tasks are added to the cross-device split-screen window by using the tablet 100, and the PC is triggered to display the cross-device split-screen window.

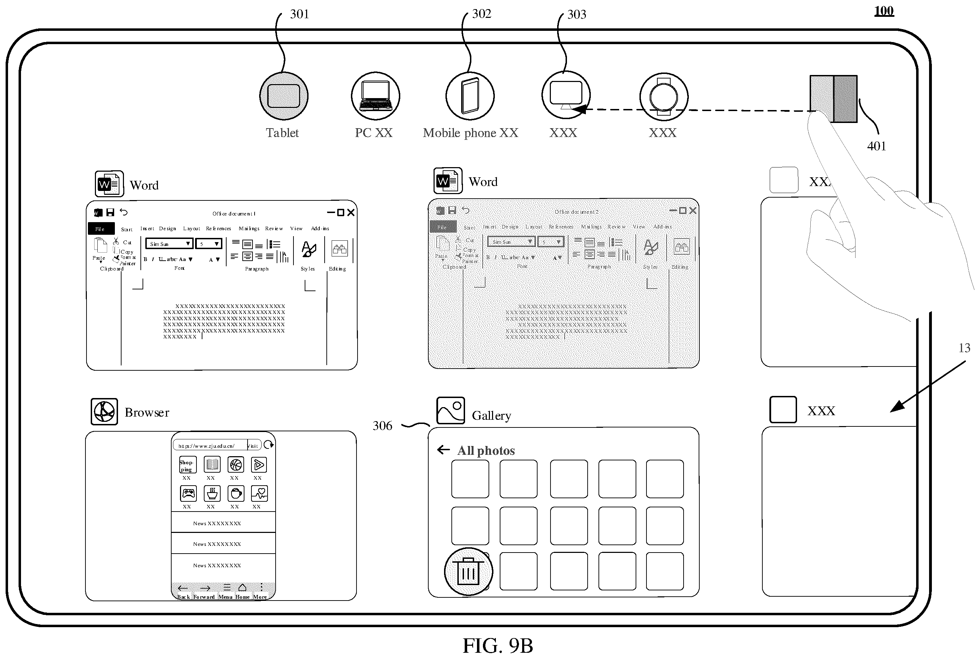

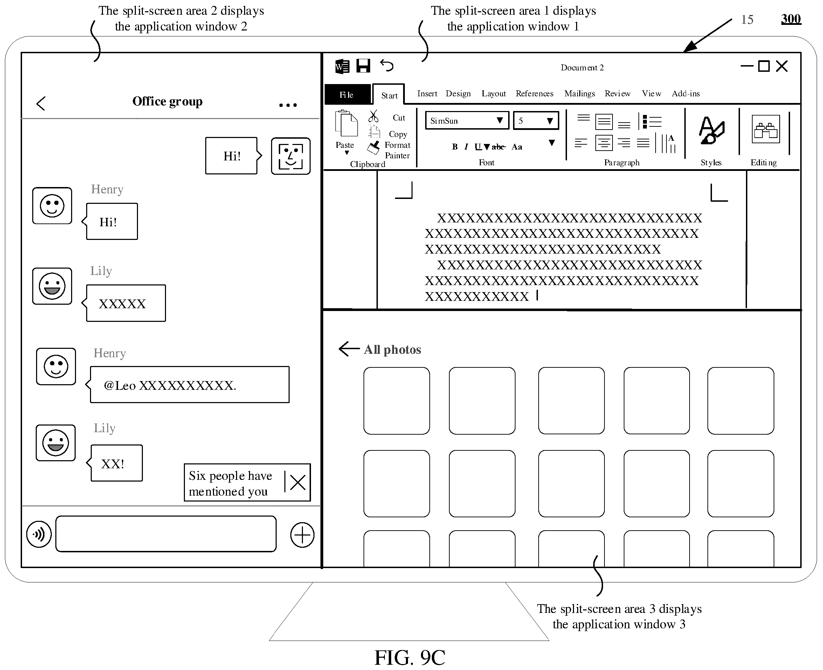

As shown in FIG. 9A and FIG. 9B, the user has added, to the split-screen window by using the configuration control 401, tasks corresponding to the task card 305 and the task card 309. After detecting that the user drags the task card 306 of the gallery application to the configuration control 401, the tablet 100 adds, to the cross-device split-screen window, a task corresponding to the task card 306 (that is, an application window 3 of the gallery application), and enables the configuration control 401 to present a display state 3, where the display state 3 indicates that three tasks have been added to the split-screen window. Optionally, the display state 3 further indicates positions of split-screen areas corresponding to the three tasks in the split-screen window. As shown in FIG. 9B and FIG. 9C, after the user drags the configuration control 401 to the device identifier 303 of the PC 300 and releases the configuration control, the tablet 100 triggers the PC 300 to display a cross-device split-screen window 15. The split-screen window 15 includes the application window 1 corresponding to the task card 305, the application window 2 corresponding to the task card 309, and the application window 3 corresponding to the task card 306.

In this embodiment of this application, when adding a plurality of tasks to the cross-device split-screen window by using the configuration control 401, the tablet 100 may automatically plan a display position of each task in the split-screen window based on a part or all of an original display size and an original aspect ratio of an added task in the source device and the display size and the aspect ratio of the split-screen window. In some embodiments, the user may further preview the split-screen window by using the tablet 100, and adjust the display position and display size of each task in the split-screen window.

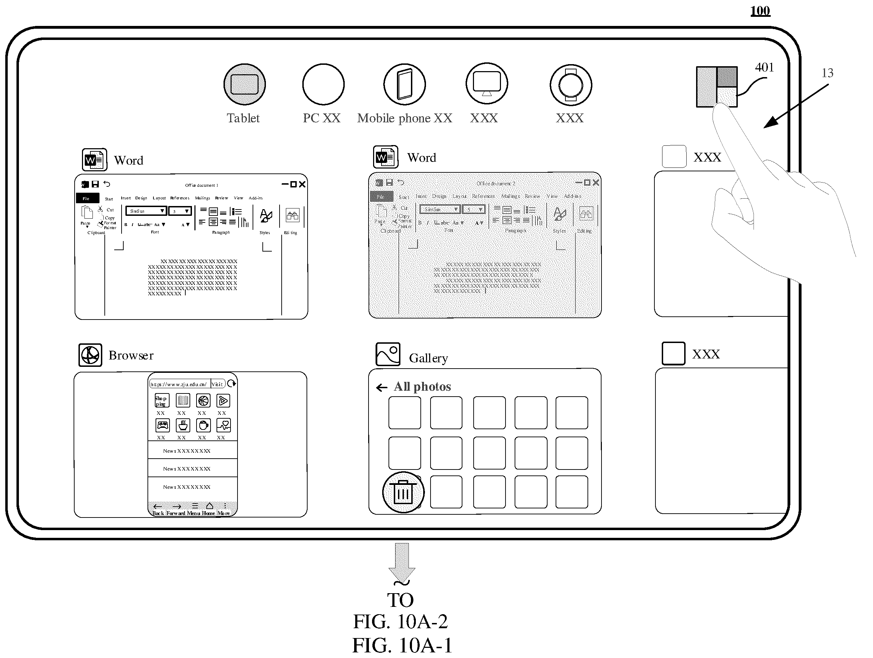

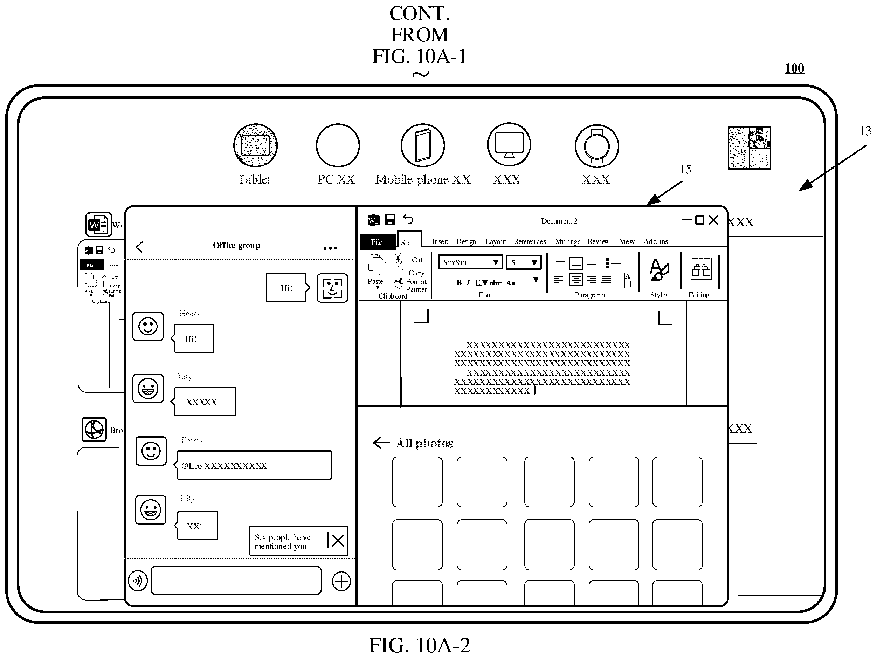

For example, the split-screen window 15 to which three tasks are added, as shown in FIG. 9C, is used as an example. FIG. 10A-1 to FIG. 10C show an example in which a display position of each task in the split-screen window is adjusted when the split-screen window 15 is previewed by using the tablet 100.

As shown in FIG. 10A-1 and FIG. 10A-2, when three application windows are added to the cross-device split-screen window, after detecting that the user taps the configuration control 401, the tablet 100 displays the cross-device split-screen window 15, where the split-screen window 15 includes the application window 1 of the tablet 100, the application window 2 of the mobile phone 200, and the application window 3 of the tablet 100.

In some embodiments, after previewing the split-screen window 15 displayed by the tablet 100, the user may drag any application window (for example, the application window 1) in the split-screen window 15, to adjust a display position of the application window in the split-screen window 15, and adaptively adjust a display position of another application window. In an implementation, when the user adjusts a display position of an application window in the split-screen window 15, the size of each application window remains unchanged. Based on the size of each application window in the split-screen window 15, four layout modes (that is, a layout mode 1 to a layout mode 4) shown in FIG. 10B may be used for the application windows in the split-screen window 15. A current layout mode of the split-screen window 15 is the layout mode 1. The user may adjust the layout mode 1 of the split-screen window 15 to another layout mode by dragging an application window in the split-screen window 15. It may be understood that if more tasks are added to the split-screen window, more split-screen areas are obtained by dividing the split-screen window, and more layout modes can be traversed by each application window in the split-screen window. When the split-screen window 15 is adjusted from the layout mode 1 to the layout mode 2, division of the split-screen areas in the split-screen window 15 does not change. When the split-screen window 15 is adjusted from the layout mode 1 to the layout mode 3 or the layout mode 4, division of the split-screen areas in the split-screen window 15 changes.

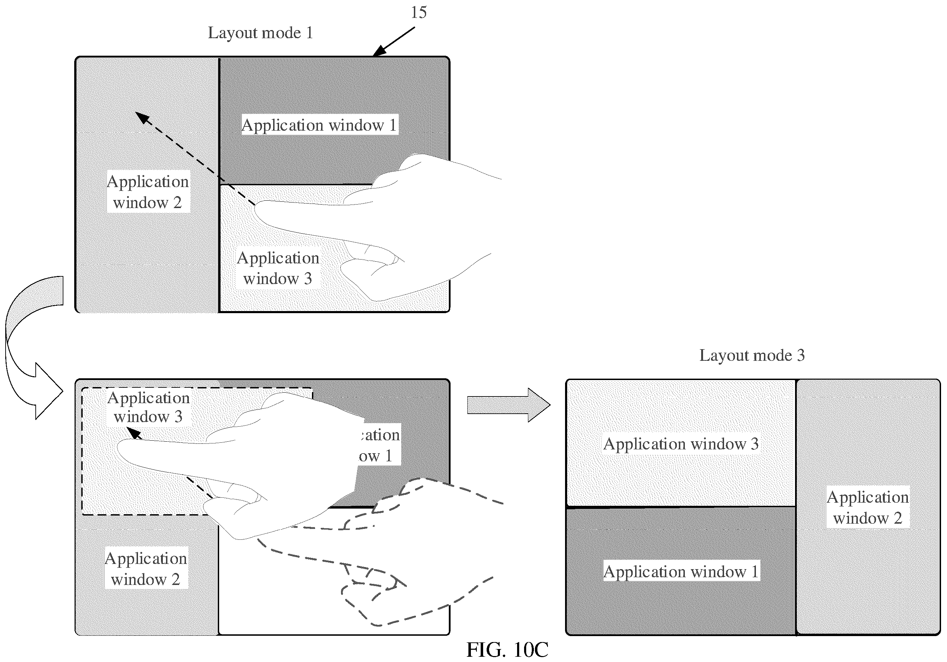

In some embodiments, as shown in FIG. 10C, after an input operation 1 (for example, touching and holding the application window 3) performed by the user on the split-screen window 15 is detected, the split-screen window 15 displayed by the tablet 100 enters a layout adjustment mode. In the layout adjustment mode, it is detected that the user drags the application window 3 to a position 1. The four layout modes are traversed, it is determined, based on the position 1, that the dragged application window 3 matches the application window 3 in the layout mode 3, and display positions of application windows in the split-screen window 15 are adjusted based on the layout mode 3. Optionally, that the application window 3 is dragged to the position 1 may mean that a preset point (for example, a central point) in the application window 3 is dragged to the position 1. When a distance between the preset point of the application window 3 in the layout mode 3 in the four layout modes and the position 1 is shortest, it is determined that the dragged application window 3 matches the application window 3 in the layout mode 3.

For example, as shown in FIG. 10D-1 to FIG. 10D-3, when detecting that the user touches and holds the application window 3 and then drags the application window 3 upward, the tablet 100 adjusts display positions of application windows in the split-screen window 15 based on the layout mode 2 shown in FIG. 10B and a position to which the application window 3 is dragged. Visually, after the application window 3 in a split-screen area 3 is dragged to the split-screen area 1 in which the application window 1 is located, the application window 3 is displayed in the split-screen area 1, and the application window 1 in the split-screen area 1 is pushed into the split-screen area 3.

Embodiments of this application are not limited to the display position adjustment modes described in FIG. 10A to FIG. 10C. After it is detected that the user drags the application window, the display position of each application window can also be adjusted in another adjustment mode.

For example, the split-screen window 15 to which three tasks are added, as shown in FIG. 9C, is used as an example. FIG. 0D-1 to FIG. 10F show an example in which a display size of each task in the split-screen window is adjusted when the split-screen window is previewed by using the tablet 100.

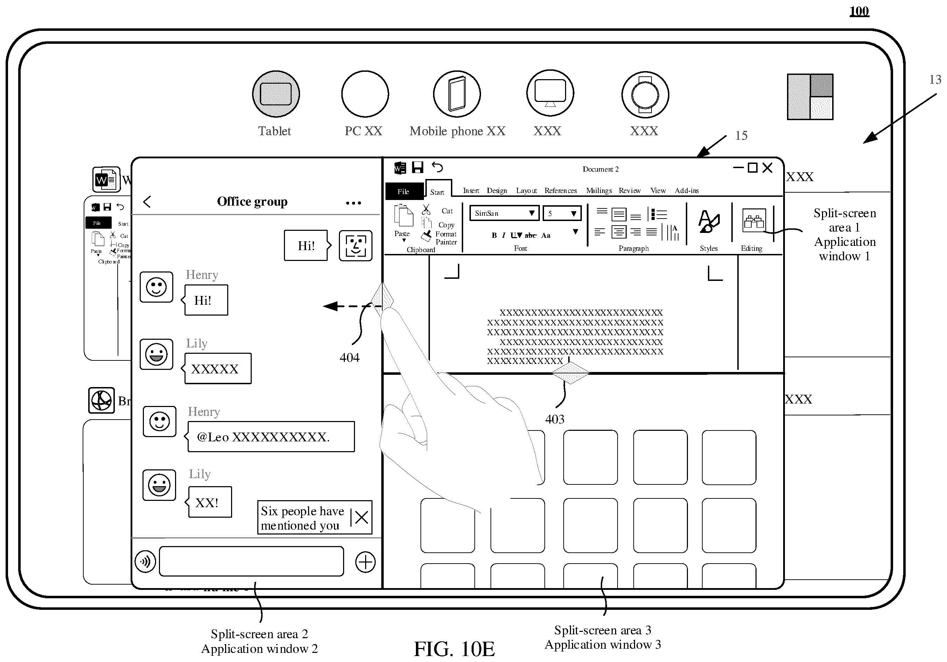

In some embodiments, at least one size adjustment control is provided in the split-screen window 15. The size adjustment control is used to adjust a size of each split-screen area in the split-screen window 15, and is also used to adjust a size of an application window displayed in each split-screen area. As shown in FIG. 10E, the split-screen area 1 in which the application window 1 is located and the split-screen area 3 in which the application window 3 is located are separated by using a horizontal division line, where the horizontal division line is parallel to a horizontal edge of the split-screen window, and a size adjustment control 403 is provided on the horizontal division line. When detecting that the user drags the adjustment control 403 upward, the tablet 100 may move the horizontal division line upward as a finger of the user moves, to reduce the vertical edge length of the split-screen area 1 and increase a vertical edge length of the split-screen area 3. When detecting that the user drags an adjustment control 404 downward, the tablet 100 may move the horizontal division line downward as a finger of the user moves, to increase the vertical edge length of the split-screen area 1 and reduce the vertical edge length of the split-screen area 3.

In some embodiments, when it is detected that the user drags the adjustment control 403 to the top of the split-screen window (for example, a distance between the adjustment control 403 and the top is less than a preset distance), a vertical length of the split-screen area 1 is reduced to zero (that is, the split-screen area 1 disappears), and the tablet 100 removes the application window 1 displayed in the split-screen area 1. Similarly, when the user drags the adjustment control 403 to the bottom of the split-screen window, a vertical length of the split-screen area 3 is reduced to zero, and the tablet 100 removes the application window 3 displayed in the split-screen area 3.

As shown in FIG. 10E, between the split-screen area 2 in which the application window 2 is located and the split-screen area 1 in which the application window 1 is located, and between the split-screen area 2 and the split-screen area 3, two split-screen areas are separated by using a vertical division line, and a size adjustment control 404 may also be provided on the vertical division line. The vertical division line is parallel to a vertical edge (that is, a side edge) of the split-screen window. When detecting that the user drags the adjustment control 403 left, the tablet 100 may move the vertical division line left as a finger of the user moves, to reduce the horizontal edge length of the split-screen area 2 and increase horizontal edge lengths of the split-screen area 3 and the split-screen area 1. When detecting that the user drags the adjustment control 404 right, the tablet 100 may move the vertical division line right as a finger of the user moves, to increase the horizontal edge length of the split-screen area 2 and reduce the horizontal edge lengths of the split-screen area 3 and the split-screen area 1.

In some embodiments, when it is detected that the user drags the adjustment control 404 to the left side of the split-screen window, the horizontal edge length of the split-screen area 2 is reduced to zero, and the tablet 100 removes the application window 2 displayed in the split-screen area 2. Similarly, when the user drags the adjustment control 404 to the right side of the split-screen window, the horizontal edge lengths of the split-screen area 1 and the split-screen area 3 are reduced to zero, and the tablet 100 removes the application windows displayed in the split-screen area 1 and the split-screen area 3.

The application window 1 displayed in the split-screen area 1 is used as an example. If the aspect ratio of the application window 1 is adjustable, when the vertical edge length or the horizontal edge length of the split-screen area 1 changes, the aspect ratio of the application window 1 is adjusted, so that the aspect ratio is equal to or close to the aspect ratio of the split-screen area 1 and that the application window 1 adapts to the adjusted split-screen area 1. If the aspect ratio of the application window 1 is unadjustable, when the vertical edge length or horizontal edge length of the split-screen area 1 changes, the application window 1 is scaled up or down as a whole, so that the application window 1 adapts to the adjusted split-screen area 1.

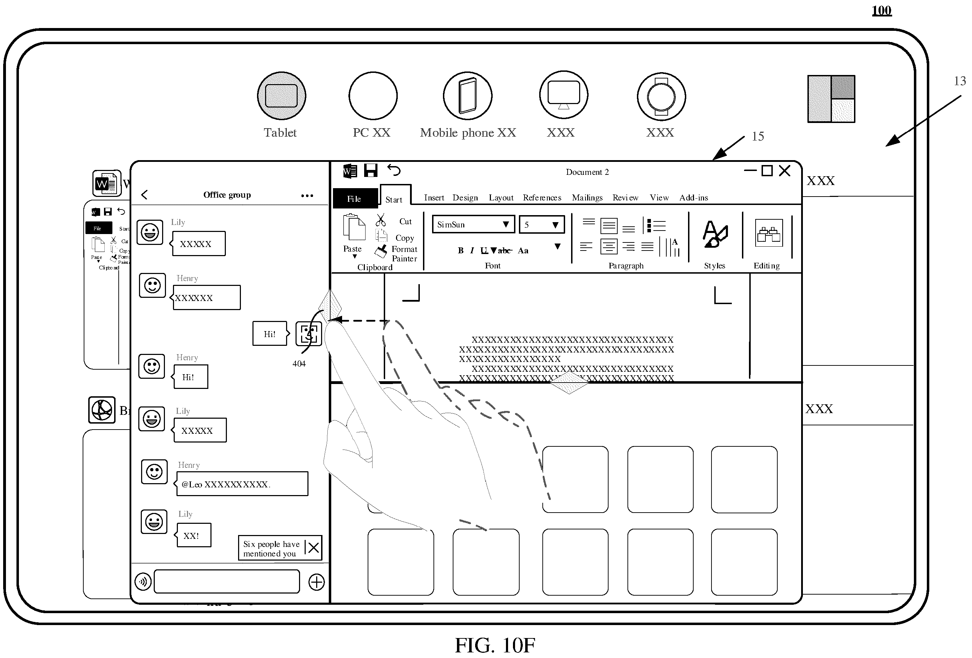

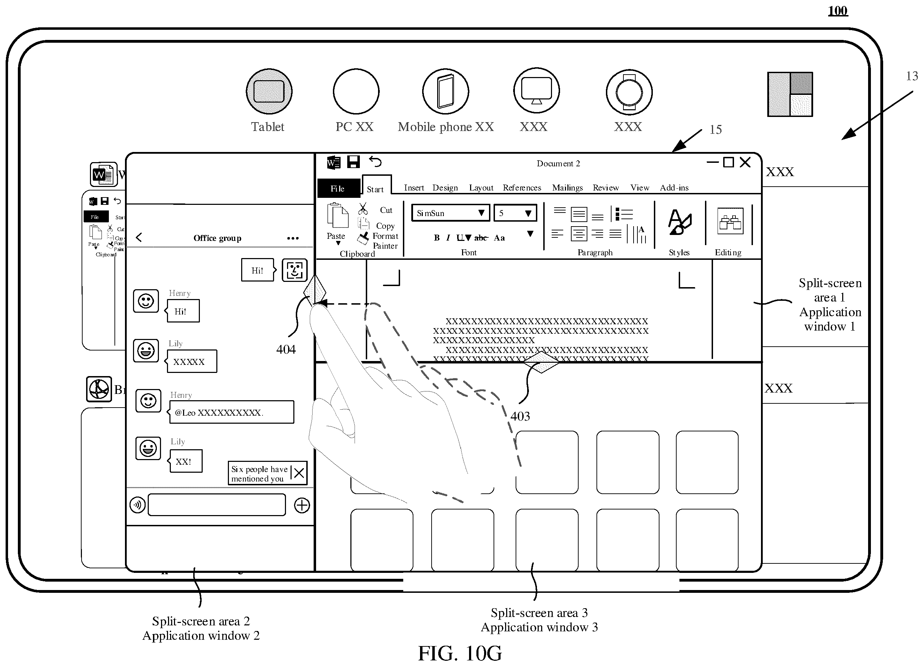

For example, as shown in FIG. 10E and FIG. 10F, the aspect ratio of the application window 2 is adjustable. When the horizontal edge length of the split-screen area 2 is reduced, the aspect ratio of the application window 2 is reduced (that is, the vertical edge length of the application window 2 is increased after the application window 2 is scaled down as a whole based on the horizontal edge length of the split-screen area 2), so that the aspect ratio of the application window 2 is equal to the aspect ratio of the split-screen area 2 and that the application window 2 adapts to the adjusted split-screen area 2. As shown in FIG. 10E and FIG. 10G, the aspect ratio of the application window 2 is unadjustable. When the horizontal edge length of the split-screen area 2 is reduced, the application window 2 is scaled down as a whole, so that the application window 2 adapts to the adjusted split-screen area 2. In this case, after the adjustment, the aspect ratios of the application window 2 and the split-screen area 2 are usually different, and there is a blank area in the split-screen area 2.

Embodiments of this application are not limited to the display size adjustment modes described in FIG. 10E and FIG. 10F. The display size of each application window can also be adjusted in another adjustment mode.

Similarly, after the PC 300 displays the cross-device split-screen window 15, the user may also adjust a display position and a display size of each task in the split-screen window 15 by using the split-screen window 15 displayed by the PC 300. For details, refer to related descriptions of the tablet 100. Details are not described herein again.

In some embodiments, the cross-device split-screen window 15 is used as an example. After the PC 300 displays the split-screen window 15, the user may control any application window in the split-screen window 15 on the PC 300, to implement a function of the application window in the source device.

For the foregoing different implementations (that is, the foregoing implementation 1 to implementation 3) of cross-device split screen, principles of reverse control and management of the split-screen window 15 may also be different. The following uses the application window 2 in the split-screen window 15 as an example for description.

For example, as shown in FIG. 11A-1 and FIG. 11A-2, the application window 2 of the instant messaging application in the split-screen window 15 includes a chat input box 801. After detecting an input operation 2, the PC 300 switches a display state of the chat input box 801 to an editable state, and displays a virtual keyboard 802 in the application window 2. The input operation 2 is a click operation on the chat input box 801.

In some embodiments, the foregoing implementation 1 (that is, the virtual display screen of the tablet 100 is projected to the PC 300) is used for cross-device split screen. The PC 300 detects the input operation 2 performed on coordinates 1 of the display screen; after determining that the coordinates 1 are in a display area of the split-screen window 15, the PC 300 converts relative coordinates 2 of the input operation 2 in the split-screen window 15; and the PC 300 sends operation information (such as an operation type and operation duration) of the input operation 2 and the relative coordinates 2 to the tablet 100. The virtual display screen of the tablet 100 determines, based on the operation information and the relative coordinates 2 of the input operation 2 and a current user interface layout of the application window 2, that the input operation 2 is a tap operation performed on the chat input box 801. In response to the tap operation, the virtual display screen of the tablet 100 updates display content of the application window 2 in the split-screen window 15, that is, switches the display state of the chat input box 801 to the editable state, and displays the virtual keyboard 802 in the application window 2. The tablet 100 projects updated display content of the virtual display screen to the PC 300 in real time, so that the PC 300 displays the updated split-screen window 15. In an implementation, the tablet 100 may further synchronize updated task information of the application window 2 to the mobile phone 200, to ensure that information synchronization can be maintained between the mobile phone 200 and the application window 2 running on the tablet 100.

In an implementation, when the PC 300 displays the split-screen window 15 in full screen, the coordinates 1 of the input operation 2 on the display screen of the PC 300 are the same as the relative coordinates 2 of the input operation 2 on the split-screen window 15.

In some embodiments, the foregoing implementation 2 or implementation 3 is used for cross-device split screen (that is, the layout information of the split-screen window and the task information of the application window 2 are obtained, and the PC 300 runs the application window 2 in the split-screen area 2 of the split-screen window 15). The PC 300 detects the input operation 2 performed on the coordinates 1 of the display screen. After determining that the coordinates 1 are in the display area of the split-screen window 15, the PC 300 converts the relative coordinates 2 of the input operation 2 in the split-screen window 15. The PC 300 determines, based on the operation information and the relative coordinates 2 of the input operation 2 and the current user interface layout of the application window 2, that the input operation 2 is a tap operation performed on the chat input box 801. In response to the tap operation, the PC 300 updates the display content of the application window 2 in the split-screen window 15, that is, switches the display state of the chat input box 801 to the editable state, and displays the virtual keyboard 802 in the application window 2. In an implementation, the PC 300 may further directly synchronize the updated task information of the application window 2 to the mobile phone 200 or synchronize the updated task information to the mobile phone 200 by using the tablet 100, to ensure that information synchronization can be maintained between the mobile phone 200, the tablet 100, and the application window 2 running on the PC 300.

In some embodiments, the cross-device split-screen window 15 is used as an example. After displaying the split-screen window, the PC 300 may manage an application window in the split-screen window. For example, the application window 1 in the split-screen window 15 is used as an example. The application window 1 is displayed in full screen in the split-screen window 15. After the display in full screen, the display of the application window 1 in split screen is restored in the split-screen window 15, and the application window 1 in the split-screen window 15 is closed.

For example, FIG. 11B to FIG. 11G show some examples in which the PC 300 manages an application window in the split-screen window 15.

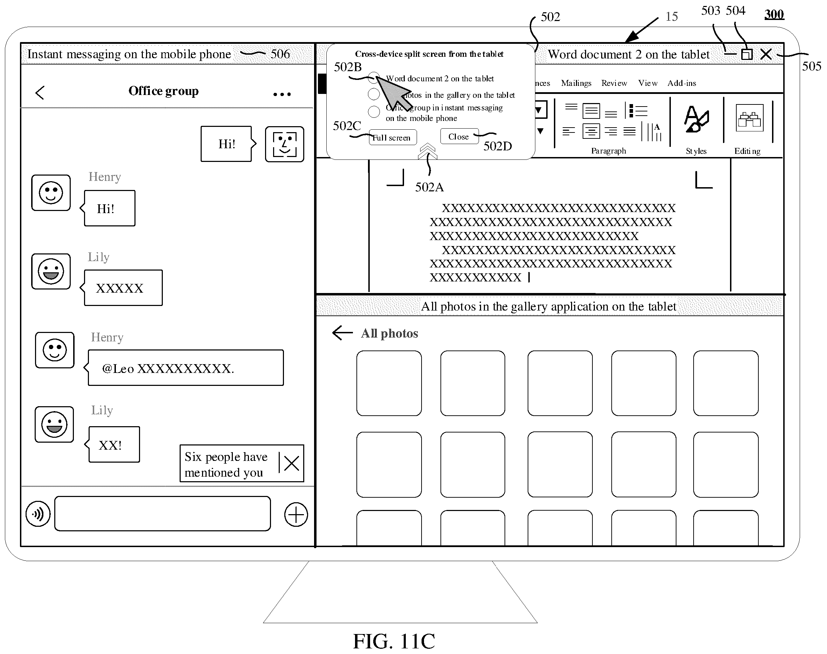

As shown in FIG. 11B, the split-screen window 15 displayed by the PC 300 further includes a trigger control for a management mode. The trigger control may be presented as a drop-down indication bar 501 on the top of the split-screen window 15, or may be displayed in another form at another position in the split-screen window 15. As shown in FIG. 11B and FIG. 11C, after detecting an input operation of clicking the drop-down indication bar 501 by the user, the PC 300 displays a management box 502, a minimization control 503, a scale-down control 504, and a close control 505 for the split-screen window 15, and description information corresponding to each application window, for example, description information 506 corresponding to the application window 2. The description information 506 may indicate a source device of the application window 2 and an application to which the application window 2 belongs. The minimization control 503 is used to hide the split-screen window 15. The scale-down control 504 is used to scale down the split-screen window 15. The close control 505 is used to close the split-screen window 15 and stop cross-device split screen.

As shown in FIG. 11C, the management box 502 may include a pull-up indicator 502A. When detecting that the user clicks the pull-up indicator 502A, the PC 300 may stop displaying the management box 502, and return to the split-screen window 15 shown in FIG. 11B.

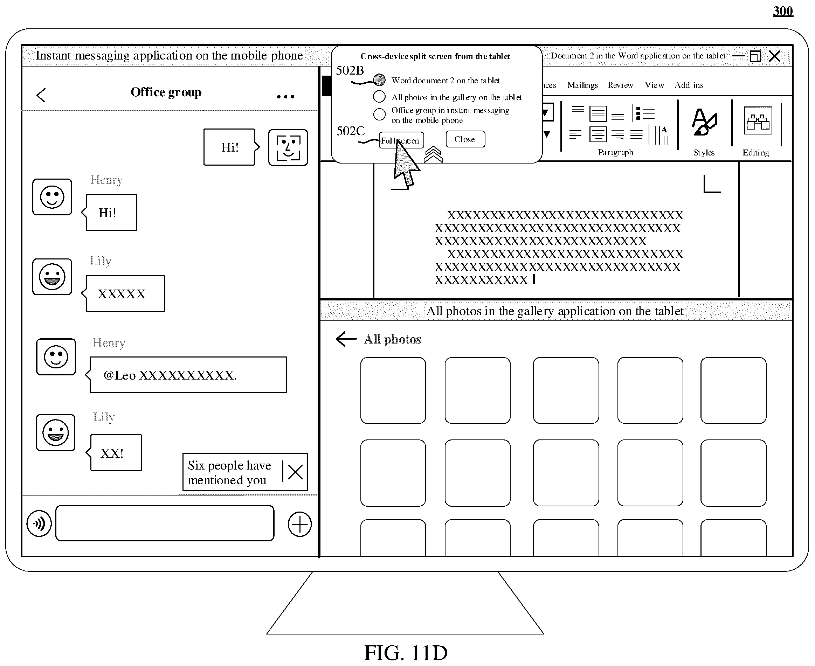

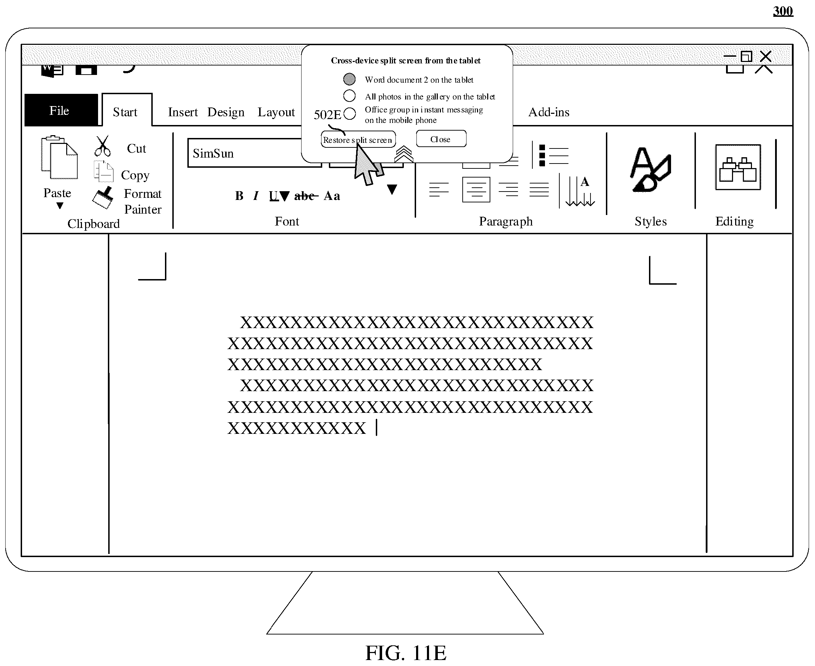

As shown in FIG. 11C, the management box 502 may further include an option corresponding to each application window, for example, an option 502B corresponding to the application window 1 of the Word application, a full-screen control 502C, and a close control 502D. As shown in FIG. 11C and FIG. 11D, when detecting an input operation of clicking the option 502B corresponding to the application window 1, the PC 300 switches the option 502B from an unselected state to a selected state. As shown in FIG. 11D and FIG. 11E, when the option 502B of the application window 1 is selected, after detecting an input operation of clicking the full-screen control 502C, the PC 300 displays the application window 1 of the Word application in full screen in the split-screen window 15, and switches the full-screen control 502C to a restore split screen control 502E. The restore split screen control 502E is used to restore the application window 1 displayed in full screen in the split-screen window 15 to the application windows displayed in split screen as shown in FIG. 11D.

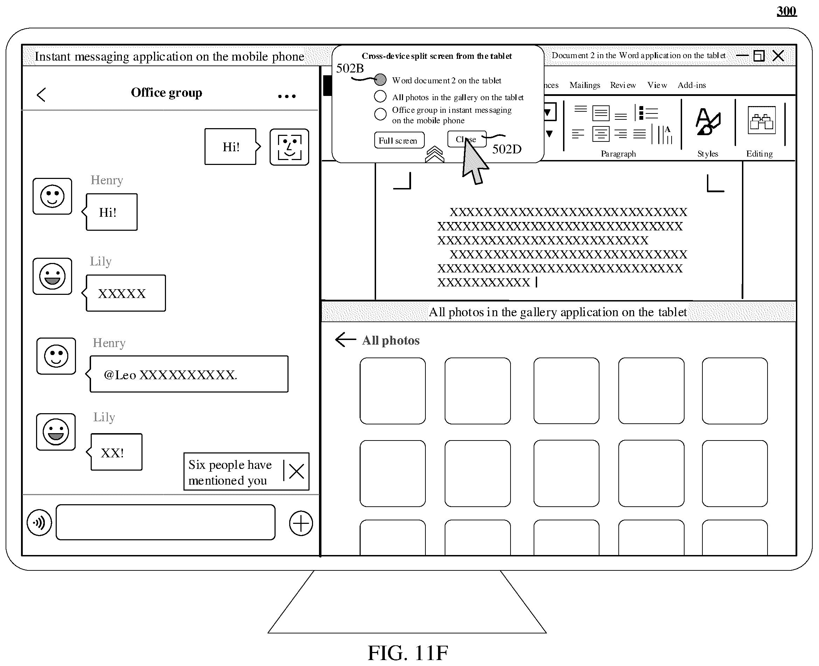

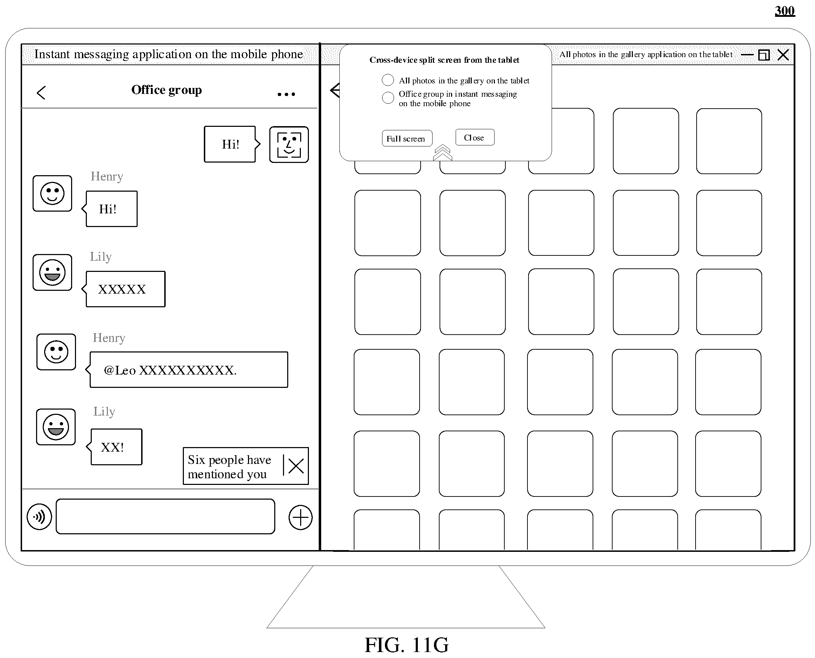

As shown in FIG. 11F and FIG. 11G, when the option 502B of the application window 1 is selected, after detecting an input operation of clicking the close control 502D, the PC 300 closes the application window 1 in the split-screen window 15, re-divides the split-screen window 15 into two split-screen areas, and adaptively adjusts display areas in the split-screen areas for other application windows in the split-screen window 15.

In some embodiments, cross-device split screen is not limited to cross-device split screen for a recently run task of the tablet or the collaborative device. Cross-device split screen may also be performed for a task in Favorites of the tablet or the collaborative device and a preset application window in an application installed on the tablet or the collaborative device. The following uses the mobile phone 200 as an example to describe another task of the mobile phone 200 for which cross-device split screen can be performed.

In some embodiments, the preset application window in the application may include a home page of the application, an application window with highest historical running frequency in the application within preset duration, or an application window with longest historical running duration in the application within preset duration. The area 2 of the multitask management interface 13 may further display an application icon of the application of the currently selected mobile phone 200. The preset application window of the application may be added to the cross-device split-screen window by dragging the application icon of the application to the configuration control 401, so that the tablet 100 can trigger the target device (for example, the PC 300) to display the preset application window in cross-device split screen.

For example, an example in which the preset application window is the home page is used. FIG. 12A to FIG. 12D show an example of cross-device split screen for the home page of the application.

As shown in FIG. 12A, the user has added the application window 2 of the instant messaging application to the cross-device split-screen window by using the configuration control 401; the device identifier 302 of the mobile phone 200 displayed on the multitask management interface 13 is selected; and the area 2 of the multitask management interface 13 further includes a control 601. After detecting that the user taps the control 601, the tablet 100 displays, in the area 2, application icons of a plurality of applications on the mobile phone 200, for example, an application icon 602 of a video application. The application icon 602 may be considered as a task identifier corresponding to a home page of the video application.

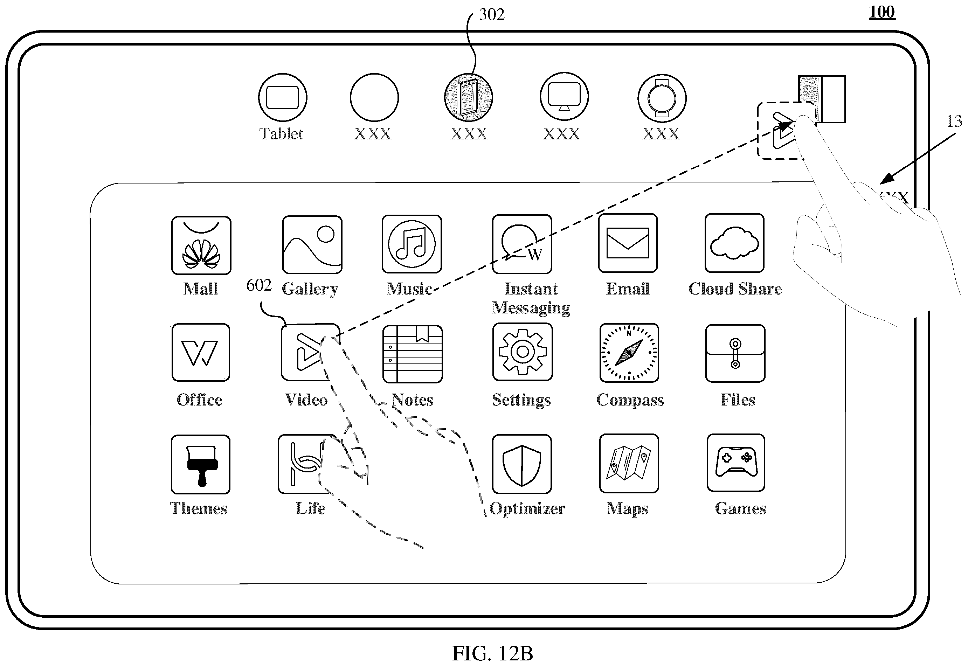

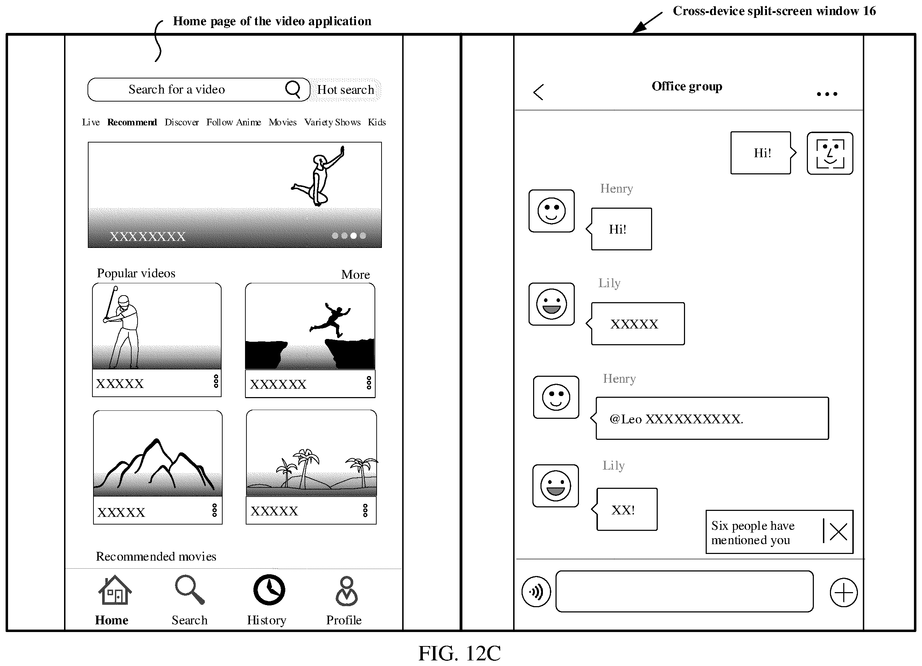

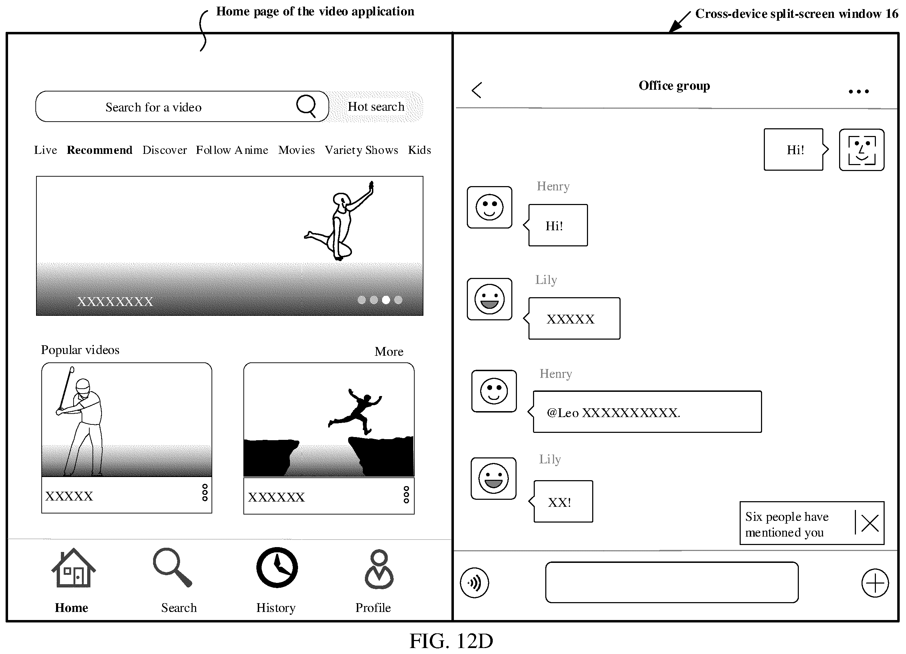

As shown in FIG. 12A and FIG. 12B, similarly to the foregoing task card, when detecting that a slide operation of touching and holding the application icon 602 and then dragging the application icon 602 by the user, the tablet 100 displays the application icon 602 moving along with a finger of the user; and after detecting that the application icon 602 is dragged to the configuration control 401, the tablet 100 adds the home page of the video application to a cross-device split-screen window 16. As shown in FIG. 12C or FIG. 12D, the cross-device split-screen window 16 includes the home page of the video application. In FIG. 12C, the home page of the video application is displayed based on an original aspect ratio. In FIG. 12D, the aspect ratio of the home page of the video application is adjustable, and the tablet 100 adjusts the aspect ratio of the home page of the video application, so that the home page of the video application is displayed based on an aspect ratio of a split-screen area in which the home page of the video application is located.

In some embodiments, a task in Favorites of the mobile phone 200 includes a task manually added by the user to Favorites and/or a task automatically added by the device to Favorites. A task in Favorites may include a user interface of any application installed on the mobile phone 200. For example, the user interface is an activity page or a Tab page. The area 2 of the multitask management interface 13 may further display a task card corresponding to the task in Favorites of the currently selected mobile phone 200. The task in Favorites may be added to the cross-device split-screen window by dragging the task card corresponding to the task in Favorites to the configuration control 401, and then the tablet 100 may trigger the target device (for example, the PC 300) to display the task in Favorites in cross-device split screen.

The task manually added to Favorites may refer to a user interface that is added to Favorites by using a specific operation when the user browses a user interface of an application of interest on the mobile phone 200. In an implementation, the mobile phone 200 stores a multitask queue 3 used to maintain task information of a task (for example, a task 1 in Favorites) manually added to Favorites. Each time the mobile phone 200 exits the task 1 in Favorites, the mobile phone 200 may automatically obtain and update the task information of the task 1 in Favorites in the multitask queue 3. The task information may include an interface snapshot of the task 1 in Favorites.

The task automatically added to Favorites may be a frequently used task determined by the mobile phone 200 based on historical usage data of each application window, for example, M tasks with highest historical running frequency within the preset duration, and/or M tasks with longest historical running duration within the preset duration, where M is a positive integer. In an implementation, the mobile phone 200 stores a multitask queue 4 used to maintain task information of tasks automatically added to Favorites (for example, a task 2), and the mobile phone 200 records historical usage data of a task that has been run by the mobile phone 200 within the preset duration (for example, five days). Each time the mobile phone 200 exits a task (for example, the task 2), the mobile phone 200 determines, based on historical usage data of each task, whether the task 2 is a frequently used task. If the task 2 is a frequently used task, the mobile phone 200 obtains task information of the task 2, and adds the task 2 to the multitask queue 4 of the tasks automatically added to Favorites. The task information of the task 2 includes an interface snapshot of the task.

For example, FIG. 13A to FIG. 13C show an example of cross-device split screen for a task in Favorites.

As shown in FIG. 12A and FIG. 13A, the device identifier 302 of the mobile phone 200 displayed on the multitask management interface 13 is selected, and the area 2 of the multitask management interface 13 further includes the control 601. After detecting that the user taps the control 601, the tablet 100 displays application icons of a plurality of applications of the mobile phone 200 in the area 2, for example, the application icon 602 of the video application. When the task in Favorites of the mobile phone 200 includes at least one task of the video application, a Favorites marker 603 is displayed on the application icon 602 of the video application. In an implementation, when the user drags the application icon 602 of the video application to the configuration control 401, the tablet 100 may be triggered to add the home page of the video application to the cross-device split-screen window; and when the user taps the application icon 602, the tablet may be triggered to display the task in Favorites of the video application of the mobile phone 200.

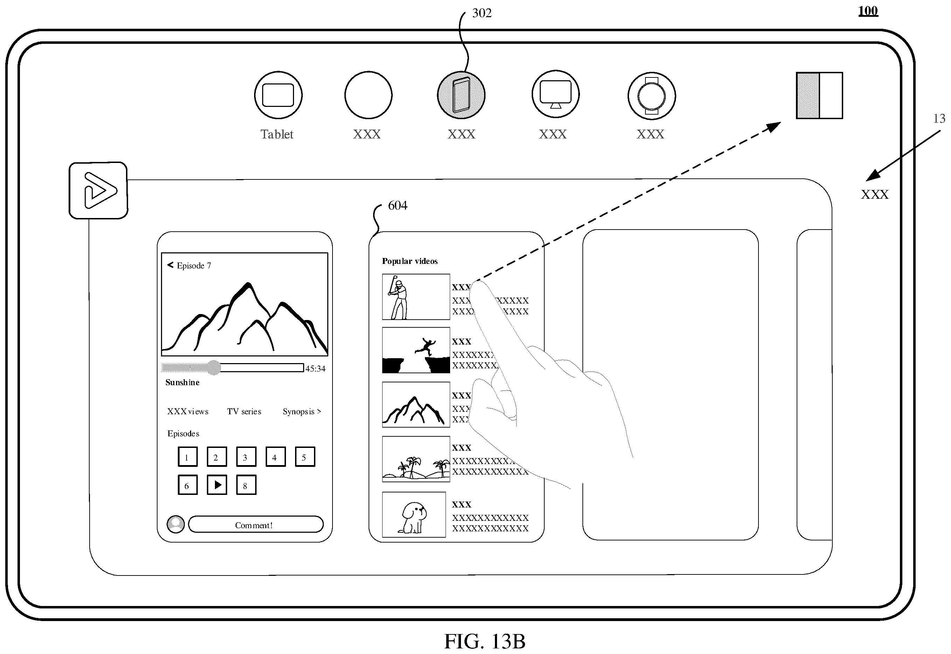

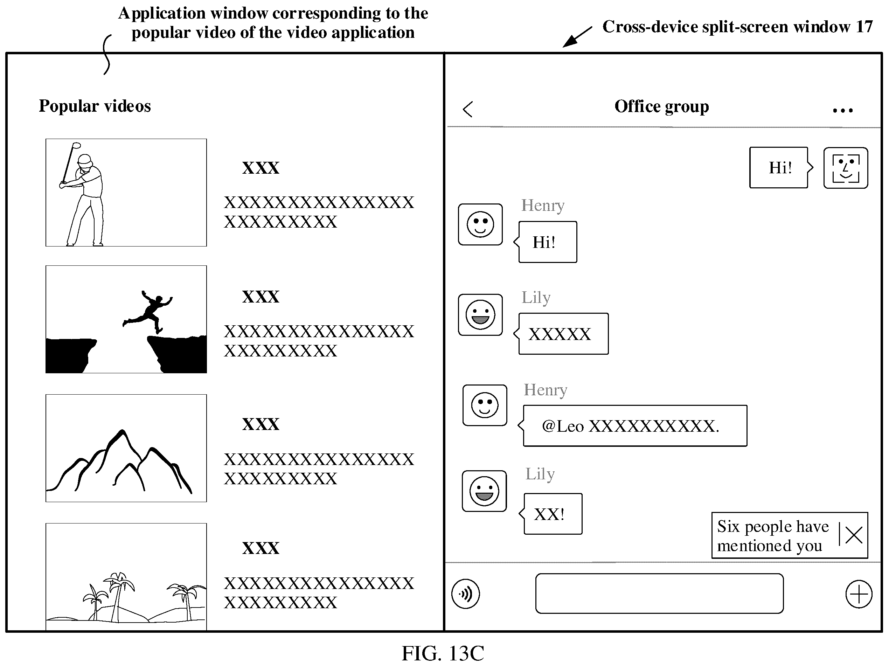

As shown in FIG. 13A and FIG. 13B, when detecting that the user taps the application icon 602, the tablet 100 displays a task card corresponding to at least one task in Favorites of the video application of the mobile phone 200, for example, a task card 604. Similarly, as shown in FIG. 13B and FIG. 13C, when detecting that the user touches and holds the task card 604 and then drags the task card 604 to the configuration control 401, the tablet 100 adds, to a cross-device split-screen window 17, the task in Favorites corresponding to the task card 604 (that is, an application window corresponding to a popular video of the video application).

For example, FIG. 14A to FIG. 14C show another example in which a task in Favorites and an application icon are viewed in the area 2.

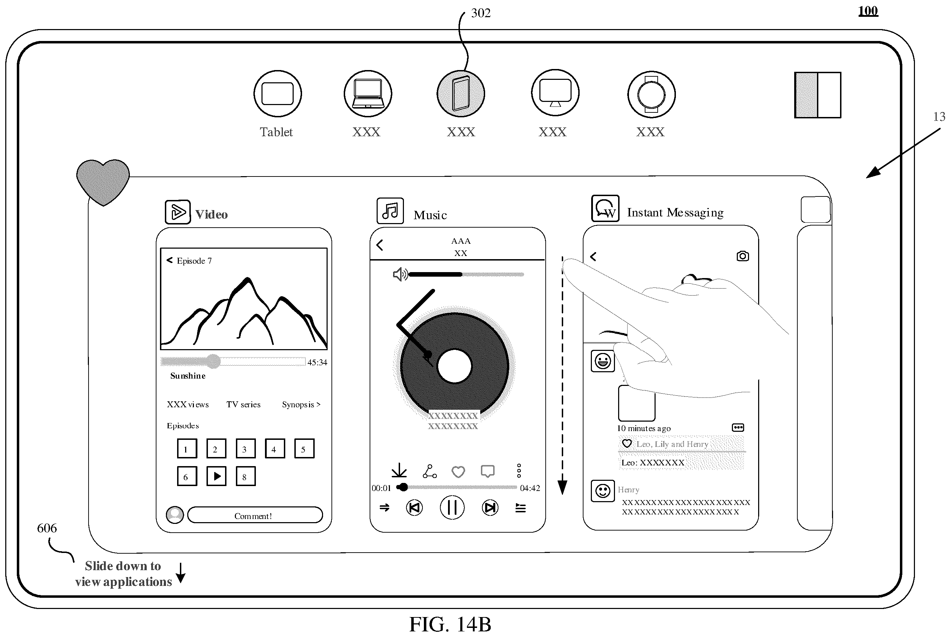

As shown in FIG. 14A, when the multitask management interface 13 displays a recent run task of the selected device (the mobile phone 200) in the area 2, prompt information 605 may be displayed, where the prompt information 605 is used to prompt the user to view a task in Favorites by performing a slide-down operation. As shown in FIG. 14A and FIG. 14B, when detecting the slide-down operation of the user in the area 2, the tablet 100 displays, in the area 2, a task card corresponding to the task in Favorites of the mobile phone 200. An arrangement order of task cards corresponding to tasks in Favorites in the area 2 may be determined based on one or more factors such as a recent use time, historical running frequency, and historical running duration of the tasks in Favorites. This is not specifically limited herein. Due to a limited screen size, when task cards corresponding to all tasks in Favorites of the mobile phone 200 cannot be displayed, the user may view more task cards corresponding to the tasks in Favorites by performing a slide-left/slide-left operation in the area 2.

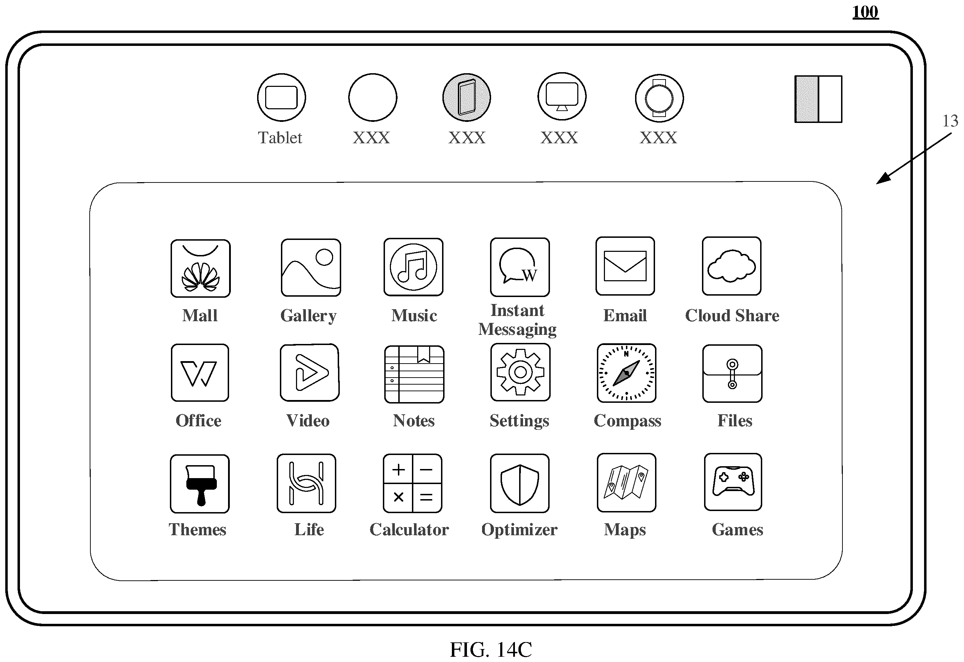

As shown in FIG. 14B, when displaying, in the area 2, the task card corresponding to the task in Favorites of the selected device (the mobile phone 200), the multitask management interface 13 may display prompt information 606, where the prompt information 606 is used to prompt the user to view application icons of applications of the mobile phone 200 by performing a slide-down operation. As shown in FIG. 14B and FIG. 14C, when detecting the slide-down operation performed by the user in the area 2, the tablet 100 displays, in the area 2, the application icons of the applications installed on the mobile phone 200. Due to the limited screen size, when the application icons of all the applications of the mobile phone 200 cannot be displayed, the user may view application icons of more applications by performing a slide-left/left operation in the area 2.

In this embodiment of this application, the tablet 100 may obtain the multitask data of the tablet 100 and each collaborative device (for example, the mobile phone 200). The tablet 100 may display, in the area 2 of the multitask management interface 13 based on the multitask data of the mobile phone 200, a task identifier (for example, a task card or an application icon) corresponding to a preset task in the mobile phone 200, to perform cross-device split screen for the preset task of the mobile phone 200 by using the task identifier. The multitask data of the mobile phone 200 may include a part or all of the multitask queue 2 corresponding to the recently run task, the multitask queue 3 corresponding to the task manually added to Favorites, the multitask queue 4 corresponding to the task automatically added to Favorites, and a task list corresponding to preset application windows of installed applications.

This application provides a cross-device split-screen method, applied to a first terminal. The first terminal has at least one collaborative device, and the at least one collaborative device includes a third terminal. The method includes but is not limited to steps S101 to S104.

S101: The first terminal displays a task management interface, where the task management interface includes a device identifier of the first terminal and a device identifier corresponding to each of the at least one collaborative device, a display state of the device identifier includes a selected state and an unselected state, the selected state indicates that a terminal corresponding to the device identifier is selected, and a first area of the task management interface is used to display a task identifier corresponding to each of at least one preset task of a currently selected terminal.

For example, the first terminal may be the foregoing terminal 100 (for example, the tablet 100), and the third terminal may be the foregoing terminal 300 (for example, the PC 300). The task management interface may be the foregoing multi-device task management interface 13. The first area may be the foregoing area 2, and the task identifier corresponding to the task may be the foregoing task card or application identifier.

In an implementation, the preset task includes a part or all of the following: a recently run task, a preset application window in an installed application, and a task in Favorites, where the recently run task includes a background run task and/or a foreground run task; and the task in Favorites includes a part or all of the following: a task manually added by the user to Favorites, M tasks with longest historical running duration within preset duration, and M tasks with highest historical running frequency within the preset duration, where M is a positive integer.

In an implementation, the preset application window includes a home page of the application, an application window with highest historical running frequency in the application within the preset duration, or an application window with longest historical running duration in the application within the preset duration.

In an implementation, the preset task includes the recently run task, a task identifier corresponding to the recently run task is a task card, and the task card includes an application identifier of an application to which the recently run task belongs and an interface snapshot taken when the recently run task is switched to the background.

S102: The first terminal receives a first input operation performed on a task identifier of a first task in the first area, and adds the first task as a task in a split-screen window in response to the first input operation, where the first task is a task of any one of the first terminal and the at least one collaborative device.

S103: The first terminal receives a second input operation performed on a task identifier of a second task in the first area, and adds the second task as a task in the split-screen window in response to the second input operation, where the second task is a task of any one of the first terminal and the at least one collaborative device.

In an implementation, the task management interface further includes a first control; the first input operation includes a slide operation of touching and holding the task identifier of the first task and then dragging the task identifier of the first task to the first control; and the second input operation includes a slide operation of touching and holding the task identifier of the second task and then dragging the task identifier of the second task to the first control. The first input operation and the second input operation may alternatively be other operations, for example, touch-down operations. This is not specifically limited in embodiments of this application.

For example, referring to related embodiments in FIG. 5A to FIG. 5D, the first control may be the foregoing configuration control 401; the first task may be the application window 2 of the instant messaging application of the collaborative device (that is, the mobile phone 200), and the task identifier corresponding to the application window 2 may be the task card 309; and the second task may be the application window 1 of the Word application of the local device (that is, the tablet 100), and the task identifier corresponding to the application window 1 may be the task card 305. Alternatively, the first task may be the foregoing application window 1, and the second task may be the foregoing application window 2.

For example, referring to related embodiments in FIG. 9A to FIG. 9C, the first control may be the foregoing configuration control 401, and the first task and the second task may be any two of the foregoing application window 2, the foregoing application window 1, and the application window 3 of the gallery application of the local device (that is, the tablet 100).

In an implementation, the at least one collaborative device further includes a second terminal, the first task is a task of the second terminal, and before the first terminal receives the second input operation performed on the task identifier of the first task in the first area, the method further includes: The first terminal receives a fourth input operation performed on a device identifier of the second terminal; and the first terminal switches a display state of the device identifier of the second terminal from an unselected state to a selected state in response to the fourth input operation, where the first area is used to display a task identifier corresponding to at least one preset task of the second terminal, and the at least one preset task of the second terminal includes the first task.

For example, referring to related embodiments in FIG. 4C to FIG. 5B, the second terminal may be the foregoing mobile phone 200, the first task may be the application window 2 of the mobile phone 200, and the fourth input operation may include the tap operation performed on the device identifier of the mobile phone 200. When the tablet 100 invokes the multitask management interface 13, an initial state of the device identifier of the tablet 100 is the selected state, that is, the tablet 100 is first selected, and the multitask management interface 13 displays a task card of a preset task of the tablet 100. The multitask management interface 13 displays the task card of the preset task of the mobile phone 200 only after the user taps the device identifier of the mobile phone 200.

In an implementation, at least two display screens are configured for the third terminal; and the method further includes: when detecting that the first control is dragged to the device identifier of the third terminal, displaying display screen identifiers corresponding to the two display screens, where when a third input operation includes dragging the first control to a display screen identifier of a first display screen, the first instruction instructs the third terminal to display the split-screen window only by using the first display screen, and the two display screens include the first display screen.

For example, referring to the related embodiment in FIG. 7B-1 to FIG. 7B-3, the two display screens may be display screens configured for the PC 300, for example, the primary screen and the secondary screen 1.

S104: The first terminal receives a third input operation, where the third input operation is used to determine that a target device for cross-device split screen is the third terminal; and sends a first instruction to the third terminal in response to the third input operation, where the first instruction instructs the third terminal to display the split-screen window, a first split-screen area of the split-screen window is used to display the first task, and a second split-screen area of the split-screen window is used to display the second task.

In an implementation, the third input operation includes a slide operation of touching and holding the first control and then dragging the first control to a device identifier of the third terminal.

In an implementation, the preset task includes the recently run task and the preset application window in the installed application, and the first task is the preset application window in the application; and before the first terminal receives the first input operation performed on the task identifier of the first task in the first area, the first terminal displays, in the first area of the task management interface, a task identifier corresponding to a recently run task of a selected device, and the method further includes: The first terminal receives a fifth input operation, and displays, in the first area in response to the fifth input operation, an application identifier of at least one application installed on the selected device, where the application identifier is a task identifier of a preset application window in the application, and the at least one application includes an application to which the first task belongs.

In an implementation, when displaying, in the first area of the task management interface, the task identifier corresponding to the recently run task of the selected device, the first terminal further displays a second control on the task management interface, where the fifth input operation is performed on the second control.

For example, referring to related embodiments in FIG. 12A to FIG. 13A, when the selected terminal is the mobile phone 200, the second control may be the control 601, and the fifth input operation may include the tap operation performed on the control 601. When the mobile phone 200 is selected, the area 2 of the multitask management interface first displays the task identifier corresponding to the recently run task of the mobile phone 200. The area 2 displays an application identifier (for example, an application icon) of an application of the mobile phone 200, for example, the application identifier of the instant messaging application, only after the user taps the control 601.

For example, referring to related embodiments in FIG. 14A to FIG. 14C, when the selected terminal is the mobile phone 200, the fifth input operation may include the slide-down operation performed on the area 2. The fifth input operation may also be another operation. This is not specifically limited herein.

In an implementation, the preset task further includes the task in Favorites; when the at least one application includes a first application, and a task in Favorites of the currently selected device includes a task of the first application, the first terminal displays a Favorites marker corresponding to an application identifier of the first application, where the Favorites marker indicates that the first application has at least one task in Favorites; and the method further includes: The first terminal receives a sixth input operation performed on the application identifier of the first application; and the first terminal displays, in the first area in response to the sixth input operation, a task identifier corresponding to the task in Favorites of the first application installed on the selected device.

For example, referring to related embodiments in FIG. 13A to FIG. 13C, when the selected terminal is the mobile phone 200, the first application may be the video application of the mobile phone 200, and the sixth input operation may be the tap operation performed on the application icon 602 of the video application. If the video application of the mobile phone 200 includes an application in Favorites, when displaying an application icon of an application of the mobile phone 200, the multitask management interface further displays a Favorites marker 603 on the application icon 602 of the video application.

In an implementation, the first task and the second task are tasks of the first terminal.

In an implementation, the at least one collaborative device further includes a second terminal, the first task is a task of the first terminal, and the second task is a task of the second terminal.

In an implementation, before displaying the task identifier corresponding to the at least one preset task of the second terminal in the first area, the method further includes: The first terminal obtains multitask data of the second terminal, where the multitask data includes task information of the at least one preset task of the second terminal.

Implementations of this application may be randomly combined to achieve different technical effects.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the foregoing embodiments may be performed. The storage medium includes any medium that can store program code, such as a ROM, a random access memory RAM, a magnetic disk, or an optical disc.

In summary, the foregoing descriptions are merely embodiments of the technical solutions of the present invention, but are not intended to limit the protection scope of the present invention. Any modification, equivalent replacement, improvement, and the like based on the disclosure of the present invention shall fall within the protection scope of the present invention.

## Claims

1. A cross-device split-screen method, applied to a first terminal, wherein the first terminal has at least one collaborative device, and the at least one collaborative device comprises a third terminal; and the method comprises:
displaying, by the first terminal, a task management interface, wherein the task management interface comprises a device identifier of the first terminal and a device identifier corresponding to each of the at least one collaborative device, a display state of the device identifier comprises a selected state and an unselected state, the selected state indicates that a terminal corresponding to the device identifier is selected, and a first area of the task management interface is used to display a task identifier corresponding to each of at least one preset task of a currently selected terminal;
receiving, by the first terminal, a first input operation performed on a task identifier of a first task in the first area, and adding the first task as a task in a split-screen window in response to the first input operation, wherein the first task is a task of any one of the first terminal and the at least one collaborative device;
receiving, by the first terminal, a second input operation performed on a task identifier of a second task in the first area, and adding the second task as a task in the split-screen window in response to the second input operation, wherein the second task is a task of any one of the first terminal and the at least one collaborative device; and
receiving, by the first terminal, a third input operation, wherein the third input operation is used to determine that a target device for cross-device split screen is the third terminal; and sending a first instruction to the third terminal in response to the third input operation, wherein
the first instruction instructs the third terminal to display the split-screen window, a first split-screen area of the split-screen window is used to display the first task, and a second split-screen area of the split-screen window is used to display the second task.

2. The method according to claim 1, wherein the task management interface further comprises a first control;
the first input operation comprises a slide operation of touching and holding the task identifier of the first task and then dragging the task identifier of the first task to the first control; and
the second input operation comprises a slide operation of touching and holding the task identifier of the second task and then dragging the task identifier of the second task to the first control.

3. The method according to claim 2, wherein the third input operation comprises a slide operation of touching and holding the first control and then dragging the first control to a device identifier of the third terminal.

4. The method according to claim 3, wherein at least two display screens are configured for the third terminal; and the method further comprises:
when detecting that the first control is dragged to the device identifier of the third terminal, displaying display screen identifiers corresponding to the two display screens, wherein
when the third input operation comprises dragging the first control to a display screen identifier of a first display screen, the first instruction instructs the third terminal to display the split-screen window only by using the first display screen, and the two display screens comprise the first display screen.

5. The method according to claim 1, wherein the at least one collaborative device further comprises a second terminal, and the first task is a task of the second terminal; and before receiving, by the first terminal, the second input operation performed on the task identifier of the first task in the first area, the method further comprises:
receiving, by the first terminal, a fourth input operation performed on a device identifier of the second terminal; and
switching, by the first terminal, a display state of the device identifier of the second terminal from an unselected state to a selected state in response to the fourth input operation, wherein the first area is used to display a task identifier corresponding to at least one preset task of the second terminal, and the at least one preset task of the second terminal comprises the first task.

6. The method according to claim 1, wherein the preset task comprises a part or all of the following: a recently run task, a preset application window in an installed application, and a task in Favorites, wherein the recently run task comprises a background run task and/or a foreground run task; and
the task in Favorites comprises a part or all of the following: a task manually added by a user to Favorites, M tasks with longest historical running duration within preset duration, and M tasks with highest historical running frequency within the preset duration, wherein M is a positive integer.

7. The method according to claim 6, wherein the preset application window comprises a home page of the application, an application window with highest historical running frequency in the application within the preset duration, or an application window with longest historical running duration in the application within the preset duration.

8. The method according to claim 6, wherein the preset task comprises the recently run task and the preset application window in the installed application, and the first task is the preset application window in the application; and
before receiving, by the first terminal, the first input operation performed on the task identifier of the first task in the first area, the first terminal displays, in the first area of the task management interface, a task identifier corresponding to a recently run task of a selected device, and the method further comprises:
receiving a fifth input operation; and
displaying, by the first terminal in the first area in response to the fifth input operation, an application identifier of at least one application installed on the selected device, wherein the application identifier is a task identifier of a preset application window in the application, and the at least one application comprises an application to which the first task belongs.

9. The method according to claim 8, wherein when displaying, in the first area of the task management interface, the task identifier corresponding to the recently run task of the selected device, the first terminal further displays a second control on the task management interface, wherein the fifth input operation is performed on the second control.

10. The method according to claim 8, wherein the preset task further comprises the task in Favorites; and when the at least one application comprises a first application, and a task in Favorites of the currently selected device comprises a task of the first application, the first terminal displays a Favorites marker corresponding to an application identifier of the first application, wherein the Favorites marker indicates that the first application has at least one task in Favorites; and
the method further comprises:
receiving, by the first terminal, a sixth input operation performed on the application identifier of the first application; and
displaying, by the first terminal in the first area in response to the sixth input operation, a task identifier corresponding to the task in Favorites of the first application installed on the selected device.

11. The method according to claim 6, wherein the preset task comprises the recently run task, a task identifier corresponding to the recently run task is a task card, and the task card comprises an application identifier of an application to which the recently run task belongs and an interface snapshot taken when the recently run task is switched to the background.

12. The method according to claim 1, wherein the first task and the second task are tasks of the first terminal.

13. The method according to claim 1, wherein the at least one collaborative device further comprises a second terminal, the first task is a task of the first terminal, and the second task is a task of the second terminal.

14. The method according to claim 1, wherein before displaying the task identifier corresponding to the at least one preset task of the second terminal in the first area, the method further comprises:
obtaining, by the first terminal, multitask data of the second terminal, wherein the multitask data comprises task information of the at least one preset task of the second terminal.

15. A terminal, comprising a display screen, a memory, one or more processors, and one or more programs, wherein the one or more programs are stored in the memory, and when the one or more processors execute the one or more programs, the terminal is enabled to implement the method according to any one of claims 1 to 14.

16. A computer storage medium, comprising computer instructions, wherein when the computer instructions are run on an electronic device, the terminal is enabled to implement the method according to any one of claims 1 to 14.
